# EUROPEAN PATENT APPLICATION

(11) **EP 1 871 093 A1**
(43) Date of publication of application: **26.12.2007**
(21) Application number: 06729138.5
(22) Date of filing: 15.03.2006
(51) Int. Cl.: H04N 5/20, H04N 1/405, H04N 5/232

(54) **IMAGE PROCESSOR, IMAGE PROCESSING METHOD, IMAGE PROCESSING SYSTEM, PROGRAM AND RECORDING MEDIUM**

(30) Priority: 15.03.2005 JP 2005072840
(71) Applicant: OMRON CORPORATION, Kyoto-shi, Kyoto 600-8530 (JP)
(72) Inventor: ANDO, Tanichi Omron Corporation 801, Minamifudodo-cho, Kyoto-shi, Kyoto 6008530 (JP)
(74) Representative: Brykman, Georges
(86) International application number: PCT/JP2006/305117
(87) International publication number: WO 2006/098360

(57) **Abstract**

The present invention relates to an image processing apparatus, an image processing method, an image processing system, a program, and a recording medium that are capable of obtaining a wide dynamic range image in which the luminance is compressed. Assignment of the number of luminance gradation steps of an output level signal with respect to the level of a luminance signal to be input is different among the main area, second luminance area, and other ranges. For example, the number of all gradation steps is divided and assigned to a luminance range of the main area and a luminance range of the second luminance area, but is not assigned to the other ranges. Also, the number of steps that is smaller than that of the luminance range of the main area and the luminance range of the second luminance area is assigned to a luminance range between the main area and the second luminance area. Furthermore, an area of the boundary between the luminance range of the main area and the luminance range of the second luminance area is set, and a smaller number of steps can be assigned to the luminance ranges of the main area and second luminance area, and more steps can be assigned to the area therebetween. The present invention can be applied to the image processing apparatus.

## Description

### BACKGROUND OF THE INVENTION

### 1. Field of the Invention

The present invention relates to an image processing apparatus, an image processing method, an image processing system, a program, and a recording medium. More particularly, the present invention relates to an image processing apparatus, an image processing method, an image processing system, a program, and a recording medium that are capable of obtaining, with ease, a wide dynamic range image whose luminance is compressed when executing various processes using the image.

### 2. Description of the Related Art

In a conventional camera using an imaging device composed of a CCD (charge coupled device) imager (also called "charge coupled imaging device" or "solid-state image sensing device"), the amount of incident light to the camera is confined in a certain range by using an aperture or shutter speed, because of the limited storage capacity of electric charge and its characteristics. Therefore, when photographing outdoors, the entire luminance range of an object cannot be photographed. For this reason, the object is photographed at high and low shutter speeds using an electronic shutter function, and resultant two types of image signals are processed to perform good image composition without causing displacement of the main object between the images, whereby an image with a wide dynamic range can be obtained (see Japanese Unexamined Patent Application Publication No. 2000-32303, for example).

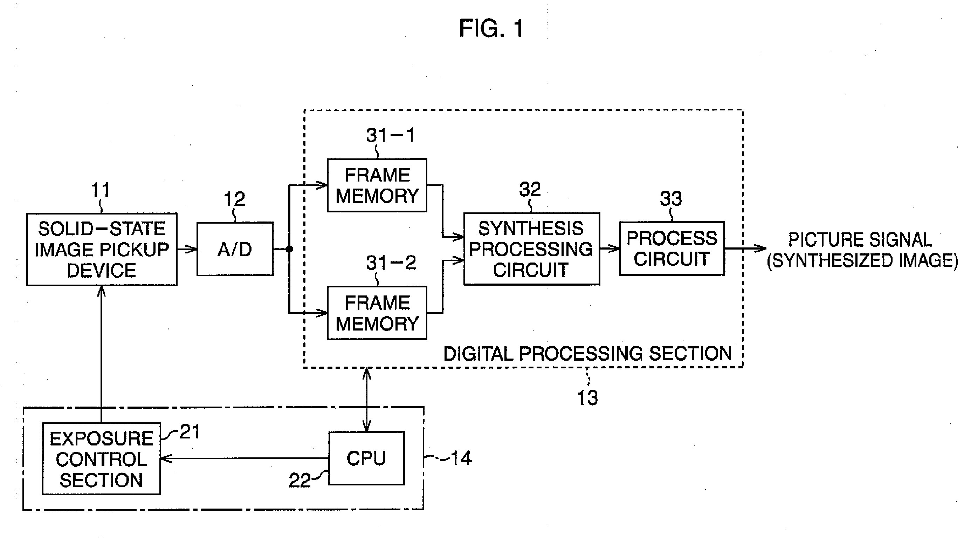

Fig. 1 is a block diagram showing a configuration of a conventional wide dynamic range camera that is capable of combining images photographed at different shutter speeds by the CCD and thereby obtaining an image having a wide dynamic range.

A solid-state image sensing device 11 captures a high-speed shutter image and a low-speed shutter image in accordance with the control of a controller 14 and an exposure controller 21. The low-speed shutter image is an image captured at a shutter speed of, for example, 1/60 second, and the high-speed shutter image is an image captured at a shutter speed of, for example, 1/2000 second.

The video signals obtained by the solid-state image sensing device 11, i.e., the low-speed shutter image and high-speed shutter image, are subjected to analog/digital conversion by an A/D converter 12, and are written to frame memories 31-1 and 31-2 of a digital processing section 13 alternately. The signals that are read out from the frame memory 31-1 or 31-2 are supplied to and combined by a combination processing circuit 32, and output via a process circuit 33.

The controller 14 is constituted by a CPU 22 and the exposure controller 21. The CPU 22 conducts computation using measured light data supplied from the digital processing section 13, supplies the result of computation to the exposure controller 21 that controls the shutter speed or aperture of the solid-state image sensing device 11, and controls the digital processing section 13 on the basis of the result.

The wide dynamic range camera shown in Fig. 1 captures a low-luminance portion of an object at the low-shutter speed (a high-luminance portion is saturated) and a high-luminance portion of the object at the high-shutter speed (the low-luminance portion is too dark to be captured). The both resultant images are then combined to produce an image in which the low-luminance part and high-luminance part of the object are contained in one image field.

In an imaging device using a CCD or other imager having a dynamic range narrower than that of the human eye, aperture and shutter speed need to be adjusted so that the illuminance of incident light is confined in the dynamic range of the CCD imager.

Therefore, if the range of an illuminance of the light of the object exceeds the dynamic range of the CCD imager, luminosity clipping occurs where the pixel value of the pixels of a bright area in the object is limited to the maximum pixel value that can be output by the CCD imager, or the pixel value of the pixels of a dark area in the object is limited to the minimum pixel value that can be output by the CCD imager. Therefore, in order to obtain an image having a wide dynamic range as described above, complicated image combination processing needs to be conducted.

In the above-described wide dynamic range camera that is configured using an imager having a narrow dynamic range, not only the complicated image combination processing needs to be performed to obtain a wide dynamic range image, but also it is extremely difficult to increase the frame rate since one frame of a wide dynamic range image can be obtained using two of the low- and high-speed shutter images.

### SUMMARY OF THE INVENTION

The present invention was contrived in view of such circumstances, and an object thereof is to obtain a wide dynamic range image whose luminance is compressed, so that it can be handled readily when executing various processes using the image without performing complicated processing.

An image processing apparatus of the present invention has: acquisition means for acquiring an image signal constituted by a pixel value that is substantially proportional to a logarithm of an incident light quantity; luminance range setting means for setting a predetermined luminance range out of all luminance ranges of the image signal acquired by the acquisition means; and conversion means for converting the image signal acquired by the acquisition means, so that more gradations are assigned to the predetermined luminance range, which is set by the luminance range setting means, than other luminance ranges.

The acquisition means, luminance range setting means or conversion means is constituted by special hardware or realized by a computer stored with a program. The computer is constituted by arithmetic units such as a CPU (central processing unit) and a DSP (digital signal processor).

Accordingly, a lot of gradations can be assigned to the main luminance area of an image signal, thus the occurrence of whiteout and blackout conditions can be prevented in an image to be displayed.

The image data obtained in this manner is preferred when the image is displayed, because it can be easily recognized by a user, and because it can be used as the data of a wide dynamic range image whose luminance is compressed, in an external device using images, such as an image printing device, an image recognition device, an image recording device, and an image communication device.

The luminance range setting means can set a plurality of the predetermined luminance ranges.

Accordingly, a lot of gradations can be assigned not only to the main luminance area of the image signal but also to another luminance area separated from the abovementioned luminance area, whereby the occurrence of whiteout and blackout conditions can be prevented in an image to be displayed.

The image processing apparatus of the present invention can be further provided with A/D conversion means for performing A/D conversion on image signals within all of the luminance ranges of the image signal acquired by the acquisition means, wherein the conversion means can convert the image signals that are converted into digital signals by the A/D conversion means.

The A/D conversion means is constituted by special hardware or realized by a computer stored with a program. The computer is constituted by arithmetic units such as a CPU and a DSP.

The conversion means can be caused to convert the image signal acquired by the acquisition means, so that the number of luminance gradations after conversion becomes smaller than the number of luminance gradations of pixels contained in the image signal that is converted into digital signals by the A/D conversion means.

Compression of the luminance means that the number of luminance gradation steps possessed by, for example, the entire data of a captured image is reduced by the conversion.

If the number of luminance gradation steps is reduced regardless of the luminance areas, that is, if the ratio between an input signal level and an output signal level is fixed, the concentration difference is no longer observed in the displayed or printed out image, and it becomes difficult to perform general image processing, including binarization and detection of a predetermined object. However, more gradations are, assigned to the predetermined luminance range set by the luminance range setting means than the outside of the luminance range, and the total number of gradations is reduced, the image in the set luminance range is displayed or printed out with, for example, sufficient concentration difference. Moreover, by using the converted image data in which the number of luminance gradations is set, a binarized threshold value can be determined easily and the predetermined object can be easily detected based on the image.

The image processing apparatus of the present invention can be further provided with output control means for converting the number of luminance gradations of the image signal converted by the conversion means into the number of gradations that can be processed by a predetermined external device, and controlling output of the image signal after conversion to the external device.

The control means is constituted by special hardware or realized by a computer stored with a program. The computer is constituted by arithmetic units such as a CPU and a DSP.

The examples of the predetermined external device include an image printing device, an image recognition device, an image recording device, an image communication device, and various other information processors for executing processing using images. It is preferred that the image signal converted by the conversion means be used by a device that executes image processing where luminance of an object to be imaged and luminance data of image data are not required to match one-on-one with each other (the luminance of the object to be imaged and the luminance data of the image data match each other linearly).

The examples of the processing where luminance of an object to be imaged and luminance data of image data are not required to match one-on-one with each other include display operation, printing-out operation, recording processing, processing of recognizing a predetermined object within an image, processing of detecting an edge section or a linear section within the image, binarization processing, and transmission processing of transmitting the image data to another device that executes these processes.

The conversion means can have A/D conversion means for performing A/D conversion on the image signal acquired by the acquisition means; and determining means for determining the number of gradation steps for A/D conversion performed by the A/D conversion means, wherein the determining means can determine the number of gradation steps for A/D conversion so that more gradations are assigned to the predetermined luminance range, which is set by the luminance range setting means, than other luminance ranges, and the A/D conversion means can perform A/D conversion on the image signal on the basis of the number of gradation steps determined by the determining means.

The A/D conversion means and the determining means are constituted by special hardware or realized by a computer stored with a program. The computer is constituted by arithmetic units such as a CPU and a DSP.

If the number of gradation steps for A/D conversion is assigned regardless of the luminance areas, that is, if the ratio between an input signal level before A/D conversion and a digital signal level after conversion is fixed, and particularly if the number of gradation steps for A/D conversion is relatively large, it becomes difficult to perform general image processing, including binarization and detection of a predetermined object, but when the number of gradation steps for A/D conversion is relatively small, the concentration difference is no longer observed in, for example, the displayed or printed out image. However, more gradations are assigned to the predetermined luminance range set by the luminance range setting means than the outside of the luminance range, the image in the set luminance range is displayed or printed out with, for example, sufficient concentration difference. Moreover, by using the converted image data in which the number of gradation steps for A/D conversion is set, a binarized threshold value can be determined easily and the predetermined object can be easily detected based on the image.

The image signal can be captured by a logarithm conversion type imaging device for outputting a pixel value that is substantially proportional to a logarithm of an incident light quantity, by means of subthreshold characteristics of a semiconductor.

It is preferred that the imaging device can capture an image of an object at a dynamic range wider than that of the human eye.

An image processing method of the present invention is an image processing method of an image processing apparatus that processes a captured image signal that is a pixel value substantially proportional to a logarithm of an incident light quantity, the method having: an acquisition step of acquiring the image signal; a luminance range setting step of setting a predetermined luminance range out of all luminance ranges of the image signal acquired in the process of the acquisition step; and a conversion step of converting the luminance of pixels contained in the image signal acquired in the process of the acquisition step, so that more gradations are assigned to the predetermined luminance range, which is set in the process of the luminance range setting step, than other luminance ranges.

The image signal is obtained by, for example, using the subthreshold characteristics of a semiconductor to capture the image using a logarithm conversion type imaging device for outputting a pixel value that is substantially proportional to a logarithm of an incident light quantity.

The imaging device can be, for example, a HDRC (High Dynamic Range COMS (Complementary Metal Oxide Semiconductor)).

Such an imaging device can capture an image of an object at a dynamic range wider than that of the human eye.

Furthermore, the conversion step can convert the image signal that is converted to a digital signal by means of A/D conversion so as to perform A/D conversion on image signals of all of the luminance ranges of the image signal acquired in the acquisition step.

In the conversion step, the image signal acquired in the acquisition step may be converted so that the number of luminance gradations after conversion is smaller than the number of luminance gradations of each pixel contained in the image signal converted into a digital signal by the A/D conversion means.

The conversion step can include an A/D conversion step of performing A/D conversion on the image signal acquired in the acquisition step, and a determining step of determining the number of gradation steps for A/D conversion performed in the A/D conversion step, wherein, in the determining step, the number of gradation steps for A/D conversion can be determined so that more gradations are assigned to the predetermined luminance range set by the luminance range setting means, than the outside of the luminance range, and in the A/D conversion step, A/D conversion can be performed on the image signal on the basis of the number of gradation steps determined in the determining step.

A program of the present invention and a program recorded in a recording medium are a program for causing a computer to execute processing of a captured image signal that is a pixel value substantially proportional to a logarithm of an incident light quantity, the program having: an acquisition control step of controlling acquisition of the image signal; a luminance range setting step of setting a predetermined luminance range out of all luminance ranges of the image signal, the acquisition of which is controlled in the process of the acquisition control step; and a conversion step of converting the luminance of pixels contained in the image signal, the acquisition of which is controlled in the process of the acquisition control step, so that more gradations are assigned to the predetermined luminance range, which is set in the process of the luminance range setting step, than other luminance ranges.

The image signal is obtained by, for example, using the subthreshold characteristics of a semiconductor to capture the image using a logarithm conversion type imaging device for outputting a pixel value that is substantially proportional to a logarithm of an incident light quantity.

The imaging device can be, for example, a HDRC (High Dynamic Range COMS (Complementary Metal Oxide Semiconductor)).

Such an imaging device can capture an image of an object at a dynamic range wider than that of the human eye.

Furthermore, the conversion step can convert the image signal that is converted to a digital signal by means of A/D conversion so as to perform A/D conversion on image signals of all of the luminance ranges of the image signal acquired in the acquisition control step.

In the conversion step, the image signal acquired in the acquisition control step may be converted so that the number of luminance gradations after conversion is smaller than the number of luminance gradations of each pixel contained in the image signal converted into a digital signal by the A/D conversion means.

The conversion step can include an A/D conversion step of performing A/D conversion on the image signal acquired in the acquisition control step, and a determining step of determining the number of gradation steps for A/D conversion performed in the A/D conversion step, wherein, in the determining step, the number of gradation steps for A/D conversion can be determined so that more gradations are assigned to the predetermined luminance range set by the luminance range setting means, than the outside of the luminance range, and in the A/D conversion step, A/D conversion can be performed on the image signal on the basis of the number of gradation steps determined in the determining step.

The first image processing system of the present invention is an image processing system that is constituted by: an image processing apparatus for processing an image signal captured by an imaging device that outputs a pixel value substantially proportional to a logarithm of an incident light quantity; and an information processor that executes processing using the image signal processed by the image processing apparatus, wherein the image processing apparatus has: acquisition means for acquiring the image signal captured by the imaging device; luminance range setting means for setting a plurality of luminance ranges out of luminance ranges of the image signal acquired by the acquisition means; conversion means for converting the image signal acquired by the acquisition means, so that more gradations are assigned to the luminance ranges, which are set by the luminance range setting means, than other luminance ranges, and so that the number of luminance gradations becomes smaller than the number of luminance gradations of pixels contained in the image signal acquired by the acquisition means; and output control means for converting the number of luminance gradations of the image signal converted by the conversion means into the number of gradations that can be processed by the information processor, and controlling output of the image signal after conversion to the information processor.

The image processing system of the present invention can further have an image capturing unit that captures an image using the imaging device that outputs the pixel value substantially proportional to a logarithm of an incident light quantity.

The imaging device can be, for example, a logarithm conversion type imaging device that uses the subthreshold characteristics of a semiconductor to output a pixel value that is substantially proportional to a logarithm of an incident light quantity, and can also be, for example, a HDRC.

Also, the examples of this information processor include an image printing device, an image recognition device, an image recording device, an image communication device, and various other information processors for executing processing using images. It is preferred that the image signal converted by the conversion means be used by a device that executes image processing where luminance of an object to be imaged and luminance data of image data do not necessarily match one-one-one with each other (the luminance of the object to be imaged and the luminance data of the image data match each other linearly).

The examples of the processing where luminance of an obj ect to be imaged and luminance data of image data are not required to match one-on-one with each other include display operation, printing-out operation, recording processing, processing of recognizing a predetermined object within an image, processing of detecting an edge section or a linear section within the image, binarization processing, and transmission processing of transmitting the image data to another device that executes these processes.

The second image processing system of the present invention is constituted by: an image processing apparatus that processes a captured image signal that is a pixel value substantially proportional to a logarithm of an incident light quantity; and an information processor that executes processing using the image signal processed by the image processing apparatus, wherein the image processing apparatus has: acquisition means for acquiring the image signal; luminance range setting means for setting a predetermined luminance range out of all luminance ranges of the image signal acquired by the acquisition means; A/D conversion means for performing A/D conversion on the image signal acquired by the acquisition means; determining means for determining the number of gradation steps for A/D conversion performed by the A/D conversion means; and output control means for controlling output of the image signal converted by the A/D conversion means to the information processor, and wherein the determining means determines the number of gradation steps for A/D conversion so that more gradations are assigned to the predetermined luminance range, which is set by the luminance range setting means, than other luminance ranges, and the A/D conversion means performs A/D conversion on the image signal on the basis of the number of gradation steps determined by the determining means.

The image signal to be acquired is obtained by, for example, using the subthreshold characteristics of a semiconductor to capture the image using a logarithm conversion type imaging device for outputting a pixel value that is substantially proportional to a logarithm of an incident light quantity, and the imaging device can be, for example, a HDRC.

In the image processing apparatus, image processing method, image processing system, and program of the present invention, a predetermined luminance range is set out of all luminance ranges of a signal of an image captured by an imaging device for outputting a pixel value that is substantially proportional to a logarithm of an incident light quantity, and the luminance of each pixel contained in the image signal is converted so that more gradations are assigned to this predetermined luminance range than the outside of this luminance range.

Therefore, a wide dynamic range image having a small number of luminance gradation steps can be obtained without performing complicated processing.

According to the present invention, a signal of a captured image can be processed, and, particularly, a wide dynamic range image having a small number of luminance gradation steps can be obtained without performing complicated processing.

### BRIEF DESCRIPTION OF THE DRAWINGS

Fig. 1 is a diagram showing the principle of the operation of a conventional wide dynamic range camera;
Fig. 2 is a block diagram showing an embodiment of the image processing system of the present invention;
Fig. 3 is a block diagram showing an embodiment of an image capturing section shown in Fig. 2;
Fig. 4 is a graph showing sensitivity characteristics of a logarithm conversion type imaging device or the like;
Fig. 5 is a block diagram showing a first configuration example of an image generator;
Fig. 6A is a diagram for explaining how an output level is converted with respect to an input level;
Fig. 6B is a diagram for explaining how an output level is converted with respect to an input level;
Fig. 6C is a diagram for explaining how an output level is converted with respect to an input level;
Fig. 7A is a diagram for explaining how an output level is converted with respect to an input level;
Fig. 7B is a diagram for explaining how an output level is converted with respect to an input level;
Fig. 7C is a diagram for explaining how an output level is converted with respect to an input level;
Fig. 8A is a diagram for explaining an input signal, a signal obtained after gradation conversion, and a signal to be displayed;
Fig. 8B is a diagram for explaining an input signal, a signal obtained after gradation conversion, and a signal to be displayed;
Fig. 8C is a diagram for explaining an input signal, a signal obtained after gradation conversion, and a signal to be displayed;
Fig. 9 is a flowchart for explaining image display processing 1;
Fig. 10 is a diagram for explaining the difference on a displayed image;
Fig. 11 is a diagram for explaining the difference on a displayed image;
Fig. 12 is a diagram for explaining the difference on a displayed image;
Fig. 13 is a diagram for explaining a displayed image;
Fig. 14 is a block diagram showing a second configuration example of the image generator;
Fig. 15A is a diagram for explaining how an output level is converted with respect to an input level;
Fig. 15B is a diagram for explaining how an output level is converted with respect to an input level;
Fig. 15C is a diagram for explaining how an output level is converted with respect to an input level;
Fig. 16A is a diagram for explaining an input signal, a signal obtained after gradation conversion, and a signal to be displayed;
Fig. 16B is a diagram for explaining an input signal, a signal obtained after gradation conversion, and a signal to be displayed;
Fig. 16C is a diagram for explaining an input signal, a signal obtained after gradation conversion, and a signal to be displayed;
Fig. 17 is a flowchart for explaining image display processing 2;
Fig. 18 is a diagram for explaining a displayed image;
Fig. 19 is a diagram for explaining a displayed image;
Fig. 20 is a block diagram showing a third configuration example of the image generator;
Fig. 21 is a block diagram showing a fourth configuration example of the image generator;
Fig. 22 is a diagram showing a clipped area;
Fig. 23 is a flowchart for explaining image display processing 3;
Fig. 24 is a block diagram showing a fifth configuration example of the image generator;
Fig. 25 is a flowchart for explaining image display processing 4;
Fig. 26 is a block diagram showing a sixth configuration example of the image generator;
Fig. 27 is a block diagram showing a seventh configuration example of the image generator;
Fig. 28 is a diagram for explaining how a histogram is analyzed and how a luminance range is set;
Fig. 29 is a flowchart for explaining image display processing 5;
Fig. 30 is a block diagram showing an eighth configuration example of the image generator;
Fig. 31 is a flowchart for explaining image display processing 6;
Fig. 32 is a block diagram showing a ninth configuration example of the image generator;
Fig. 33 is a diagram for explaining how a histogram is analyzed and how a luminance range is set;
Fig. 34 is a flowchart for explaining image display processing 7;
Fig. 35 is a block diagram showing an embodiment of the image processing system of the present invention;
Fig. 36 is a block diagram showing an embodiment of an image capturing section shown in Fig. 35;
Fig. 37 is a block diagram showing a first configuration example of a gradation assignment determination section;
Fig. 38A is a diagram for explaining gradation assignment for A/D conversion;
Fig. 38B is a diagram for explaining gradation assignment for A/D conversion;
Fig. 38C is a diagram for explaining gradation assignment for A/D conversion;
Fig. 39A is a diagram for explaining gradation assignment for A/D conversion;
Fig. 39B is a diagram for explaining gradation assignment for A/D conversion;
Fig. 39C is a diagram for explaining gradation assignment for A/D conversion;
Fig. 40A is a diagram for explaining an input analog signal, a signal obtained after A/D conversion, and a signal to be displayed;
Fig. 40B is a diagram for explaining an input analog signal, a signal obtained after A/D conversion, and a signal to be displayed;
Fig. 40C is a diagram for explaining an input analog signal, a signal obtained after A/D conversion, and a signal to be displayed;
Fig. 41A is a diagram for explaining gradation assignment for A/D conversion;
Fig. 41B is a diagram for explaining gradation assignment for A/D conversion;
Fig. 41C is a diagram for explaining gradation assignment for A/D conversion;
Fig. 42A is a diagram for explaining an input analog signal, a signal obtained after A/D conversion, and a signal to be displayed;
Fig. 42B is a diagram for explaining an input analog signal, a signal obtained after A/D conversion, and a signal to be displayed;
Fig. 42C is a diagram for explaining an input analog signal, a signal obtained after A/D conversion, and a signal to be displayed;
Fig. 43 is a flowchart for explaining image display processing 8;
Fig. 44 is a block diagram showing a second configuration example of the gradation assignment determination section;
Fig. 45A is a diagram for explaining gradation assignment for A/D conversion;
Fig. 45B is a diagram for explaining gradation assignment for A/D conversion;
Fig. 45C is a diagram for explaining gradation assignment for A/D conversion;
Fig. 46A is a diagram for explaining an input analog signal, a signal obtained after A/D conversion, and a signal to be displayed;
Fig. 46B is a diagram for explaining an input analog signal, a signal obtained after A/D conversion, and a signal to be displayed;
Fig. 46C is a diagram for explaining an input analog signal, a signal obtained after A/D conversion, and a signal to be displayed;
Fig. 47 is a flowchart for explaining image display processing 9;
Fig. 48 is a block diagram showing a third configuration example of the gradation assignment determination section;
Fig. 49 is a block diagram showing a fourth configuration example of the gradation assignment determination section;
Fig. 50 is a flowchart for explaining image display processing 10;
Fig. 51 is a block diagram showing a fifth configuration example of the gradation assignment determination section;
Fig. 52 is a flowchart for explaining image display processing 11;
Fig. 53 is a block diagram showing a sixth configuration example of the gradation assignment determination section;
Fig. 54 is a block diagram showing a seventh configuration example of the gradation assignment determination section;
Fig. 55 is a diagram for explaining how a histogram is analyzed and how a luminance range is set;
Fig. 56 is a flowchart for explaining image display processing 12;
Fig. 57 is a block diagram showing an eighth configuration example of the gradation assignment determination section;
Fig. 58 is a flowchart for explaining image display processing 13;
Fig. 59 is a block diagram showing a ninth configuration example of the gradation assignment determination section;
Fig. 60 is a diagram for explaining how a histogram is analyzed and how a luminance range is set;
Fig. 61 is a flowchart for explaining image display processing 14; and
Fig. 62 is a block diagram showing a configuration example of a personal computer.

### DESCRIPTION OF THE PREFERRED EMBODIMENTS

Embodiments of the present invention will be described hereinafter with reference to the drawings.

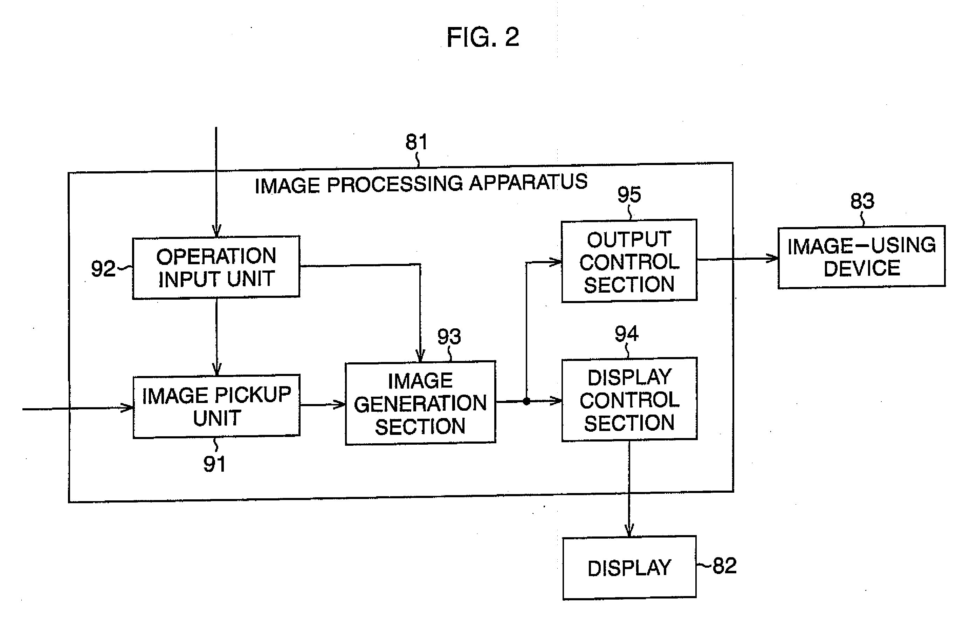

Fig. 2 is a block diagram showing an embodiment of an image processing apparatus 81.

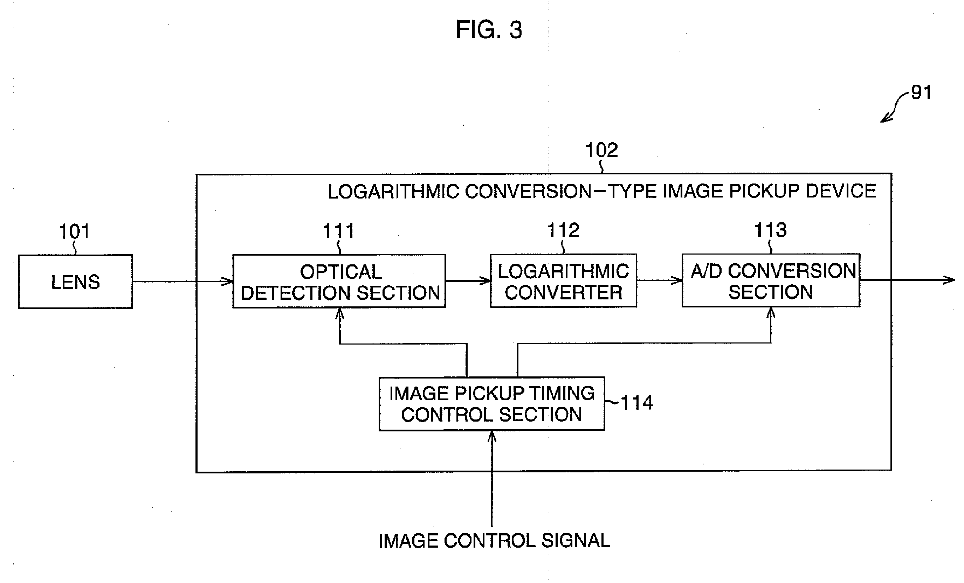

An image capturing section 91 captures an image of an object in accordance with an operation input by a user using an operation input section 92, and supplies thus obtained image signal to an image generator 93. The detail of the image capturing section 91 will be described hereinafter with reference to Fig. 3.

The operation input section 92 is constituted by, for example, buttons such as a release button, and input devices such as an operation key and a touch panel, receives an operation input by the user, and supplies a command received from the user to the image capturing section 91. The examples of the operation that is input by the user are not only a command for the image capturing timing (pressing of the release button, etc.), but also a command to start or finish capturing an image of a moving object (i.e., capturing continuous frames), as well as setting a time to start or finish image capturing. Moreover, when the operation input section 92 receives, from the user, input of a predetermined set value to be used in processing performed by the image generator 93, the operation input section 92 supplies the set value to the image generator 93.

The image generator 93 executes processing of converting an image signal supplied from the image capturing section 91 to an image signal appropriate for display or printing out, and supplies the converted image signal to a display controller 94 or an output controller 95. Also, if necessary, the image generator 93 receives input of a set value required for processing from the operation input section 92, and, based on this set value, executes processing of converting the image signal supplied from the image capturing section 91 to an image signal appropriate for display or printing out.

The display controller 94 conducts processing of converting the processed image signal supplied from the image generator 93 to a resolution of a display 82 or a number of gradations, and supplies the processed signal to the display 82.

The output controller 95 conducts processing of converting the processed image signal supplied from the image generator 93 to a resolution or a number of gradations that can be processed by an image-using device 83, and supplies the processed signal to the image-using device 83.

The display 82 receives, for example, input of a display image signal supplied from the display controller 94, and displays an image (static image or a dynamic image consisting of a plurality of frames).

The image-using device 83 receives input of an image signal supplied from the output controller 95 and executes predetermined processing. The image-using device 83 can be caused to use various information processors, such as an image printing device, an image recognition device, and image recording device and an image communication device, for executing processing using an image.

It is preferred that the image signal generated by the image generator 93 be used by the image-using device 83 that executes processing where, particularly, luminance of an object to be imaged and luminance data of image data are not required to match one-on-one with each other (the luminance of the object to be imaged and the luminance data of the image data match each other linearly).

The examples of the processing where luminance of an object to be imaged and luminance data of image data are not required to match one-on-one with each other include printing-out operation, recording processing, processing of recognizing a predetermined object within an image, processing of detecting an edge section or a linear section within the image, binarization processing, and transmission processing of transmitting the image data to another device that executes these processes.

Fig. 3 is a block diagram showing a further detailed configuration example of the image capturing section 91 of the image processing apparatus 81 shown in Fig. 2. The image capturing section 91 is constituted by a lens 101 and a logarithm conversion type imaging device 102. The logarithm conversion type imaging device 102 is, for example, an HDRC (High Dynamic Range COMS (Complementary Metal Oxide Semiconductor)), and is constituted by a light detector 111, a logarithm converter 112, an A/D converter 113, and an image capturing timing controller 114.

The light emitted from the object to be captured by the image capturing section 91 (or light reflected from the object) enters the lens 101, and is focused onto an unshown light detecting surface of the light detector 111 of the logarithm conversion type imaging device 102.

The light detector 111 is constituted by, for example, a light receiving element consisting of a plurality of photodiodes, and the like. The light detector 111 converts the light of the object, which is focused by the lens 101, into an electric charge in accordance with the brightness (illuminance) of the incident light, and accumulates thus obtained electric charge. The light detector 111 supplies to the logarithm converter 112 the accumulated electric charge in synchronization with a control signal supplied by the image capturing timing controller 114.

The logarithm converter 112 is constituted by, for example, a plurality of MOSFETs (Metal Oxide Semiconductor Field Effect Transistor) and the like. The logarithm converter 112 generates an analog electronic signal obtained by converting the electric charge supplied by the light detector 111 into a voltage value that is substantially proportional to a logarithm (logarithm of the amount of light from the object) of the number of electric charges (intensity of current), for each pixel by using the subthreshold characteristics of the MOSFETs. The logarithm converter 112 supplies the generated analog electronic signal to the A/D converter 113.

The A/D converter 113 A/D-converts the analog electronic signal to digital image data in synchronization with the control signal supplied by the image capturing timing controller 114. For example, when the analog electronic signal is converted to a 24-bit unsigned binary digital image data, the pixel values of the image data range from 0 for the darkest to 224-1 for the brightest. The A/D converter 113 supplies thus obtained digital image data to the image processing apparatus 81.

In this manner, the image capturing section 91 outputs the digital image data consisting of a pixel value that is substantially proportional to the brightness of the light of the obj ect that enters the light detector 111 (incident light quantity). It should be noted that the detail of the logarithm conversion type imaging device is disclosed in, for example, Japanese Unexamined Patent Application Publication No. H7-506932.

In the light detector 111 of the logarithm conversion type imaging device 102, the converted electric charge can be supplied directly to the logarithm converter 112 without accumulating it.

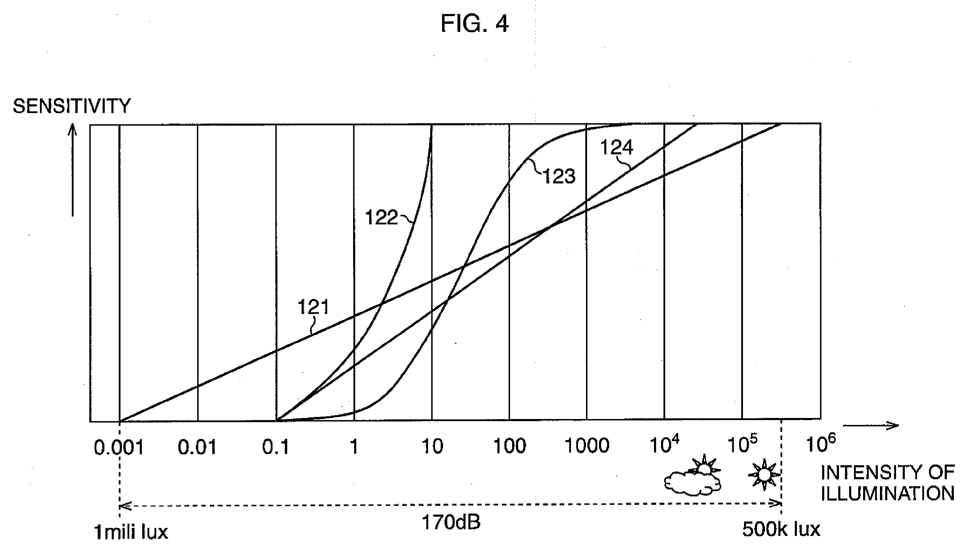

Fig. 4 is a graph showing sensitivity characteristics of the logarithm conversion type imaging device 102, CCD (charge coupled device) imager, silver film, and human eye. The horizontal axis of Fig. 4 represents a logarithmic value of the illuminance of the incident light (in units of lux), and the vertical axis represents sensitivity to the illuminance of the incident light. A line 121 indicates the sensitivity characteristic of the logarithm conversion type imaging deice 102, a line 122 indicates the sensitivity characteristic of the CCD imager, a line 123 indicates the sensitivity characteristic of the silver film, and a line 124 indicates the sensitivity characteristic of the human eye.

As described above, the logarithm conversion type imaging device 102 outputs the image data consisting of the luminance value (or pixel value) that is substantially proportional to the logarithm of the incident light. Therefore, even when the incident light quantity is increased, the photodiode configuring the logarithm conversion type imaging device 102 and the capacity of MOSFET or other element are prevented from being saturated, and the current flowing each element and the voltage to be applied are prevented from exceeding the scope in which output can be performed in response to input of each element. Therefore, the luminance value (or pixel value) corresponding to a fluctuation of the incident light quantity can be obtained almost precisely within the range of luminance that can be captured. Specifically, it is possible to capture an image that consists of a luminance value (or pixel value) reflecting, almost precisely, the intensity of the incident light quantity of the object in a dynamic range of, for example, approximately 170 dB between approximately 1 mililux and approximately 500 kilolux, which is higher than the luminance of the sun, the dynamic range being wider than that of the CCD imager, silver film, and human eye. It should be noted that the dynamic range of the logarithm conversion ftype imaging device 102 used in the image capturing section 91 is not limited to 170 dB described above, thus approximately 100-dB dynamic range or 200-dB dynamic range may be used in accordance with the intended use.

As described above, the logarithm conversion type imaging device 102 outputs the image data consisting of the pixel value substantially corresponding to the logarithm of the incident light quantity, and thereby captures the image of the object in a dynamic range of approximately 170 dB between approximately 1 mililux and approximately 500 kilolux, which is higher than the luminance of the sun, the dynamic range being wider than that of the CCD imager, silver film, and human eye, without saturating the photodiode configuring the logarithm conversion type imaging device 102 and the capacity of the MOSFET or the like.

Therefore, since luminosity clipping does not occur in the luminance range which can be recognized by a human, the image capturing section 91 using the logarithm conversion type imaging device 102 does not need to adjust the incident light quantity by adjusting the aperture or shutter speed. Specifically, the image capturing section 91 can faithfully image the detailed luminosity change of the object without adjusting the incident light quantity.

For example, when capturing an image of the front part of a vehicle from the inside of the vehicle during the day, even when the sun light enters the field angle, the image capturing section 91 can obtain an image in which the situations of the sun and the road ahead are reproduced faithfully, without adjusting the amount of incident light. Also, when capturing an image of the front part of the vehicle from the inside of the vehicle during the night, even when the vehicle is illuminated by the headlights of an oncoming vehicle, the image capturing section 91 can obtain an image in which the part between the light coming from the headlights of the oncoming vehicle and the section which is not illuminated by the headlights of the former vehicle can be reproduced faithfully, without adjusting the amount of incident light.

In the CCD imager and the silver film, the sensitivity characteristics are not proportional to the logarithm of the illuminance of the incident light due to the gamma characteristic or the like as indicated with the line 122 and line 123, but the sensitivity characteristic in the logarithm conversion type imaging device 102 is substantially proportional to the logarithm of the illuminance of the incident light.

In this manner, the image capturing section 91 using the logarithm conversion type imaging device 102 is not influenced by the occurrence of the luminosity clipping, adjustment of the amount of the incident light, and the gamma characteristics, thus the pixel value of the data of the image captured by the image capturing section 91 fluctuates so as to reflect the fluctuation of the luminance of the object and the movement of the object substantially faithfully.

Since the pixel values of the both image data output from the image capturing section 91 are substantially proportional to the logarithm of the amount of incident light, the pixel value distribution in the image data obtained by capturing the object is reflected in substantially the same manner as the reflectance distribution of the object, regardless of the brightness (illuminance) of the light directed to the object. For example, when a object in which the ratio between the maximum reflectance and the minimum reflectance is 10:1 is imaged by irradiating the object with light in which the illuminance is approximately 100 times between the first and second images, the widths of the histograms expressing the pixel value distributions of the first and second image data are substantially the same (1 = log₁₀10). On the other hand, when the pixel values of the both image data are proportional to the amount of incident light, the difference between the widths of the histograms expressing the pixel value distributions of the first and second image data is 100 times.

Moreover, when the luminance of the object fluctuates at substantially the same rate regardless of the luminance (reflectance) distribution of the object, the fluctuation values of the pixel values of the both image data obtained by capturing the object are substantially the same. For example, when two areas in the object have a luminance ratio of 100:1, the illuminance of the light emitted to the object changes substantially uniformly, and when the luminance of the object fluctuates at +5% of substantially the same rate, the fluctuation values of the pixel values of the two areas are substantially the same (log₁₀1.05). On the other hand, when the pixel values of the image data are proportional to the amount of incident light, the difference between the fluctuation values of the pixel values corresponding to the abovementioned two areas is approximately 100 times.

As described above with reference to Fig. 4, the logarithm conversion type imaging device 102 has an extremely wide luminance range, compared to the sensitivity of the human eye (characteristic indicated with the line 124 in Fig. 4), the sensitivity of the CCD imager (characteristic indicated with the line 122 in Fig. 4), and the sensitivity of the silver film (characteristic indicated with the line 123 in Fig. 4). For this reason, when all of the gradations of the image data captured by the image capturing section 91 using the logarithm conversion type imaging device 102 are converted into gradations corresponding to the display 82 and then displayed, no concentration difference is observed, unlike an image visible to the human eye or an image captured using a conventional CCD imager or silver film. In other words, an image with no sharpness is obtained.

Specifically, by using the image capturing section 91 using the logarithm conversion type imaging device 102, the extremely dark sections and the extremely bright sections can be imaged faithfully. However, when the captured image data are subjected to gradation conversion based on the number of gradations that can be displayed by the display 82, and then displayed, the user who sees the displayed image cannot distinguish between the extremely dark sections and the extremely bright sections, and the central part in the whole gradations that can be distinguished by the user is displayed with less concentration difference. Similarly, due to the limited number of gradations such as in a printer, if the captured image data are converted to the number of gradations that can be processed by an output device, no concentration difference is observed in an image to be printed out, compared to an image visible to the human eye or an image captured using the conventional CCD imager or silver film. In other words, an image with no sharpness is obtained.

For example, when the maximum luminance value and the minimum luminance value of a pixel contained in an obtained image are extracted from a luminance range to be obtained, and the luminance range between the maximum and minimum values is converted into gradations that can be displayed by the display 82, instead of converting the entire luminance range of the image captured by the image capturing section 91 of the logarithm conversion type imaging device 102 into gradations that can be displayed by the display 82, the quality of one image displayed when the luminance range contained therein is relatively narrow is improved apparently. However, when bright sections and dark sections exist in one captured image, the user who sees the displayed image still cannot distinguish between the extremely dark section and the extremely bright section that are captured, and the central part in the whole gradations that can be distinguished by the user is displayed with less concentration difference.

Therefore, when image data captured by the image capturing section 91 using the logarithm conversion type imaging device 102 is supplied and then displayed at a gradation level corresponding to the display 82, or when the image data is output at a gradation level corresponding to an external output device, the image generator 93 executes image processing of generating image data that can be displayed or printed out so that the user can distinguish the image data.

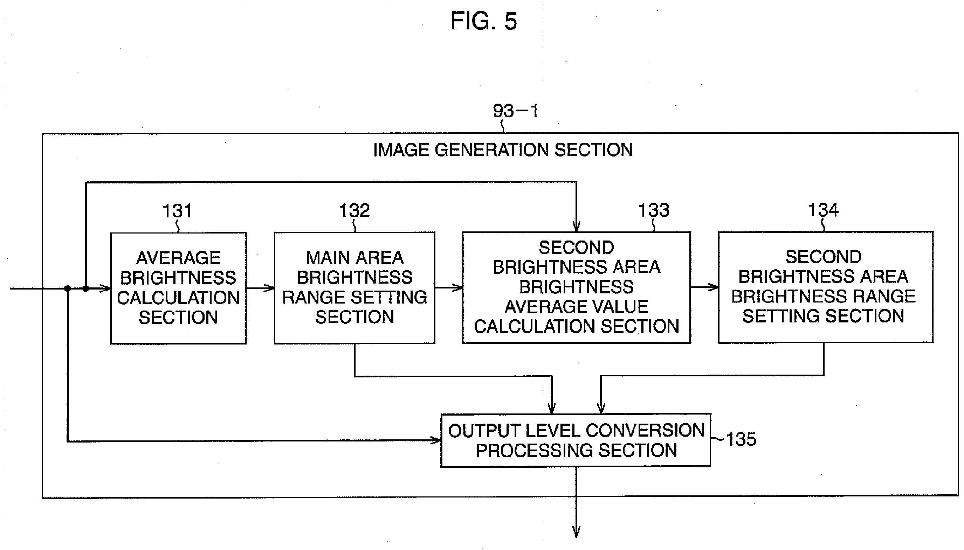

Fig. 5 is a block diagram showing a configuration of an image generator 93-1, which is the first example of the configuration of the image generator 93 shown in Fig. 2.

An average luminance calculation section 131 acquires an image signal supplied by the image capturing section 91, calculates an average luminance of the image signal, and supplies the result of calculating the average luminance to a main area luminance range setting section 132.

The main area luminance range setting section 132 sets a luminance range of the main area on the basis of the average luminance of the image signal supplied from the average luminance calculation section 131, and supplies the set luminance range of the main area to an output level conversion processing section 135 and a second luminance area luminance average value calculation section 133.

The main area luminance range setting section 132 may, for example, set the range of predetermined luminance having mainly the average luminance of the image signal, as the luminance range of the main area, or may sequentially select, from among the pixels having the average luminance of the image signal, and in the order of pixels having a luminance value proximate to the average luminance, a pixel having a predetermined number of bits, and set the selected pixels as the luminance range of the main area.

The second luminance area luminance average value calculation section 133 calculates the average luminance of the pixels having a luminance range higher than the luminance range of the main area that is set by the main area luminance range setting section 132, from the image signal supplied by the image capturing section 91, and supplies the result of calculation to a second luminance area luminance range setting section 134.

The second luminance area range setting section 134 sets a luminance range of a second luminance area on the basis of the average luminance of the pixels having a luminance range higher than the luminance range of the main area, the average luminance being supplied from the second luminance area luminance average value calculation section 133, and supplies the set luminance range of the second luminance area to the output level conversion processing section 135.

The second luminance area luminance range setting section 134 may, for example, set the range of predetermined luminance having mainly the average luminance of the pixels having a luminance range higher than the luminance range of the main area, as the luminance range of the second luminance area, or may sequentially select, from among the pixels having the average luminance of the pixels having the luminance range higher than the luminance range of the main area, and in the order of pixels having a luminance value proximate to the average luminance, a pixel having a predetermined number of bits, and set the selected pixels as the luminance range of the second luminance area.

The output level conversion processing section 135 acquires the image signal supplied by the image capturing section 91, and converts the output level of the acquired image signal on the basis of the information on the luminance range of the main area and the luminance range of the second luminance area that are supplied from the main area luminance range setting section 132 and the second luminance area luminance range setting section 134 respectively.

Specifically, the output level conversion processing section 135 assigns a predetermined number of steps of an output level signal (a signal of each luminance gradation level obtained when the luminance is divided by a predetermined number of gradation steps) to the level of a luminance signal to be input, and outputs the assigned output level signal. At this moment, assignment of the luminance gradation level of the output level signal that is performed by the output level conversion processing section 135 with respect to the luminance ranges of the main area and the second area is different from assignment of the same with respect to the other ranges. Specifically, the output level conversion processing section 135 assigns more steps of the output level to the luminance ranges set as the main area and the second area, and executes conversion processing such that the number of gradations of the pixels in the corresponding luminance ranges is increased. Consequently, the sections having the luminance ranges corresponding to the main area and the second area in an image to be displayed or printed out can be recognized well by the user.

The output level conversion processing section 135, for example, divides and assigns the number of all gradation steps to an input signal contained in the luminance range of the main area and in the luminance of the second luminance area, and does not assign the number of steps of the output level to the other ranges, i.e. , a luminance range lower than that of the main area, a luminance range between the main area and the second luminance area, and a luminance range higher than that of the second luminance area.

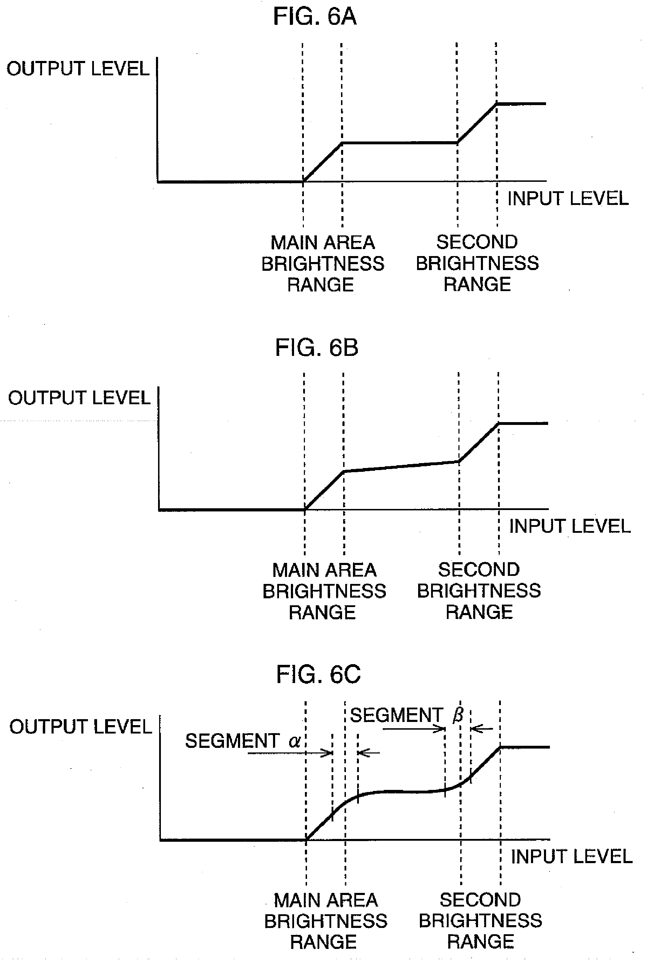

In this manner, when the number of gradation steps of the output level with respect to the input level is assigned, the output level of the pixels in which the input level of the luminance is lower than the luminance range of the main area is 0 (that is, black), as shown in Fig. 6A. A predetermined gradation output level is assigned to the pixels within the luminance range of the main area in accordance with the input level. Also, the pixels in the luminance range between the main area and the second luminance area are output at the maximum value of the output level assigned to the luminance range of the main area, regardless of the input level. The gradation output levels between the maximum value of the entire output level and the maximum value of the output level assigned to the luminance range of the main area are assigned to the pixels within the second luminance area at the number of steps that is the same as or substantially the same as that of the main area, in accordance with the input level. The maximum value of the output level assigned to the second luminance area, that is, the maximum value of the entire output level, is assigned to the pixels having luminance higher than that of the second luminance area, regardless of the input level.

Moreover, the output level conversion processing section 135 can assign, for example, a predetermined number of steps of the output level to the main area and the second area. To the luminance range of the main area and the second luminance area, the output level conversion processing section 135 can assign the number of steps smaller than the number of steps assigned to the main area or second luminance area (in other words, a gradation width narrower than the main area luminance range or the second luminance range). The output level conversion processing section 135 does not assign the number of steps of the output level to the luminance range lower than that of the main area or to the luminance range higher than that of the second luminance area.

In this manner, when the number of gradation steps of the output level with respect to the input level is assigned, the output value of the pixels having luminance lower than the luminance range of the main area is 0, as shown in, for example, Fig. 6B. A predetermined gradation output level is assigned to the pixels within the luminance range of the main area in accordance with the input level. Also, an output level corresponding to the input level is assigned to the pixels in the luminance range between the main area and the second luminance area, at the number of steps smaller than the number of steps assigned to the luminance range of the main area. The gradation output levels between the maximum value of the entire output level and the maximum value of the output level assigned to the luminance range between the main area and the second luminance area are assigned to the pixels within the second luminance area at the number of steps that is the same as or substantially the same as that of the main area, in accordance with the input level. The maximum value of the output level assigned to the second luminance area, that is, the maximum output level, is assigned to the pixels having luminance higher than that of the second luminance area, regardless of the input level.

The output level conversion processing section 135 takes a predetermined luminance range having mainly an upper limit value of the main area luminance as a section α, a predetermined luminance range having mainly a lower limit value of the second luminance area luminance as a section β, assigns a predetermined number of steps out of the output level to the pixels within a section other than the sections α and β in the main area or second luminance area, and assigns, to the section α or the section β, and assigns the number of steps smaller than the number of steps assigned to the section other than the sections α and β in the main area and second luminance area, but does not assign the number of steps of the output level to the pixels having luminance lower than that of the main area and luminance higher than that of the second luminance area. It should be noted here that the output level conversion processing section 135 assigns or does not assign, to the pixels that do not belong to the section α and section β out of the luminance range between the main area and the second luminance area, the number of steps smaller than the number of steps of the output level that is assigned to the section α or the section β.

In this manner, when the number of gradation steps of the output level with respect to the input level is assigned, the output value of the pixels having luminance lower than the luminance range of the main area is 0, as shown in, for example, Fig. 6C. A predetermined gradation output level is assigned to the pixels within the luminance range of the main area and within a section other than the section α in accordance with the input level. Also, an output level of a predetermined gradation that is larger than the maximum value of the output level assigned to the section other than the section α of the main area is assigned to the pixels within the section α at the number of steps smaller than the number of steps assigned to the section other than the section α of the main area. To the pixels that do not belong to the section α and section β in the luminance range between the main area and the second luminance area, an output level corresponding to the input level is assigned at the number of steps smaller than the number of steps assigned to the section α, or the maximum value of the output level assigned to the section α is assigned regardless of the input level.

Furthermore, the output level of a predetermined gradation that is larger than the maximum value of the output level in the luminance range lower than the section β is assigned to the pixels of the section β at the number of steps smaller than the number of steps assigned to the section other than the section α of the main area, and at the number of steps that is the same as or substantially the same that of the section α. The gradation output levels between the entire maximum output level and the maximum value of the gradation assigned to the section β are assigned to the pixels of the section other than the section β within the luminance range of the second luminance area in accordance with the input level. In other words, the number of steps that is the same as or substantially the same as that of the section other than the section α in the main area, i.e., the number of steps of the output level that is larger than the number of steps in the section α and section β, is assigned to the pixels in the section other than the section β within the luminance range of the second luminance area. The maximum value of the output level that is assigned to the second luminance area, i.e., the maximum output level, is assigned to the pixels having luminance higher than that of the second luminance area, regardless of the input level.

It should be noted in Fig. 6C that the predetermined luminance range that mainly has the upper limit value of the main area luminance is the section α, the predetermined section on the luminance limitation side of the second luminance area is the section α, the predetermined section on the lower limit side within the luminance range of the second luminance area is the section β, and the predetermined luminance range that mainly has the lower limit value of the main area luminance is the section β, but, for example, a predetermined section having luminance higher than the upper limit of an upper luminance range within the luminance range of the main area may be taken as the section α, and a predetermined section having luminance lower than the lower limit of the luminance range of the second luminance area may be taken as the section β. Also, an area to be assigned with the number of steps of the output level that is the same as that of the section α and section β may be set on the lower limit side of the luminance in the main area and on the upper limit side of the luminance of the second luminance area.

Moreover, in Fig. 6, the output of the pixels having luminance that is equal to or lower than the luminance range in the main area is 0 (black), and the output level of the pixels within the range having luminance that is equal to or higher than the luminance range of the second luminance area is the same as that of the maximum luminance of the luminance range of the second luminance area (maximum output level). However, the number of steps of a certain degree of output level can be assigned to the luminance range that is equal to or lower than the luminance range of the main area and to the luminance range that is equal to or higher than the luminance range of the second luminance area.

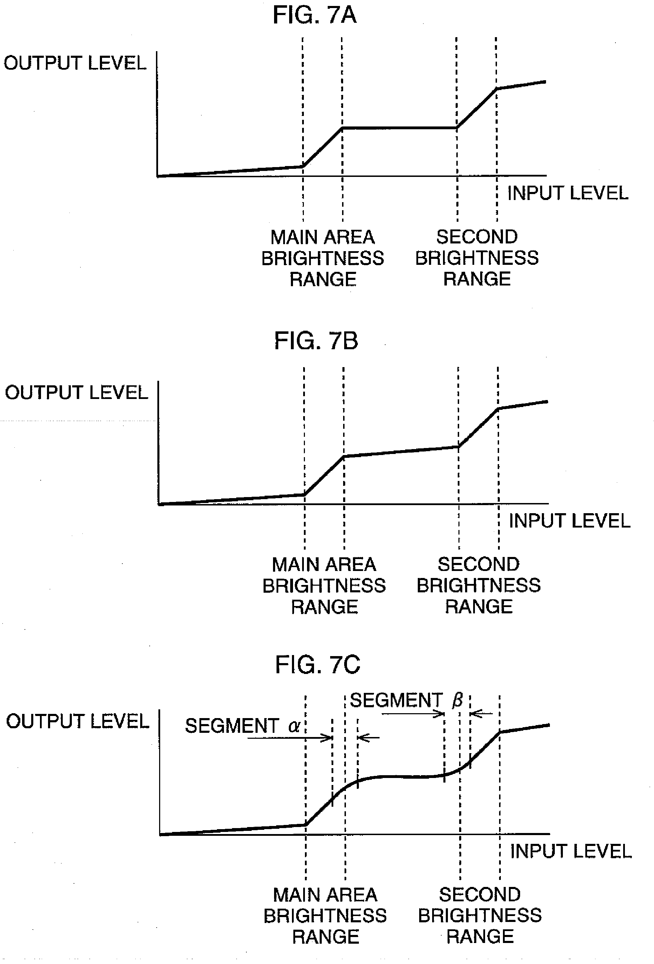

Specifically, the output level conversion processing section 135 can convert the output level with respect to the input level, as shown in, for example, Fig. 7A. In other words, the output levels between 0 (i.e., black) and a predetermined number of steps smaller than the number of steps to be assigned to the main area are assigned to the pixels having a luminance input level lower than the luminance range of the main area, in accordance with the input level. An output level having a predetermined gradation is assigned to the pixels within the luminance range of the main area in accordance with the input level. The pixels within the luminance range between the main area and the second luminance area are output at the maximum value of the output level assigned to the main area, regardless of the input level. The output levels between the maximum value of the output level that is assigned to the main area and a predetermined gradation are assigned to the pixels within the second luminance area in accordance with the input level, at the number of steps that is the same as or substantially the same as that of the main area. Also, the output levels between the maximum output level and the maximum value of the output level assigned to the luminance range of the second luminance area are assigned to the pixels having luminance higher than that of the second luminance area, in accordance with the input level, so that the number of steps smaller than the number of steps assigned to the main area and second luminance area is obtained.

Moreover, the output level conversion processing section 135 can convert the output level with respect to the input level, as shown in, for example, Fig. 7B. In other words, the output levels between 0 (i.e., black) and a predetermined number of steps smaller than the number of steps to be assigned to the main area are assigned to the pixels having a luminance input level lower than the luminance range of the main area, in accordance with the input level. An output level having a predetermined gradation is assigned to the pixels within the luminance range of the main area in accordance with the input level. The pixels within the luminance range between the main area and the second luminance area are assigned with an output level corresponding to the input level at the number of steps smaller than the number of steps assigned to the main area. The output levels between a predetermined gradation and the maximum value of the output level that is assigned to the luminance range between the main area and second luminance area are assigned to the pixels within the second luminance area in accordance with the input level, at the number of steps that is the same as or substantially the same as that of the main area. Also, the output levels between the maximum output level and the maximum value of the output level assigned to the luminance range of the second luminance area are assigned to the pixels having luminance higher than that of the second luminance area, in accordance with the input level, so that the number of steps smaller than the number of steps assigned to the main area is obtained.

In addition, the output level conversion processing section 135 can convert the output level with respect to the input level, as shown in, for example, Fig. 7C. In other words, the output levels between 0 (i.e., black) and a predetermined number of steps smaller than the number of steps to be assigned to the main area are assigned to the pixels having a luminance input level lower than the luminance range of the main area, in accordance with the input level. A predetermined gradation output level is assigned to the pixels within the luminance range of the main area and within a section other than the section α in accordance with the input level. Also, an output level of a predetermined gradation that is larger than the maximum value of the output level assigned to the section other than the section α of the main area is assigned to the pixels within the section α at the number of steps smaller than the number of steps assigned to the section other than the section α of the main area. To the pixels that do not belong to the section α and section β in the luminance range between the main area and the second luminance area, an output level corresponding to the input level is assigned at the number of steps smaller than the number of steps assigned to the section α, or the maximum value of the output level assigned to the section α is assigned regardless of the input level.

Furthermore, the output level of a predetermined gradation that is larger than the maximum value of the output level in the luminance range lower than the section β is assigned to the pixels of the section β at the number of steps smaller than the number of steps assigned to the section other than the section α of the main area. The gradation output levels between a predetermined gradation output level and the maximum value of the gradation assigned to the section β are assigned to the pixels of the section other than the section β within the luminance range of the second luminance area in accordance with the input level. At the number of steps the same as or substantially the same as that within the luminance range other than the section α in the main area. Also, the output levels between the maximum output level and the maximum value of the output level assigned to the luminance range of the second luminance area are assigned to the pixels having luminance higher than that of the second luminance area, in accordance with the input level, so that the number of steps smaller than the number of steps assigned to the section other than the section α of the main area is obtained.

It should be noted in Fig. 7C that the predetermined luminance range that mainly has the upper limit value of the main area luminance is the section α, and the predetermined luminance range that mainly has the lower limit value of the second luminance area luminance is the section β, but, for example, a predetermined section on the upper limit side within the luminance range of the main area may be the section α, a predetermined section on the lower limit side within the luminance range of the second luminance area may be the section β, a predetermined section having luminance higher than the upper limit of the luminance range of the main area may be the section α, and a predetermined section having luminance lower than the lower limit of the luminance range of the second luminance area may be the section β. Also, an area to be assigned with the number of steps of the output level that is the same as that of the section α and section β may be set on the lower limit side of the luminance in the main area and on the upper limit side of the luminance of the second luminance area.

Furthermore, the output level conversion processing section 135 may determine the number of gradation steps to be assigned to each luminance area so that, for example, the ratio of the output level to the input level in a luminance range other than those of the main area and the second luminance area becomes lower than the ratio of the output level to the input level in these luminance areas (slope of the straight line).

As described above, the main area and the second luminance area to be set in the image generator 93-1 are set based on, not a predetermined luminance range, but a captured image. Specifically, an image to be generated by the image generator 93-1 is created such that a majority of the limited number of gradations can be assigned within a luminance range particularly accounting for a large portion of the entire captured image among, for example, the luminance ranges that are the most important for the user to recognize the image, the luminance ranges including the object accounting for a large portion of the image field, as well as the ranges having luminance higher than that of the abovementioned luminance ranges.

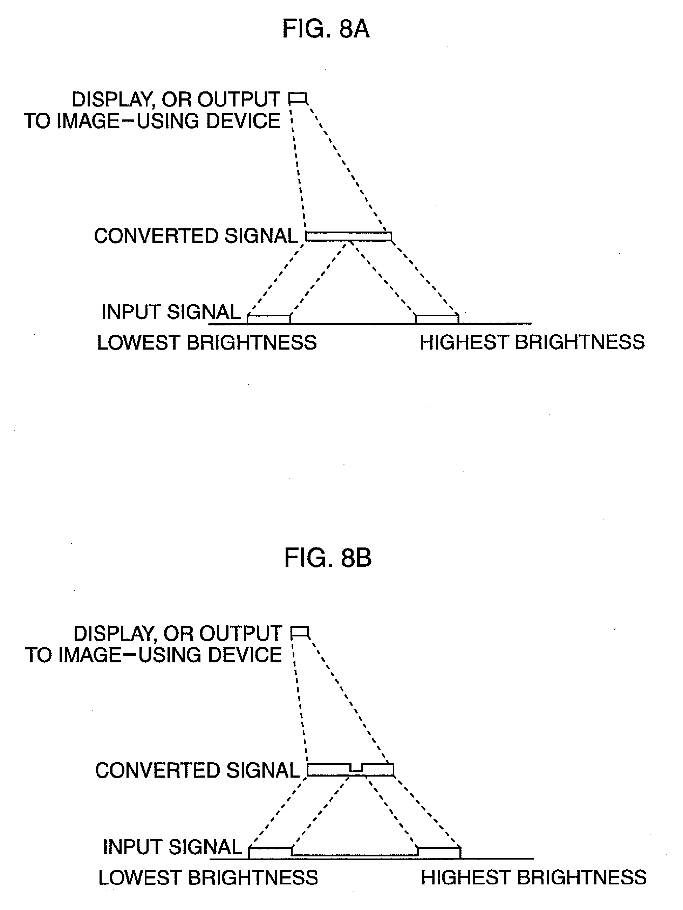

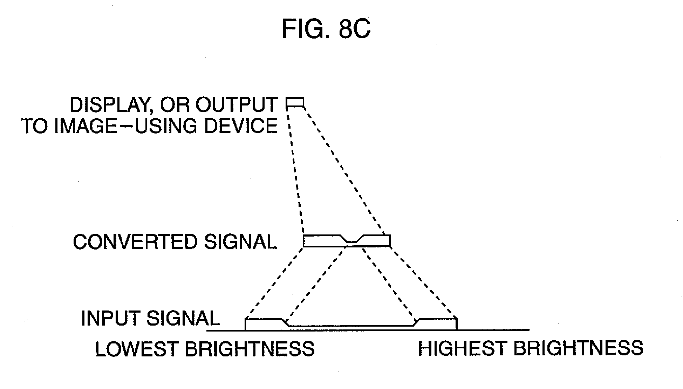

Fig. 8 is used to explain an input signal, a signal obtained after gradation conversion performed by the output level conversion processing section 135, and the luminance level of a signal to be displayed.

Fig. 8A shows an input signal obtained when gradation conversion described in Fig. 6A is performed, a signal obtained after gradation conversion performed by the output level conversion processing section 135, and the luminance level of a signal to be displayed, printed out, image-recognized, or recorded by the display 82, or output to the image-using device 83 for processing image communication and the like. As shown in Fig. 8A, a signal is converted into continuous luminance gradations, in a state in which each of luminance gradation widths (the number of steps between the maximum gradation value and the minimum gradation value within each area) are sufficiently provided in signals of the main area and second luminance area which are the separated luminance ranges. The pixels within the luminance range between the main area and the second luminance area are all output at the maximum output level of the main area. Then, the converted signal is subjected to gradation conversion (the number of gradations is compressed) in accordance with the conditions of display or output to the image-using device 83. Specifically, for example, when the display 82 can display the image at 265 gradations, the display controller 94 converts the signal supplied by the image generator 93-1, i.e., the signal obtained after gradation conversion is performed by the output level conversion processing section 135, into a signal having 256 gradations. Also, when the number of gradations to be used in image recognition processing performed by the image-using device 83 is 256, the image recognition processing being the image processing executed for detecting a specific object (e.g. , a person, a vehicle, etc.) from the supplied image, the output controller 95 converts the signal supplied from the image generator 93-1, i.e., the signal obtained after gradation conversion performed by the output level conversion processing section 135, to a signal having 256 gradations.

Fig. 8B shows an input signal obtained when gradation conversion described in Fig. 6B is performed, a signal obtained after gradation conversion performed by the output level conversion processing section 135, and the luminance level of a signal to be displayed by the display 82 or output to the image-using device 83. As shown in Fig. 8B, the area between the main area and the second luminance area is provided with the number of gradation steps smaller than that of the main area and the second luminance area. For this reason, the number of gradations of the luminance of the converted signal is significantly compressed, compared to the input signal, due to the small number of steps in the area between the main area and the second luminance area, but the signals of the main area and second luminance area are provided with sufficient luminance gradation widths. Also, the converted signal is subjected to gradation conversion (the number of gradations is compressed) in accordance with the conditions of display or output to the image-using device 83.

Fig. 8C shows an input signal obtained when gradation conversion described in Fig. 6C is performed, a signal obtained after gradation conversion performed by the output level conversion processing section 135, and the luminance level of a signal to be displayed by the display 82 or output to the image-using device 83. As shown in Fig. 8C, the number of gradation steps of luminance to be assigned is changed slowly by the abovementioned section α and section β in the main area, second luminance area, and area therebetween. In other words, the number of gradation steps smaller than that of the main area and second luminance area is provided in the section α and section β. For this reason, the number of gradations of the luminance of the converted signal is significantly compressed, compared to the input signal, in a state in which sufficient luminance gradation widths are provided in the main area and second luminance area. Also, the converted signal is subjected to gradation conversion (the number of gradations is compressed) in accordance with the conditions of display or output to the image-using device 83.

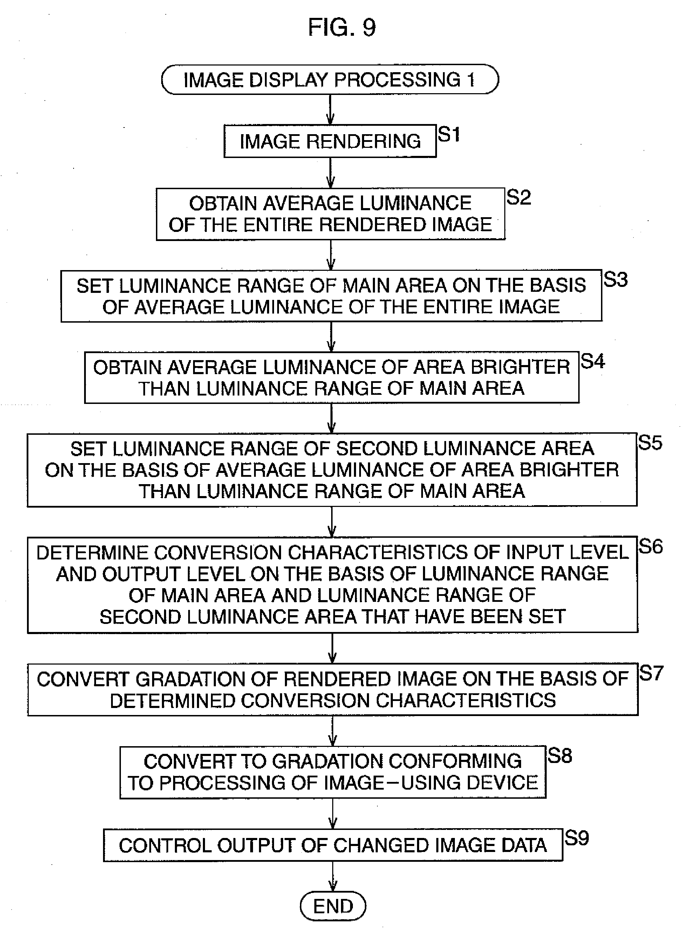

Next, image display processing 1, which is executed by the image processing apparatus 81 in which the image generator 93-1 described using Fig. 5 is used, is described with reference to the flowchart of Fig. 9.

In step S1, the image capturing section 91 captures an image of an object in accordance with an operation input of a user supplied by the operation input section 92, and supplies thus obtained captured image signal, which has been subjected to logarithm conversion and A/D conversion, to the image generator 93-1. The image generator 93-1 acquires the captured image signal.

In step S2, the average luminance calculation section 131 of the image generator 93-1 obtains average luminance of the entire captured image, and supplies the result of calculation to the main area luminance range setting section 132.

In step S3, the main area luminance range setting section 132 sets a luminance range of the main area on the basis of the average luminance of the entire image supplied from the average luminance calculation section 131, and supplies the set luminance range of the main area to the output level conversion processing section 135 and the second luminance area luminance average value calculation section 133.

The main area luminance range setting section 132 may, for example, set the range of predetermined luminance having mainly the average luminance of the image signal, as the luminance range of the main area, or may sequentially select, from among the pixels having the average luminance of the image signal, and in the order of pixels having a luminance value proximate to the average luminance, a pixel having a predetermined number of bits, and set the selected pixels as the luminance range of the main area.

In step S4, the second luminance area luminance average value calculation section 133 obtains the average luminance of an area brighter than the luminance range of the main area that is set by the main area luminance range setting section 132, from the image signal supplied by the image capturing section 91, and supplies the result of calculation to the second luminance area luminance range setting section 134.

In step S5, the second luminance area range setting section 134 sets a luminance range of a second luminance area on the basis of the average luminance of the area brighter than the luminance range of the main area, the average luminance being supplied from the second luminance area luminance average value calculation section 133, and supplies the set luminance range of the second luminance area to the output level conversion processing section 135.

The second luminance area luminance range setting section 134 may, for example, set the range of predetermined luminance having mainly the average luminance of the pixels having a luminance range higher than the luminance range of the main area, as the luminance range of the second luminance area, or may sequentially select, from among the pixels having the average luminance of the pixels having the luminance range higher than the luminance range of the main area, and in the order of pixels having a luminance value proximate to the average luminance, a pixel having a predetermined number of bits, and set the selected pixels as the luminance range of the second luminance area.

In step S6, the output level conversion processing section 135 determines the conversion characteristics of the input level and output level described using, for example, Fig. 6 or Fig. 7, on the basis of the luminance range of the main area that is set by the main area luminance range setting section 132 and the luminance range of the second luminance area that is set by the second luminance area luminance average value calculation section 133.

In step S7, the output level conversion processing section 135 converts the gradations of the captured image supplied by the image capturing section 91, into the conversion characteristics determined in step S6, and supplies the converted gradations to the output controller 95.

In step S8, the output controller 95 converts the supplied image signal into gradations appropriate for the processing that can be executed by the image-using device 83, as described above with reference to Fig. 8.

In step S9, the output controller 95 controls output of the converted image data to the image-using device 83, the image data being obtained by converting the image signal to the gradations appropriate for the processing that can be executed by the image-using device 83, and thereby the processing is ended.

It should be noted here that the processing of outputting the generated image to the image-using device 83 is described. When the generated image is output to the display 82 via the display controller 94 and displayed, basically the same processing is executed in step S1 through step S7, the image signal is supplied to the display controller 94, converted into the gradations that can be processed by the display 82, and then output, and the display is controlled.

By performing this processing, even when the image data captured by the image capturing section 91 using the logarithm conversion type imaging device 102 is output using the gradations corresponding to the image-using device 82, the image data that is subjected to luminance compression so that it can be easily handled by the image-using device 82 can be generated, while ensuring the number of gradations of the luminance of a necessary luminance area in the image information that is required by the user and is scattered in a wide luminance range.

For example, when capturing an image of the front of a vehicle traveling in the vicinity of a tunnel exit within a tunnel, and displaying the captured image on the display:
(1) A wide dynamics range image that is captured by the image capturing section 91 using the logarithm conversion type imaging device 102 is displayed and output while keeping the gradation characteristic thereof, without processing this image using the image processing apparatus 81 having the image generator 93-1;
(2) An image captured using a conventional CCD camera under normal exposure control is displayed and output without performing processing such as synthesis; and
(3) A wide dynamics range image that is captured by the image capturing section 91 using the logarithm conversion type imaging device 102 is processed using the image processing apparatus 81 having the image generator 93-1, and then displayed and output.

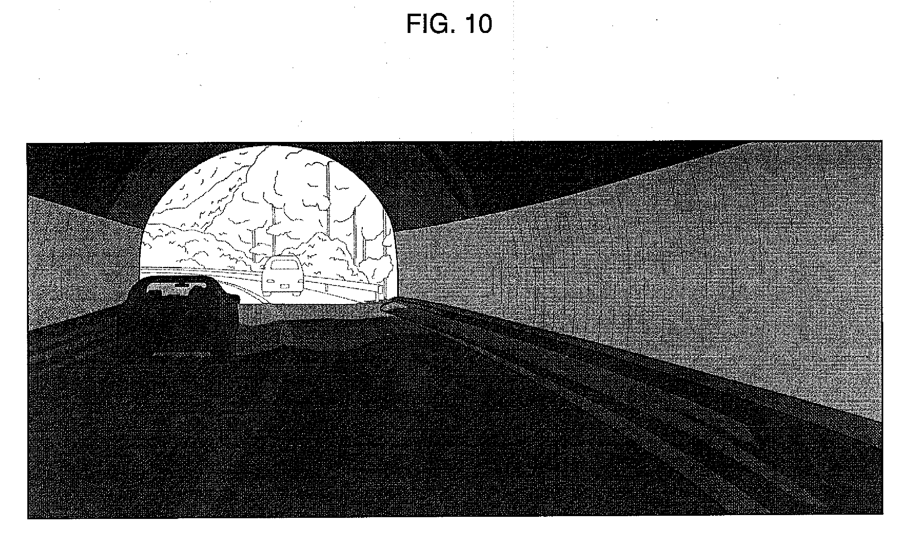

The difference between displayed images is described with reference to Fig. 10 through Fig. 12 on the basis of the above-described conditions.

First, Fig. 10 shows an example of a displayed image obtained in the case in which a wide dynamics range image captured by the image capturing section 91 using the logarithm conversion type imaging device 102 is not processed the image processing apparatus 81 having the image generator 93-1. The wide dynamics range image captured by the image capturing section 91 using the logarithm conversion type imaging device 102 does not generate whiteout or blackout conditions, but an extremely wide dynamics range thereof is converted to gradations that can be processed by the display device, thus an image having no concentration difference (no sharpness) is displayed.

Even if the luminance ranges captured by the logarithm conversion type imaging device 102 are wide, the number of gradations of the image that can be displayed by a general display device cannot be displayed faithfully. Specifically, for example, pixels having different gradations in an image that is captured by a CCD exposed to light with brightness of a road surface are displayed at the same gradation or the number of gradations smaller than the case when the CCD is used, as shown in Fig. 10.

It should be noted that even when gradation conversion is performed between the maximum luminance value and the minimum luminance value of the dynamics range of the obtained captured image, the dynamic range being captured by the logarithm conversion type imaging device 102, if the difference between the luminance within one image field is large (for example, in the case of Fig. 10 the difference between the luminance within the tunnel and the luminance of the sections outside the tunnel is extremely large), an image having no concentration difference is displayed.

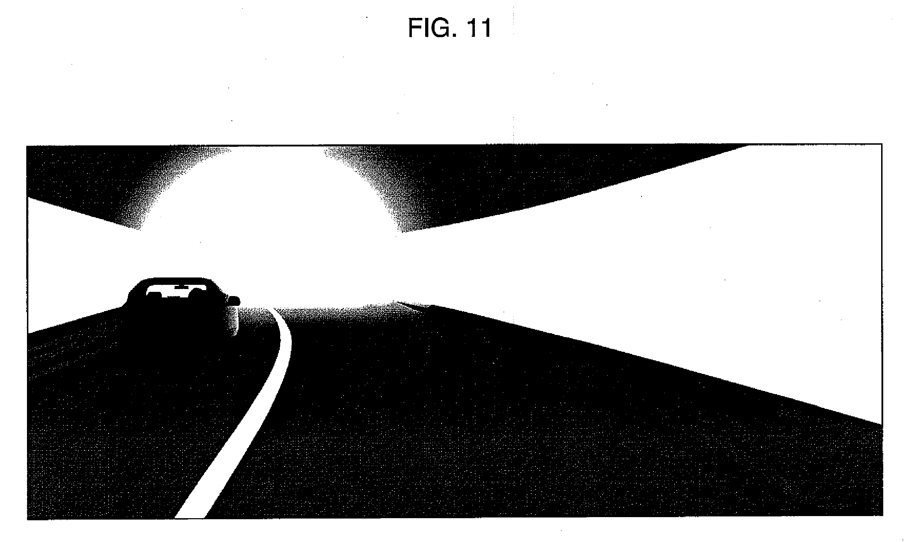

Next, Fig. 11 shows an example of the displayed image in the case in which an image captured by the conventional CCD camera under normal exposure control is displayed. For example, when the exposure of the CCD camera is set based on the brightness of the road surface within the tunnel, which accounts for a large portion of the captured image, a whiteout condition is caused in the image of the outside of the tunnel, which is extremely brighter than the road surface within the tunnel, as shown in Fig. 11. It should be noted that when the exposure time is set extremely short, the whiteout condition shown in Fig. 11 is not caused in the sections outside the tunnel, but a blackout condition is caused in the sections within the tunnel that have significantly low luminance, as compared with the sections outside the tunnel, thus it is difficult to distinguish between the relevant sections on the displayed image.

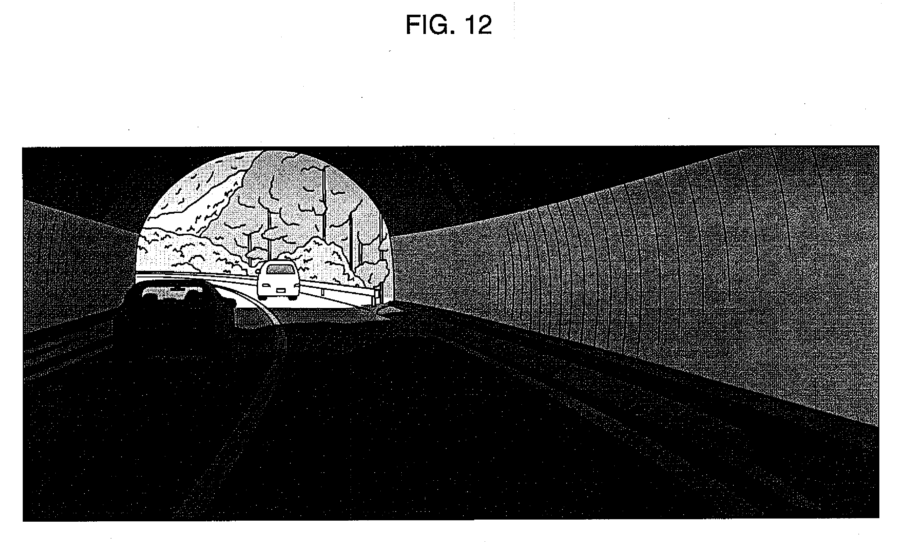

Fig. 12 shows an example of the displayed image in the case in which the wide dynamics range image captured by the image capturing section 91 using the logarithm conversion type imaging device 102 is processed using the image processing apparatus 81 having the image generator 93-1. When the image of the front part of the vehicle traveling in the vicinity of the tunnel exit within the tunnel is captured, luminance around the road in front of the front part of the vehicle is set as the luminance range of the main area. A section outside the tunnel, which is the main section in the pixels having luminance higher than the luminance of the main area, is set as the second luminance area. Specifically, in the image conversion performed by the image processing apparatus 81 having the image generator 93-1, the number of gradation steps that can be recognized by the user is assigned to the luminance range corresponding to the inside of the tunnel and the luminance range corresponding to the outside of the tunnel, in the captured image. Therefore, as compared to Fig. 10 and Fig. 11, the displayed image that is processed by the image processing apparatus 81 having the image generator 93-1 is displayed such that the main section of the captured image (the section of the road surface in front of the vehicle) and the main section of the luminance range separated from the abovementioned main section (the section outside the tunnel) are easily recognized by the user.

In this manner, conversion is performed so that the information required by the user in the image captured at a wide dynamics range is easily recognized by the user, i.e., sufficient number of gradation steps is assigned.

In a similar manner, there is considered a case in which the imaged obtained under the abovementioned three conditions is supplied by the image-using device 83 and then processed.

For example, the wide dynamic range image in which 14 bits of data are A/D converted includes an extremely wide luminance area, thus the processing executed by the conventional image-using device 83 may not be enough to sufficiently achieve a goal. For example, when the wide dynamics range image in which 14 bits of data are A/D converted is subjected to laplacian conversion processing for performing differential processing as in the case of normal image data, only a noise-like result is obtained as in the case of an image having extremely low contrast. Furthermore, performing binarization processing on the wide dynamics range image in which 14 bits of data are A/D converted will lead to an extremely large number of candidates for luminance, which can be a threshold value, thus the throughput increases explosively. Therefore, when performing general image processing using wide dynamics range image data, it is sometimes necessary to significantly change the processes of the image processing that was executed conventionally.

On the other hand, after the wide dynamic range image captured by the image capturing section 91 using the logarithm conversion type imaging device 102 is processed by the image processing apparatus 81 having the image generator 93-1, this image is supplied to the image-using device 83, whereby the processes of the conventional image processing can be sometimes executed directly in the image-using device 83.

For example, there is considered a case in which the image obtained under the above-described three conditions is supplied to the image-using device 83 and is then used in the image recognition processing executed by the image-using device 83.

In the image shown in Fig. 10, the dynamic range of the obtained image data is wide enough to detect the vehicle present outside the tunnel, but almost no concentration difference between the luminance of the objects remains. Therefore, even if the processing that is required for extracting the image is performed (e.g., edge detection or laplacian conversion), the accuracy of detecting the objects is extremely low. Even if the vehicle that exists outside the tunnel is detected from the image shown in Fig. 11, necessary luminance range data is not obtained, thus erroneous detection could be performed.

On the other hand, in the image shown in Fig. 12, the luminance area data that is required for detecting the vehicle existing outside the tunnel is provided with sufficient number of luminance gradation steps and supplied, thus the objects can be recognized accurately.

When the image-using device 82 is designed to execute the processing such as transmission and recording of the generated image data, the image-using device 82 can transmit or record the wide dynamics range image captured by the image capturing section 91 using the logarithm conversion type imaging device 102, as is. However, the wide dynamics range image captured by the image capturing section 91 using the logarithm conversion type imaging device 102 has an extremely large data volume, thus the limited record capacity or the traffic of the transmission path might be wasted, depending on the intended use of the recorded image data or transmitted image data. Therefore, it is preferred that the record capacity or the traffic of the transmission path be conserved by assigning the number of gradation steps mainly to a luminance area to be used, in accordance with the intended use of the recorded image data or the transmitted image data.

Also, when using the logarithm conversion type imaging device 102, a wide dynamics range image can be obtained at one image-capturing. Therefore, in the case in which the wide dynamic range image that is captured by the image capturing section 91 using the logarithm conversion type imaging device 102 is processed using the image processing apparatus 81 having the image generator 93-1, the frame rate of a dynamic image can be increased easily, as compared to the case in which a wide dynamics range image is obtained by combining images captured at different shutter times by using the conventional CCD.

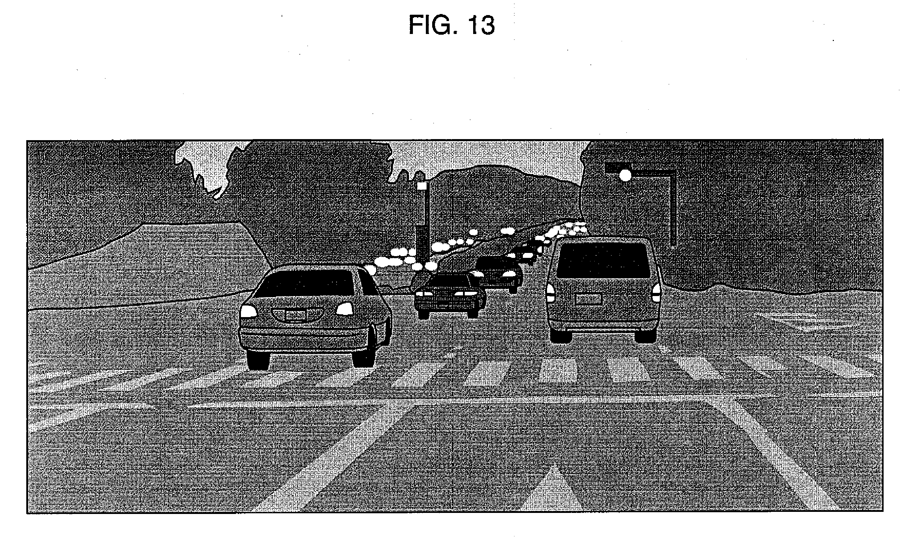

Furthermore, the image processing apparatus 81 having the image generator 93-1 is used to process the wide dynamics range image captured by the image capturing section 91 using the logarithm conversion type imaging device 102, whereby even in the case in which an image of the front parts of vehicles traveling during the night is captured and then displayed on the display, as shown in, for example, Fig. 13, the images of the headlights or taillights of the other vehicles or the street lamps that have the pixels having the luminance value separated from the luminance value of the most parts on the image field can be assigned with sufficient gradations and displayed or processed without causing the whiteout and blackout conditions and without causing a difficulty in recognizing the image information required by the user, due to the high-luminance pixels, such as the pixels of the headlights, taillights and street lamps.

The above has described that the image generator 93-1 assigns a large number of gradation steps to the luminance range of the main area and the luminance range of the second luminance area, which is the main section within the range having luminance higher than that of the luminance range of the main area. There will be described a case in which the luminance ranges to be set are not these two luminance ranges of the main area and second luminance area.

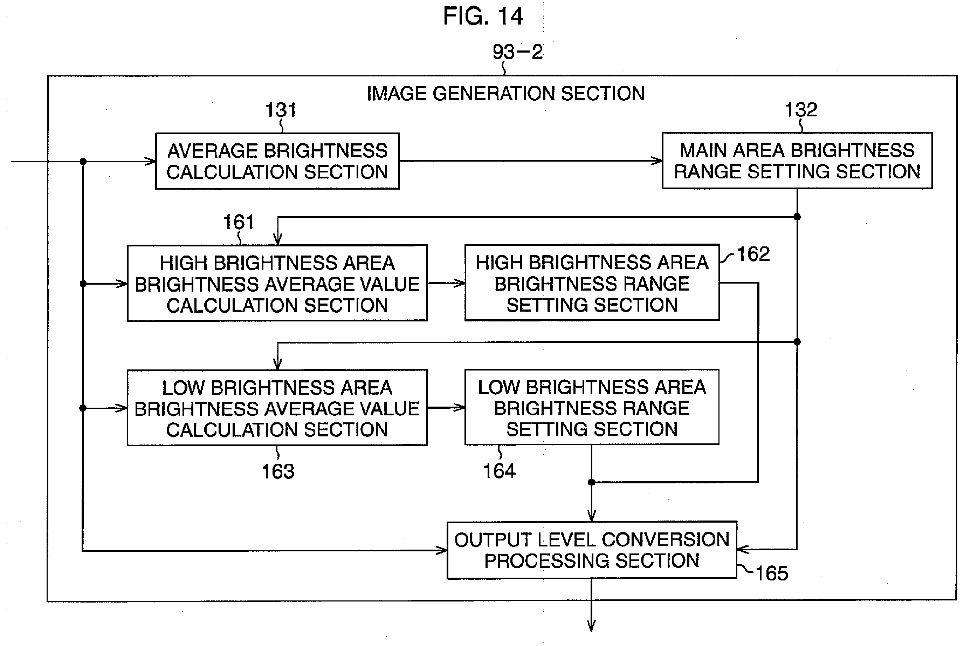

Next, Fig. 14 is a block diagram showing a configuration of an image generator 93-2, which is the second example of the configuration of the image generator 93 shown in Fig. 2. The image generator 93-2 sets three luminance ranges, i.e., the luminance range of the main area, the luminance range of the second luminance area, which is the main part of the luminance range higher than the luminance range of the main area, and the luminance range of a third luminance area, which is the main part of the luminance range lower than the luminance range of the main area, and assigns a large number of gradation steps to these three set luminance ranges.

It should be noted that the same reference numerals are applied to the sections corresponding to those shown in Fig. 5, thus the explanations thereof are omitted accordingly.

Specifically, the image generator 93-2 shown in Fig. 14 has the average luminance calculation section 131 and the main area luminance range setting section 132 that are basically the same as those of the image generator 93-1 described using Fig. 5. The second luminance area luminance average value calculation section 133 and second luminance area luminance range setting section 134 of the image generator 93-1 are omitted. A high-luminance area luminance average value calculation section 161, a high-luminance area luminance range setting section 162, a low-luminance area luminance average value calculation section 163, and a low-luminance area luminance range setting section 164 are newly provided, and an output level conversion processing section 165 is provided in place of the output level conversion processing section 135.

The high-luminance area luminance average value calculation section 161 acquires the image signal supplied from the image capturing section 91, calculates the average luminance of the pixels within the luminance range higher than the luminance range of the main area in the acquired image signal, the luminance range of the main area being set by the main area luminance range setting section 132, and supplies the result of calculation to the high-luminance area luminance range setting section 162.

The high-luminance area luminance range setting section 162 sets the luminance range of the second luminance area, the luminance of which is higher than that of the main area, on the basis of the average luminance of the pixels within the luminance range higher than the luminance range of the main area, the average luminance being supplied from the high-luminance range luminance average value calculation section 161, and supplies the set luminance range of the second luminance area to the output level conversion processing section 165.

The high-luminance area luminance range setting section 162 may, for example, set the range of predetermined luminance having mainly the average luminance of the pixels within the luminance range higher than the luminance range of the main area, as the luminance range of the second luminance area, or may sequentially select, from among the pixels having the average luminance of the pixels within the luminance range higher than the luminance range of the main area, and in the order of pixels having a luminance value proximate to the average luminance, a pixel having a predetermined number of bits, and set the selected pixels as the luminance range of the second luminance area.

The low-luminance area luminance average value calculation section 163 acquires the image signal supplied from the image capturing section 91, calculates the average luminance of the pixels within the luminance range lower than the luminance range of the main area in the acquired image signal, the luminance range of the main area being set by the main area luminance range setting section 132, and supplies the result of calculation to the low-luminance area luminance range setting section 164.

The low-luminance area luminance range setting section 164 sets the luminance range of the third luminance area, the luminance of which is lower than that of the main area, on the basis of the average luminance of the pixels within the luminance range lower than the luminance range of the main area, the average luminance being supplied from the low-luminance range luminance average value calculation section 163, and supplies the set luminance range of the third luminance area to the output level conversion processing section 165.

The low-luminance area luminance range setting section 164 may, for example, set the range of predetermined luminance having mainly the average luminance of the pixels within the luminance range lower than the luminance range of the main area, as the luminance range of the third luminance area, or may sequentially select, from among the pixels having the average luminance of the pixels within the luminance range lower than the luminance range of the main area, and in the order of pixels having a luminance value proximate to the average luminance, a pixel having a predetermined number of bits, and set the selected pixels as the luminance range of the third luminance area.

The output level conversion processing section 165 acquires the image signal supplied by the image capturing section 91, and converts the output level of the acquired image signal on the basis of the information on the luminance range of the main area, the luminance range of the second luminance area, and the luminance range of the third luminance area that are supplied from the main area luminance range setting section 132, the high-luminance area luminance range setting section 162, and low-luminance area luminance range setting section 164 respectively.

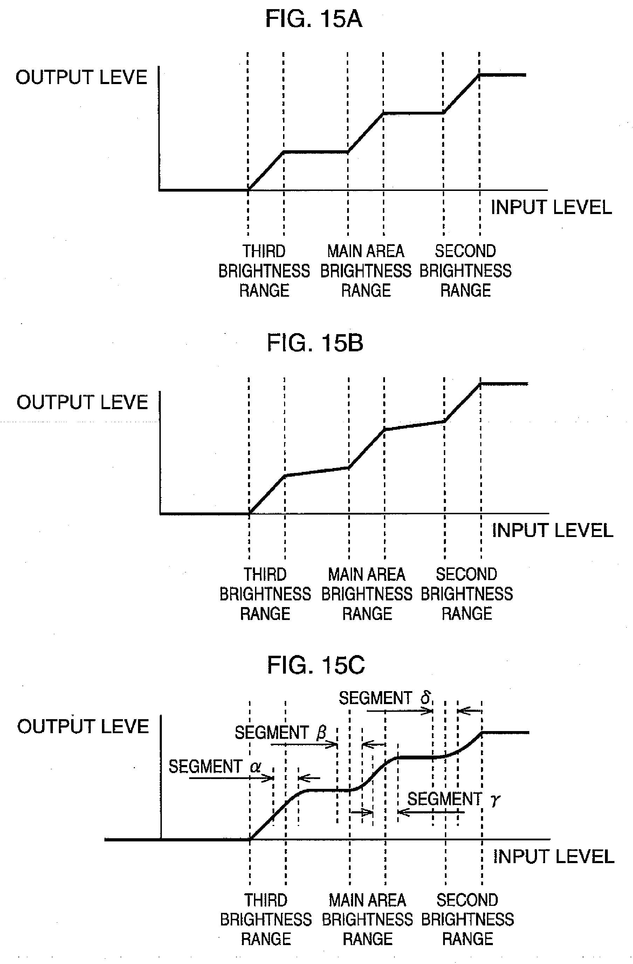

Specifically, as shown in, for example, Fig. 15A, the output level conversion processing section 165 can convert the output level with respect to the input level. Specifically, the output level of the pixels in which the input level of the luminance is lower than the luminance range of the third luminance area is 0 (that is, black), regardless of the input level. A predetermined gradation output level is assigned to the pixels within the third luminance area, main area, and second luminance area in accordance with the input level. Also, the pixels in the luminance range between the third luminance area and the main area and in the luminance range between the main area and the second luminance area are output at the maximum level that is assigned previously to these areas, regardless of the input level. The output level that is the maximum value of the output level assigned to the luminance range of the second luminance area is assigned to the pixels having luminance higher than that of the second luminance area.

Also, as shown in, for example, Fig. 15B, the output level conversion processing section 165 can convert the output level with respect to the input level. Specifically, the output level of the pixels in which the input level of the luminance is lower than the luminance range of the third luminance area is 0 (that is, black), regardless of the input level. A predetermined gradation output level is assigned to the pixels within the third luminance area, main area, and second luminance area in accordance with the input level. Also, an output level corresponding to the input level is assigned to the pixels in the luminance range between the third luminance area and the main area and in the luminance range between the main area and the second luminance area at the number of steps smaller than the number of steps assigned to the main area and the like. The output level that is the maximum value of the output level assigned to the second luminance area is assigned to the pixels having luminance higher than that of the second luminance area.

As shown in, for example, Fig. 15C, the output level conversion processing section 165 can convert the output level with respect to the input level. Specifically, the output level conversion processing section 165 takes a predetermined luminance range having mainly an upper limit value of the third luminance area luminance as a section α, a predetermined luminance range having mainly a lower limit value of the main area luminance as a section β, a predetermined luminance range having mainly an upper limit value of the main area luminance as a section γ, and a predetermined luminance range having mainly a lower limit value of the second luminance area luminance as a section δ. Then, the output level of the pixels in which the input level of the luminance is lower than the luminance range of the third luminance area is 0 (that is, black), regardless of the input level. The output level of a predetermined gradation is assigned to the pixels of a section other than the section α but within the third luminance area, the pixels of a section other than the section β or section γ but within the main area luminance range, and the pixels of a section other than the section δ but within the second luminance area luminance range. Also, an output level of a predetermined number of gradation steps that is smaller than the number of steps assigned to the sections other than the sections α through δ, such as the main area luminance range and the like, is assigned to the pixels within the section α, section β, section γ, and section δ. An output level that is the maximum value of the output level assigned to the second luminance range is assigned to the pixels having luminance higher than that of the second luminance area.

It should be noted in Fig. 15C that a predetermined luminance range having mainly an upper limit value of the third luminance area luminance is taken as the section α, a predetermined luminance range having mainly a lower limit value of the main area luminance is taken as the section β, a predetermined luminance range having mainly an upper limit value of the main area luminance is taken as the section γ, and a predetermined luminance range having mainly a lower limit value of the second luminance area luminance is taken as the section δ. However, for example, a predetermined luminance range on the upper limit side within the third luminance range may be taken as the section α, a predetermined range on the lower limit side within the main area as the section β, a predetermined luminance range on the upper limit side within the main area as the section γ, and the a predetermined luminance range on the lower limit side within the second luminance area as the section δ. Also, a predetermined luminance range having luminance higher than that of the upper limit of the third luminance area may be taken as the section α, a predetermined luminance range having luminance lower than that of the lower limit of the main area as the section β, a predetermined luminance range having luminance higher than that of the upper limit of the main area as the section γ, and a predetermined luminance range having luminance lower than that of the lower limit of the second luminance area as the section δ. Moreover, an area to be assigned with the number of steps of the output level that is the same as that of the section α through section δ may be set on the lower limit side of the luminance in the third luminance area and on the upper limit side of the luminance of the second luminance area.

Fig. 15 was used to describe the case in which the number of steps of an output level (the number of gradation steps) is not assigned to the range having luminance lower than that of the third luminance area, and the range having luminance higher than that of the second luminance area. n the other hand, as with the case described with reference to, for example, Fig. 7, the output level conversion processing section 165 may assign the number of steps smaller than that of the main area, second luminance area and third luminance area, to the range having luminance lower than that of the third luminance area and the range having luminance higher than that of the second luminance area.

Furthermore, the output level conversion processing section 165 may determine the number of gradation steps to be assigned to each luminance area so that, for example, the ratio of the output level to the input level in a luminance range other than those of the main area, second luminance area and third luminance area becomes lower than the ratio of the output level to the input level in these areas (slope of the straight line).

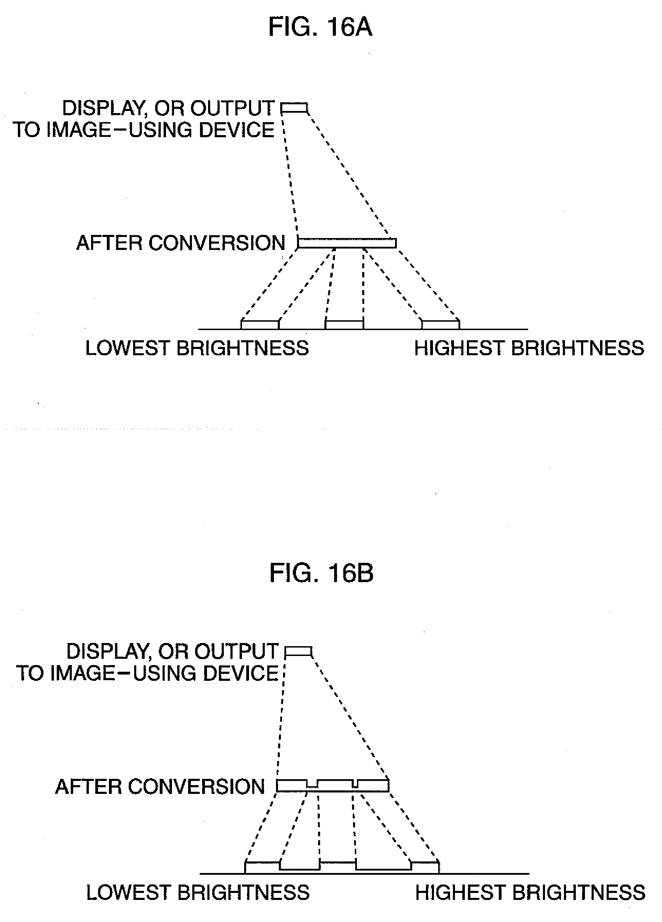

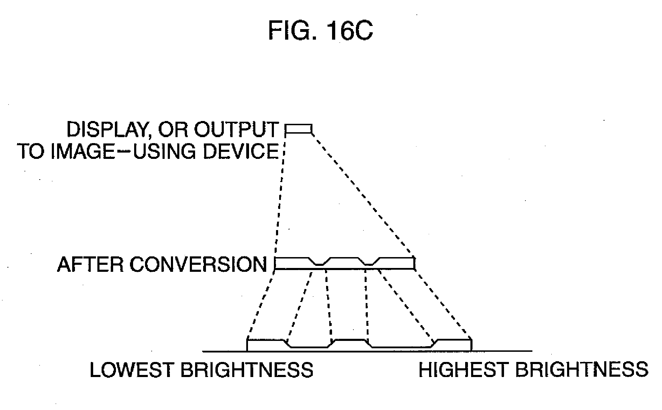

Next, Fig. 16 is used to explain an input signal, a signal obtained after gradation conversion performed by the output level conversion processing section 165, and the luminance level of a signal to be displayed.

Fig. 16A shows an input signal obtained when gradation conversion described in Fig. 15A is performed, a signal obtained after gradation conversion performed by the output level conversion processing section 165, and the luminance level of a signal to be displayed, printed out, image-recognized, or recorded by the display 82, or output to the image-using device 83 for processing image communication and the like. As shown in Fig. 16A, a signal is converted into continuous luminance gradations, in a state in which luminance gradation widths of the signals of the main area, second luminance area and third luminance area, which are the separated luminance ranges, are provided. The pixels within the luminance range between the third luminance area and the main area are all output at the maximum output level of the third luminance area. The pixels within the luminance range between the main area and the second luminance area are all output at the maximum output level of the main area. Then, the converted signal is subjected to gradation conversion (the number of gradations is compressed) in accordance with the conditions of display or output to the image-using device 83.

Fig. 16B shows an input signal obtained when gradation conversion described in Fig. 15B is performed, a signal obtained after gradation conversion performed by the output level conversion processing section 165, and the luminance level of a signal to be displayed by the display 82 or output to the image-using device 83. As shown in Fig. 16B, the area between the third luminance area and the main area, and the area between the main area and the second luminance area are provided with the number of gradation steps smaller than that of the main area, second luminance area, and third luminance area. For this reason, the number of gradations of the luminance of the converted signal is significantly compressed, compared to the input signal, due to the small number of steps in the area between the third luminance area and the main area, and in the area between the main area and the second luminance area, but the luminance gradation widths of the signals of the main area, second luminance area, and third luminance area are provided. Also, the converted signal is subjected to gradation conversion (the number of gradations is compressed) in accordance with the conditions of display or output to the image-using device 83.

Fig. 16C shows an input signal obtained when gradation conversion described in Fig. 15C is performed, a signal obtained after gradation conversion performed by the output level conversion processing section 165, and the luminance level of a signal to be displayed by the display 82 or output to the image-using device 83. As shown in Fig. 16C, the number of gradation steps of luminance to be assigned is changed slowly by the abovementioned section α through section δ in the main area, second luminance area, third luminance area, and areas therebetween. In other words, in the section α through section δ the number of gradation steps smaller than that of the sections other than the abovementioned section α through section δ in the main area, second luminance area, and third luminance area is provided. For this reason, the number of gradations of the luminance of the converted signal is significantly compressed, compared to the input signal, in a state in which sufficient luminance gradation widths are provided in the main area, second luminance area, and third luminance area. Also, the converted signal is subjected to gradation conversion (the number of gradations is compressed) in accordance with the conditions of display or output to the image-using device 83.

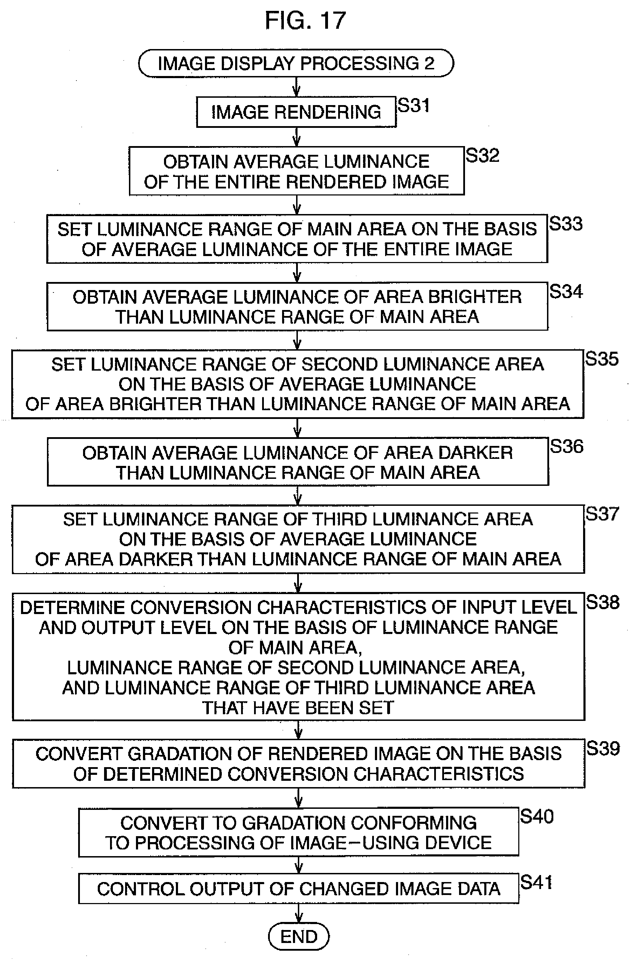

Next, image display processing 2, which is executed by the image processing apparatus 81 having the image generator 93-2 shown in Fig. 14, is described with reference to the flowchart of Fig. 17.

In step S31, the image capturing section 91 captures an image of an object in accordance with an operation input of a user supplied by the operation input section 92, and supplies thus obtained captured image signal, which has been subjected to logarithm conversion and A/D conversion, to the image generator 93-2. The image generator 93-2 acquires the captured image signal.

In step S32, the average luminance calculation section 131 of the image generator 93-2 obtains average luminance of the entire captured image, and supplies the result of calculation to the main area luminance range setting section 132.

In step S33, the main area luminance range setting section 132 sets a luminance range of the main area on the basis of the average luminance of the entire image supplied from the average luminance calculation section 131, and supplies the set luminance range of the main area to the output level conversion processing section 165, the high-luminance area luminance average value calculation section 161, and the low-luminance area luminance average value calculation section 163.

The main area luminance range setting section 132 may, for example, set the range of predetermined luminance having mainly the average luminance of the image signal, as the luminance range of the main area, or may sequentially select, from among the pixels having the average luminance of the image signal, and in the order of pixels having a luminance value proximate to the average luminance, a pixel having a predetermined number of bits, and set the selected pixels as the luminance range of the main area.

In step S34, the high-luminance area luminance average value calculation section 161 obtains the average luminance of an area brighter than the luminance range of the main area that is set by the main area luminance range setting section 132, from the image signal supplied by the image capturing section 91, and supplies the result of calculation to the high-luminance area luminance range setting section 162.

In step S35, the high-luminance area luminance range setting section 162 sets a luminance range of a second luminance area on the basis of the average luminance of the area brighter than the luminance range of the main area, the average luminance being supplied from the high-luminance area luminance average value calculation section 161, and supplies the set luminance range of the second luminance area to the output level conversion processing section 165.

The high-luminance area luminance range setting section 162 may, for example, set the range of predetermined luminance having mainly the average luminance of the pixels having a luminance range higher than the luminance range of the main area, as the luminance range of the second luminance area, or may sequentially select, from among the pixels having the average luminance of the pixels having the luminance range higher than the luminance range of the main area, and in the order of pixels having a luminance value proximate to the average luminance, a pixel having a predetermined number of bits, and set the selected pixels as the luminance range of the second luminance area.

In step S36, the low-luminance area luminance average value calculation section 163 obtains the average luminance of an area darker than the luminance range of the main area that is set by the main area luminance range setting section 132, from the image signal supplied by the image capturing section 91, and supplies the result of calculation to the low-luminance area luminance range setting section 164.

In step S37, the low-luminance area luminance range setting section 164 sets a luminance range of the third luminance area on the basis of the average luminance of the area darker than the luminance range of the main area, the average luminance being supplied from the low-luminance area luminance average value calculation section 163, and supplies the set luminance range of the third luminance area to the output level conversion processing section 165.

The low-luminance area luminance range setting section 164 may, for example, set the range of predetermined luminance having mainly the average luminance of the pixels having a luminance range lower than the luminance range of the main area, as the luminance range of the third luminance area, or may sequentially select, from among the pixels having the average luminance of the pixels having the luminance range lower than the luminance range of the main area, and in the order of pixels having a luminance value proximate to the average luminance, a pixel having a predetermined number of bits, and set the selected pixels as the luminance range of the third luminance area.

In step S38, the output level conversion processing section 165 determines the conversion characteristics of the input level and output level described using, for example, Fig. 15, on the basis of the luminance range of the main area that is set by the main area luminance range setting section 132, the luminance range of the second luminance area that is set by the high-luminance area luminance range setting section 162, and the luminance range of the third luminance area that is set by the low-luminance area luminance range setting section 164.

In step S39, the output level conversion processing section 165 converts the gradations of the captured image supplied by the image capturing section 91, into the conversion characteristics determined in step S39, and supplies the converted gradations to the output controller 95.

In step S40, the output controller 95 converts the supplied image signal into gradations appropriate for the processing that can be executed by the image-using device 83, as described above with reference to Fig. 16.

In step S41, the output controller 95 controls output of the converted image data to the image-using device 83, the image data being obtained by converting the image signal to the gradations appropriate for the processing that can be executed by the image-using device 83, and thereby the processing is ended.

It should be noted here that the processing of outputting the generated image to the image-using device 83 is described. When the generated image is output to the display 82 via the display controller 94 and displayed, basically the same processing is executed in step S31 through step S39, the image signal is supplied to the display controller 94, converted into the gradations that can be processed by the display 82, and then output, and the display is controlled.

By performing this processing, even if the image information required by the user exists in a wide luminance range or particularly in either the high-luminance or low-luminance area separated from the main luminance range in the image data captured by the image capturing section 91 using the logarithm conversion type imaging device 102, such an image can be displayed or printed out so that the user can recognize it, and image data that can be easily processed by the image-using device 83 can be generated, when displaying the image at the gradation level corresponding to the display 82 or when outputting the image at the gradation level corresponding to the processing executed by the image-using device 83.

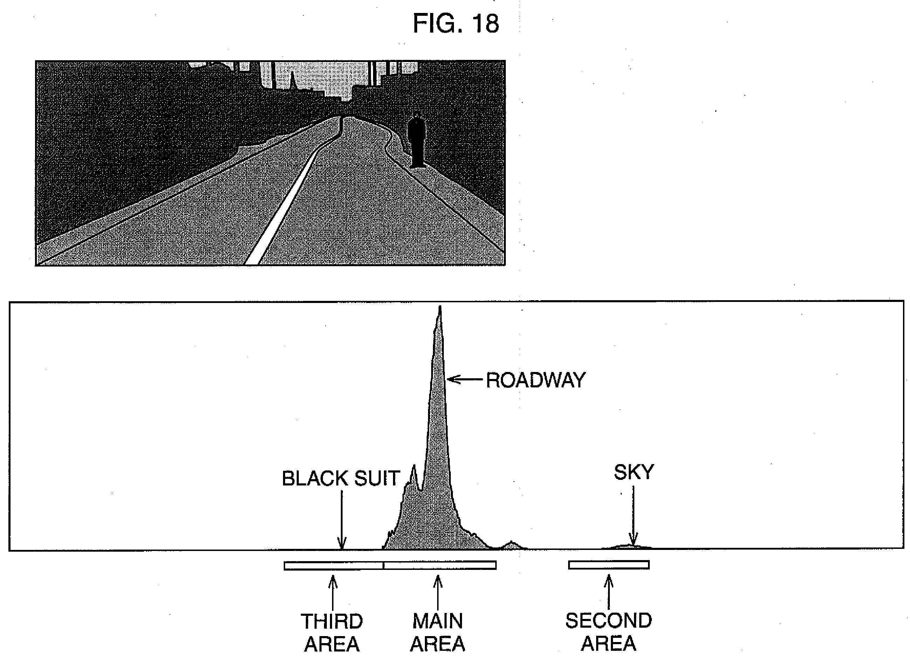

In the image that is displayed by the image processing apparatus 81 having the image generator 93-2 shown in Fig. 14, even when the most parts of the captured image show the road surface, and the sky part, which has luminance extremely higher than the luminance of the road surface, is contained in the angular field, and furthermore the person wearing a dark suit that has luminance extremely lower than the luminance of the road surface is contained in the angular field, as shown in, for example Fig. 18, a large number of gradation steps are assigned in the vicinity of the luminance corresponding to the road surface, the sky, and the person wearing a dark suit. Therefore, use of the image processing apparatus 81 having the image generator 93-2 shown in Fig. 14 can prevent the occurrence of the whiteout condition in the sky part when the image display processing is performed, so that an unrecognizable image is not displayed. The use of the image processing apparatus 81 can also prevent the occurrence of the blackout condition on the person wearing a dark suit so that the user can make a distinction, and enables recognition (or extraction) of the person wearing a dark suit, when the image recognition processing is performed.

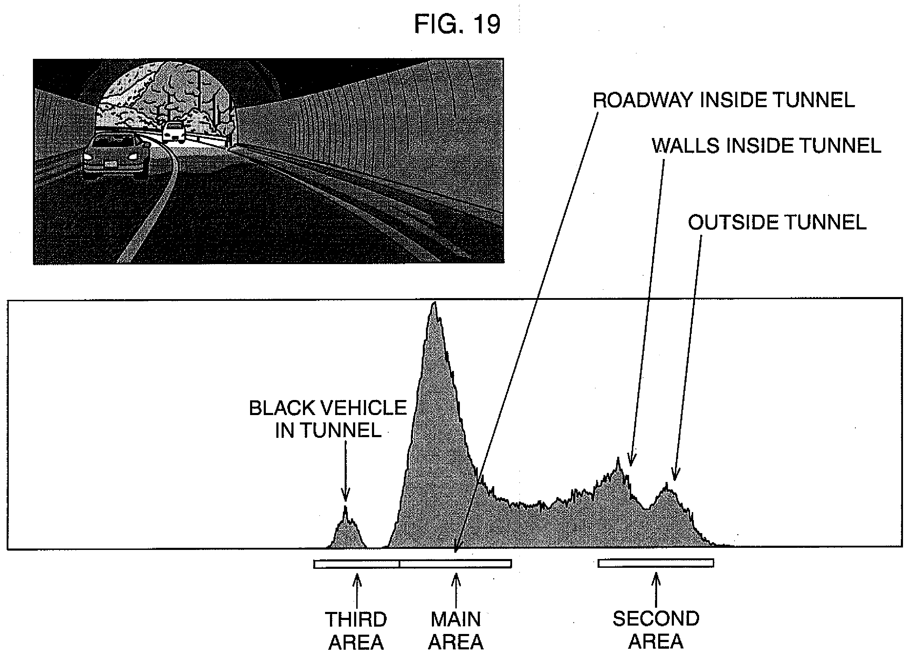

Similarly, in the image that is displayed by the image processing apparatus 81 having the image generator 93-2 shown in Fig. 14, for example as shown in Fig. 19, even when the most parts of the captured image show the road surface darker than the tunnel, and a white wall within the tunnel that has luminance slightly higher than the luminance of the road surface, and the section other than the tunnel that has extremely high luminance are contained in the angular field, and furthermore the black vehicle within the tunnel that has luminance extremely lower than the luminance of the road surface within the tunnel is contained in the angular field, a large number of gradation steps are assigned in the vicinity of the luminance corresponding to the road surface within the tunnel, the wall of the tunnel, the outside of the tunnel, and the black vehicle within the tunnel. Therefore, use of the image processing apparatus 81 having the image generator 93-2 shown in Fig. 14 can prevent the occurrence of the whiteout condition in the section outside the tunnel when the image display processing is performed, so that an unrecognizable image is not displayed. The use of the image processing apparatus 81 can also prevent the occurrence of the blackout condition on the black vehicle within the tunnel so that the user can make a distinction, and enables extraction of a vehicle in the section outside the tunnel, guardrail, or the black vehicle within the tunnel, as an object to be recognized, when the image recognition processing is performed.

Moreover, in the image generator 93, three or more areas may be set, and different numbers of gradation steps may be assigned to the set area and the areas that are not set.

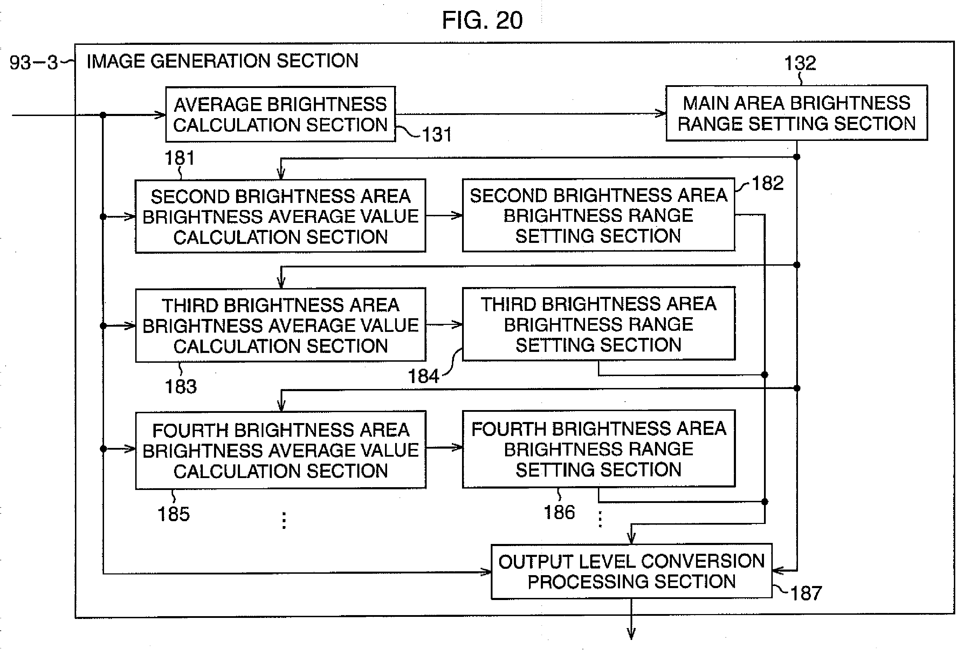

Next, Fig. 20 is a block diagram showing a configuration of an image generator 93-3, which is the third example of the configuration of the image generator 93 shown in Fig. 2. The image generator 93-3 sets a plurality of luminance areas and luminance ranges thereof besides the luminance range of the main area, and assigns the number of gradation steps, which is larger than that of the luminance range that are not set, to the plurality of set luminance ranges.

It should be noted that the same reference numerals are applied to the sections corresponding to those shown in Fig. 5, thus the explanations thereof are omitted accordingly.

Specifically, the image generator 93-3 shown in Fig. 20 has the average luminance calculation section 131 and the main area luminance range setting section 132 that are basically the same as those of the image generator 93-1 described using Fig. 5. The second luminance area luminance average value calculation section 133 and second luminance area luminance range setting section 134 of the image generator 93-1 are omitted. A second luminance area luminance average value calculation section 181, a second luminance area luminance range setting section 182, a third luminance area luminance average value calculation section 183, a third luminance area luminance range setting section 184, a fourth luminance area luminance average value calculation section 185, and a fourth luminance area luminance range setting section 186 are newly provided, and an output level conversion processing section 187 is provided in place of the output level conversion processing section 135.

The second luminance area luminance average value calculation section 181 calculates the average luminance of the pixels having luminance contained in a predetermined range other than the luminance range of the main area that is set by the main area luminance range setting section 132 (e.g., the range having luminance higher than the luminance of the luminance range of the main area is further divided into two ranges, and the highest-luminance section of these divided ranges can be the predetermined range), from the image signal supplied from the image capturing section 91, and supplies the result of calculation to the second luminance area luminance range setting section 182.

The second luminance area luminance range setting section 182 sets the luminance range of the second luminance area on the basis of the average luminance of the pixels having the luminance contained in the predetermined range other than the main area, the average luminance being supplied from the second luminance area luminance average value calculation section 181, and supplies the set luminance range of the second luminance area to the output level conversion processing section 187.

The second luminance area luminance range setting section 182 may, for example, set the range of predetermined luminance having mainly the average luminance of the pixels having the luminance of the predetermined range, as the luminance range of the second luminance area, or may sequentially select, from among the pixels having the average luminance of the pixels having the luminance of the predetermined range, and in the order of pixels having a luminance value proximate to the average luminance, a pixel having a predetermined number of bits, and set the selected pixels as the luminance range of the second luminance area.

The third luminance area luminance average value calculation section 183 calculates the average luminance of the pixels having luminance contained in a predetermined range other than the luminance range of the main area that is set by the main area luminance range setting section 132 (e.g., the range having luminance higher than the luminance of the luminance range of the main area is further divided into two ranges, and the lower luminance section of these two divided ranges can be the predetermined range), from the image signal supplied from the image capturing section 91, and supplies the result of calculation to the third luminance area luminance range setting section 184.

The third luminance area luminance range setting section 184 sets the luminance range of the third luminance area on the basis of the average luminance of the pixels having the luminance contained in the predetermined range other than the main area, the average luminance being supplied from the third luminance area luminance average value calculation section 183, and supplies the set luminance range of the third luminance area to the output level conversion processing section 187.

The third luminance area luminance range setting section 184 may, for example, set the range of predetermined luminance having mainly the average luminance of the pixels having the luminance of the predetermined range, as the luminance range of the third luminance area, or may sequentially select, from among the pixels having the average luminance of the pixels having the luminance of the predetermined range, and in the order of pixels having a luminance value proximate to the average luminance, a pixel having a predetermined number of bits, and set the selected pixels as the luminance range of the third luminance area.

The fourth luminance area luminance average value calculation section 185 calculates the average luminance of the pixels having luminance contained in a predetermined range other than the luminance range of the main area that is set by the main area luminance range setting section 132 (e.g., the range having luminance lower than the luminance of the luminance range of the main area is further divided into two ranges, and the lower luminance section of these two divided ranges can be the predetermined range), from the image signal supplied from the image capturing section 91, and supplies the result of calculation to the fourth luminance area luminance range setting section 186.

The fourth luminance area luminance range setting section 186 sets the luminance range of a fourth luminance area on the basis of the average luminance of the pixels having the luminance contained in the predetermined range other than the main area, the average luminance being supplied from the fourth luminance area luminance average value calculation section 185, and supplies the set luminance range of the fourth luminance area to the output level conversion processing section 187.

The fourth luminance area luminance range setting section 186 may, for example, set the range of predetermined luminance having mainly the average luminance of the pixels having the luminance of the predetermined range, as the luminance range of the fourth luminance area, or may sequentially select, from among the pixels having the average luminance of the pixels having the luminance of the predetermined range, and in the order of pixels having a luminance value proximate to the average luminance, a pixel having a predetermined number of bits, and set the selected pixels as the luminance range of the fourth luminance area.

The output level conversion processing section 187 acquires the image signal supplied by the image capturing section 91, and converts the output level of the acquired image signal on the basis of the information on the luminance range of the main area, the luminance range of the second luminance area, the luminance range of the third luminance area, and the luminance range of the fourth luminance area that are supplied from the main area luminance range setting section 132, the second luminance area luminance range setting section 182, the third luminance area luminance range setting section 184, and the fourth luminance area luminance range setting section 186 respectively.

The output level conversion processing section 187 assigns a predetermined number of steps of an output level signal (a signal of each luminance gradation level obtained when the luminance is divided by a predetermined number of gradation steps) to the level of a luminance signal to be input, and outputs the assigned output level signal. Assignment of the luminance gradation level of the output level signal that is performed by the output level conversion processing section 187 with respect to the luminance ranges of the main area and other area is different from assignment of the same with respect to the other ranges, as described with reference to, for example, Fig. 6, Fig. 7, and Fig. 15. Specifically, the output level conversion processing section 187 assigns more steps of the output level to the luminance ranges set as the main area and the other area, and executes conversion processing such that the number of gradations of the pixels in the corresponding luminance ranges is increased, and the sections having the luminance ranges corresponding to an image to be displayed or printed out can be recognized well by the user.

It should be noted that although Fig. 20 shows the second luminance area luminance average value calculation section 181, second luminance area luminance range setting section 182, third luminance area luminance average value calculation section 183, third luminance area luminance range setting section 184, fourth luminance area luminance average value calculation section 185, and fourth luminance area luminance range setting section 186 for setting the second through fourth luminance areas besides the main area, the image generator 93-3 may be further provided with other luminance area luminance average value calculation section and luminance area luminance range setting section so that more luminance areas can be set.

The processing executed by the image generator 93-3 shown in Fig. 20 is basically the same as the image display processing 2 described using Fig. 17, and corresponds to the case where the number of areas to be set is increased, thus the explanation thereof is omitted.

The image generator 93-1 through the image generator 93-3 described above set the main area on the basis of the average value of the entire luminance of the captured image. On the other hand, the main area may be set based on the average value of the luminance of the pixels contained in a predetermined area in the captured image.

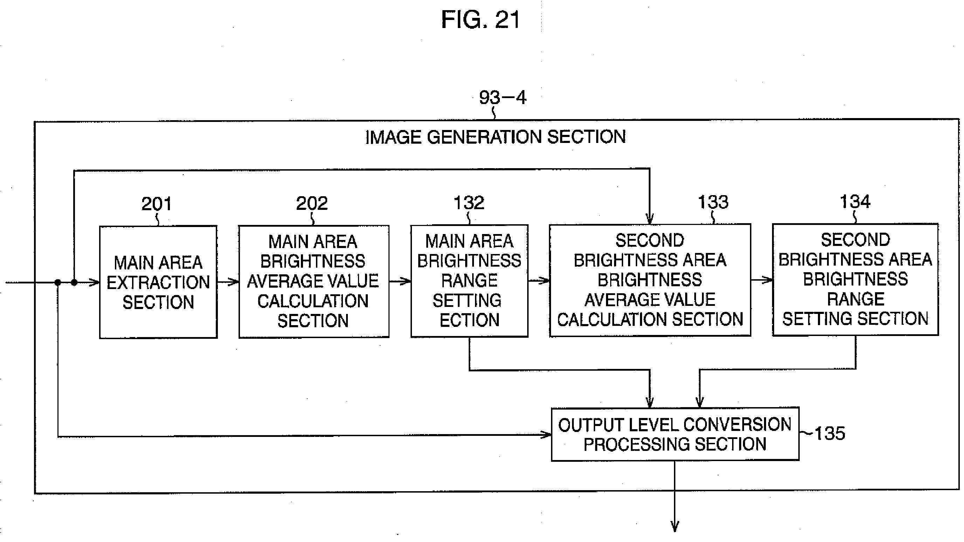

Fig. 21 is a block diagram showing a configuration of an image generator 93-4, which is the fourth example of the configuration of the image generator 93 shown in Fig. 2. The image generator 93-4 clips the pixels contained in a predetermined area within a captured image, and sets the main area on the basis of the average value of the luminance of the clipped area.

It should be noted that the same reference numerals are applied to the sections corresponding to those shown in Fig. 5, thus the explanations thereof are omitted accordingly.

The image generator 93-4 shown in Fig. 21 is provided with a main area clipping section 201 and a main area luminance average value calculation section 202 in place of the average luminance calculation section 131, but basically has the same configuration as the image generator 93-1 shown in Fig. 5.

The main area clipping section 201 acquires the image signal supplied from the image capturing section 91, clips a predetermined image area from the acquired image signal, and supplies the pixels of the clipped area to the main area luminance average value calculation section 202.

For example, when capturing an image of the front part of a traveling vehicle and displaying the captured image on the display, the image that is captured and displayed always changes. As described above, when the main area is set by using the average value of the entire captured image of the traveling vehicle, the luminance range of the main area is changed by an extremely bright or dark matter entering the angle field, changing the brightness of the entire image to be displayed. Accordingly, the brightness of the road surface or the like that accounts for the major part of the displayed image field is changed frequently, and the brightness of the displayed image that the driver can feel might flicker. Also, when capturing an image of the front part of a traveling vehicle and detecting an object (the vehicle, a person, a centerline, or the like) on the basis of the captured image, if the main area is set using the average value of the entire captured image of the traveling vehicle as described above, the luminance range of the main area is changed by an extremely bright or dark matter entering the angle field, thus it might be necessary to change a threshold value or other parameter for extracting the object, every time when the luminance range is changed.

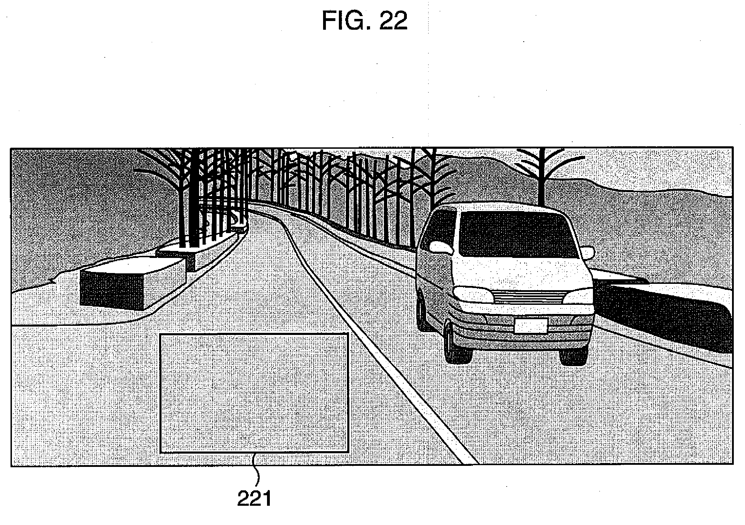

Therefore, the area within the image that is clipped out by the main area clipping section 201 is taken as, for example, an area 221 in which a road surface seems to be captured constantly and which is located on the left side from the center of the image field, as shown in Fig. 22. Since the area to be clipped out is the area in which the same thing seems to be captured constantly, the brightness of the road surface accounting for the major part of the image to be displayed can be made substantially constant, whereby the brightness of the displayed image that the driver can feel can be prevented from flickering, and the image can be processed without changing the parameter for extracting the object, every time when the luminance range is changed.

The main area luminance average value calculation section 202 calculates the average luminance of the pixels of the clipped area supplied from the main area clipping section 201, and supplies the result of calculation to the main area luminance range setting section 132.

In the image generator 93-4 shown in Fig. 21, the luminance range of the main area is set based on the average luminance of the clipped area, which is calculated by the main area luminance average value calculation section 202, and the luminance range of the second luminance area having, the luminance of which is higher than the luminance area of the main area, is set based on the luminance range of the main area. Then, the output level conversion processing section 135 assigns more steps of the output level to the luminance ranges that are set as the main area and the second luminance area, whereby the number of gradations of the pixels within the corresponding luminance ranges is increased, as in the cases described with reference to Fig. 6 through Fig. 8. Then the conversion processing is executed such that the sections of the luminance ranges corresponding to the image to be displayed or printed out can be recognized by the user, or such that the suitable image data to be processed by the image-using device 83 can be generated.

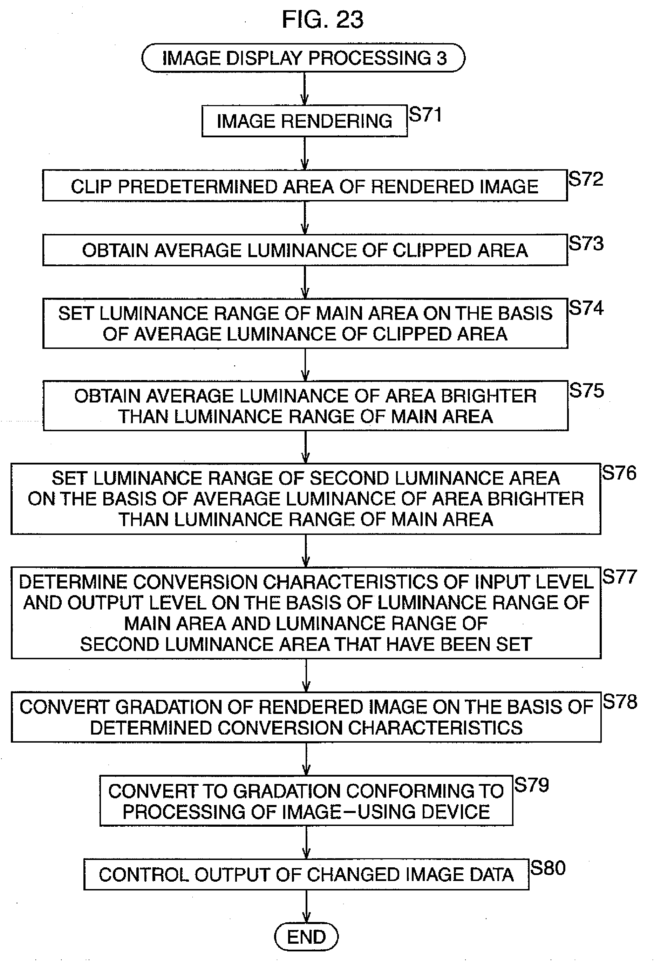

Next, image display processing 3, which is executed by the image processing apparatus 81 in which the image generator 93-4 shown in Fig. 21 is used, is described with reference to the flowchart of Fig. 23.

In step S71, the image capturing section 91 captures an image of an object in accordance with an operation input of a user supplied by the operation input section 92, and supplies thus obtained captured image signal, which has been subjected to logarithm conversion and A/D conversion, to the image generator 93-4. The image generator 93-4 acquires the captured image signal.

In step S72, the main area clipping section 201 of the image generator 93-4 clips the predetermined image area described using, for example, Fig. 22, out from the image signal supplied from the image capturing section 91, and supplies the pixels of the clipped area to the main area luminance average value calculation section 202.

In step S73, the main area luminance average value calculation section 202 obtains the average luminance of the pixels of the clipped area supplied from the main area clipping section 201, and supplies the result of calculation to the main area luminance range setting section 132.

In step S74, the main area luminance range setting section 132 sets the luminance range of the main area on the basis of the average luminance of the pixels of the clipped area, the average luminance being supplied from the main area luminance average value calculation section 202, and supplies the set luminance range of the main area to the second luminance area luminance average value calculation section 133 and the output level conversion processing section 135.

Then, the processing that is basically the same as that of steps S4 through S9 shown in Fig. 9 is executed in step S75 through step S80.

Specifically, the second luminance area luminance average value calculation section 133 obtains the average luminance of an area brighter than the luminance range of the main area, out of the image signal supplied from the image capturing section 91, and the second luminance area luminance range setting section 134 sets the luminance range of the second luminance area on the basis of the average luminance of the area brighter than the luminance range of the main area.

Then, the output level conversion processing section 135 determines the input level and output level conversion characteristics described with reference to, for example, Fig. 6 and Fig. 7, on the basis of the main area luminance range and the second luminance area luminance range, converts the gradation of the captured image supplied from the image capturing section 91, on the basis of the conversion characteristics, and supplies thus obtained gradation to the output controller 95. The output controller 95 converts the supplied image signal into gradations appropriate for the processing that can be executed by the image-using device 83, as described above with reference to Fig. 8, and controls output of the converted image signal to the image-using device 83, whereby the processing is ended.

It should be noted here that the processing of outputting the generated image to the image-using device 83 is described. When the generated image is output to the display 82 via the display controller 94 and displayed, basically the same processing is executed in step S71 through step S78, the image signal is supplied to the display controller 94, converted into the gradations that can be processed by the display 82, and then output, and the display is controlled.

By performing this processing, even when the image data captured by the image capturing section 91 using the logarithm conversion type imaging device 102 is output using the gradations corresponding to the image-using device 82, or even when outputting the image data at the gradation level corresponding to an output destination such as an external device, the image information that is required by the user and is scattered in a wide luminance range can be displayed so that the user can recognize it, or image data that can be output to the image-using device 83 to perform printing or various other processing can be generated. Furthermore, the luminance range to which more gradations are assigned is set on the basis of the predetermined area, thus the brightness of the displayed image can be prevented from flickering when a dynamic image is displayed, and the image can be processed without changing the parameter for extracting the object, every time when the luminance range is changed.

The image generator 93-4 described above clips out a predetermined area within a captured image, sets the luminance range of the main area on the basis of the pixels of the clipped area, and assigns a large number of gradation steps to the luminance range of the main area, and to the luminance range of the second luminance area, which is the main part of the luminance ranges higher than the luminance range of the main area. There will be described a case in which the luminance ranges to be set are not these two luminance ranges of the main area and second luminance area.

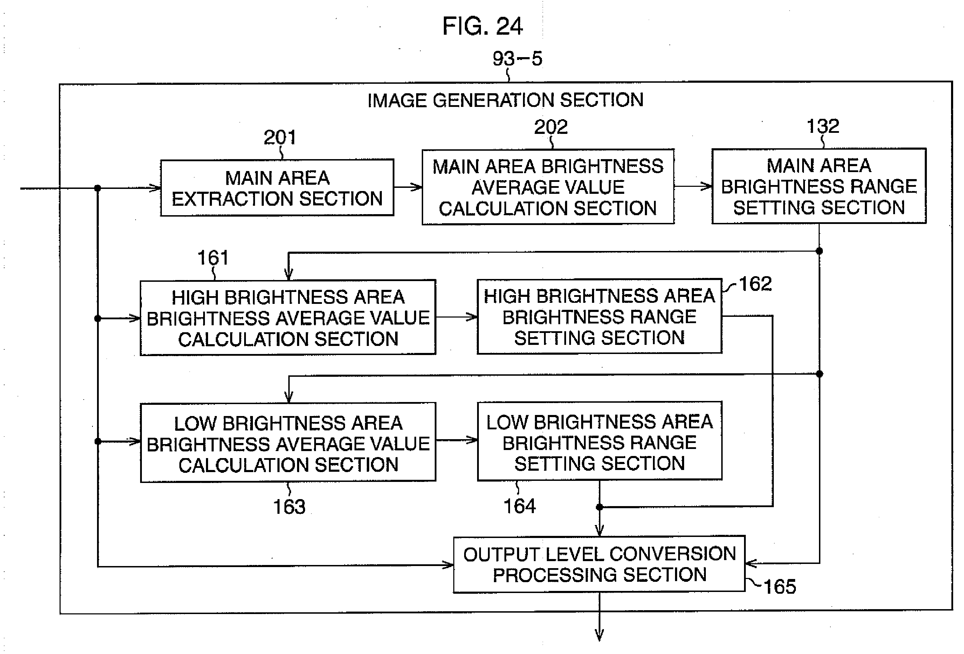

Next, Fig. 24 is a block diagram showing a configuration of an image generator 93-5, which is the fifth example of the configuration of the image generator 93 shown in Fig. 2. The image generator 93-5 clips out a predetermined area within the captured image, sets the luminance range of the main area on the basis of the pixels of the clipped area, sets three luminance ranges, i.e., the luminance range of the main area, the luminance range of the second luminance area, which is the main part of the luminance range higher than the luminance range of the main area, and the luminance range of a third luminance area, which is the main part of the luminance range lower than the luminance range of the main area, and assigns a large number of gradation steps to these three set luminance ranges.

It should be noted that the same reference numerals are applied to the sections corresponding to those shown in Fig. 14 or Fig. 21, thus the explanations thereof are omitted accordingly.

Specifically, the image generator 93-5 shown in Fig. 24 has the main area clipping section 201 and main area luminance average value calculation section 202 that are the same as those described using Fig. 21, and is provided with the main area luminance range setting section 132, the high-luminance area luminance average value calculation section 161, the high-luminance area luminance range setting section 162, the low-luminance area luminance average value calculation section 163, the low-luminance area luminance range setting section 164, and the output level conversion processing section 165 that are the same as those described using Fig. 14.

As with the image generator 93-4 described with reference to Fig. 21, the image generator 93-5 shown in Fig. 24 clips out a predetermined area within a captured image, and sets the luminance range of the main area on the basis of the pixels of the clipped area. Also, as with the image generator 93-2 described with reference to Fig. 14, the image generator 93-5 sets three luminance ranges, i.e., the luminance range of the main area, the luminance range of the second luminance area, which is the main part of the luminance range higher than the luminance range of the main area, and the luminance range of a third luminance area, which is the main part of the luminance range lower than the luminance range of the main area, and assigns a large number of gradation steps to these three set luminance ranges.

Specifically, when a matter that is extremely darker than the brightness of the entire image exists within an image to be captured, or when, for example, a person in black walking during the night is contained in the angle field, it is desired to clearly display an object that cannot be configured easily by the naked eye of the user. Particularly, as described above, when capturing an image of the front part of a traveling vehicle and displaying the captured image on the display, it is desired to generate a displayed image in which the driver can clearly confirm, from the image signal captured at the wide dynamic range, the person in black walking during the night. Therefore, an area to be clipped out is taken as an area in which the amount of reflected light is changed by the brightness of the surrounding areas and in which an image of the same thing is constantly captured, whereby the flickering of the image field can be prevented, and the information required by the driver can be displayed so that the driver can recognized it easily.

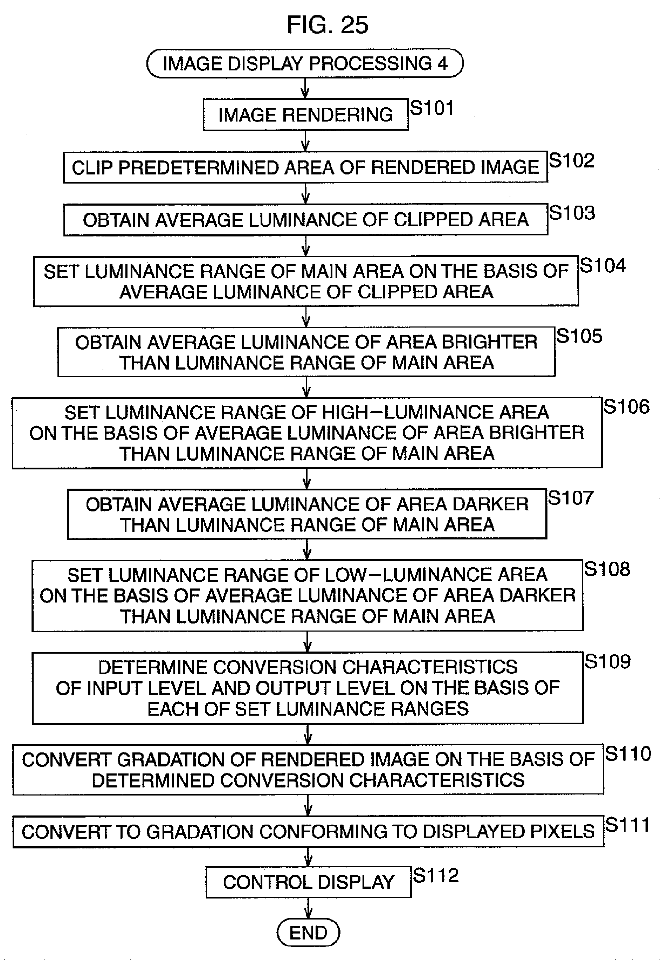

Next, image display processing 4, which is executed by the image processing apparatus 81 having the image generator 93-5 shown in Fig. 24, is described with reference to the flowchart of Fig. 25.

The processing that is basically the same as that of step S71 through step S73 shown in Fig. 23 is executed in step S101 through step S103.

Specifically, the image capturing section 91 captures an image of an object in accordance with an operation input of a user supplied by the operation input section 92, and supplies thus obtained captured image signal, which has been subjected to logarithm conversion and A/D conversion, to the image generator 93-5. The image generator 93-5 acquires the captured image signal. The main area clipping section 201 of the image generator 93-5 clips the predetermined image area described using, for example, Fig. 22, out from the image signal supplied from the image capturing section 91, and supplies the pixels of the clipped area to the main area luminance average value calculation section 202. The main area luminance average value calculation section 202 obtains the average luminance of the pixels of the clipped area supplied from the main area clipping section 201, and supplies the result of calculation to the main area luminance range setting section 132.

In step S104, the main area luminance range setting section 132 sets the luminance range of the main area on the basis of the average luminance of the pixels of the clipped area, the average luminance being supplied from the main area luminance average value calculation section 202, and supplies the set luminance range of the main area to the output level conversion processing section 165, the high-luminance area luminance average value calculation section 161, and the low-luminance area luminance average value calculation section 163.

Then, the processing that is basically the same as that of steps S34 through S41 shown in Fig. 17 is executed in step S105 through step S112.

Specifically, the high-luminance area luminance average value calculation section 161 obtains the average luminance of an area brighter than the luminance range of the main area, out of the image signal supplied from the image capturing section 91, and the high-luminance area luminance range setting section 162 sets the luminance range of the second luminance area on the basis of the average luminance of the area brighter than the luminance range of the main area, and supplies the set luminance range of the second luminance area to the output level conversion processing section 165.

Then, low-luminance area luminance average value calculation section 163 obtains the average luminance of an area darker than the luminance range of the main area, out of the image signal supplied from the image capturing section 91, and the low-luminance area luminance range setting section 164 sets the luminance range of the third luminance area on the basis of the average luminance of the area darker than the luminance range of the main area, and supplies the set luminance range of the third luminance area to the output level conversion processing section 165.

Then, the output level conversion processing section 165 determines the input level and output level conversion characteristics described with reference to, for example, Fig. 15, on the basis of the set main area luminance range, second luminance area luminance range, and third luminance area luminance range, converts the gradation of the captured image supplied from the image capturing section 91, on the basis of the determined conversion characteristics, and supplies thus obtained gradation to the output controller 95. The output controller 95 converts the supplied image signal into gradations appropriate for the processing that can be executed by the image-using device 83, as described above with reference to Fig. 16, and controls output of the converted image signal, which has been converted to the gradation suitable for a display element, to the image-using device 83, whereby the processing is ended.

It should be noted here as well that the processing of outputting the generated image to the image-using device 83 is described. When the generated image is output to the display 82 via the display controller 94 and displayed, basically the same processing is executed in step S101 through step S110, the image signal is supplied to the display controller 94, converted into the gradations that can be processed by the display 82, and then output, and the display is controlled.

By performing this processing, even if the image information required by the user exists in a wide luminance range or particularly in either the high-luminance or low-luminance area separated from the main luminance range in the image data captured by the image capturing section 91 using the logarithm conversion type imaging device 102, such an image can be displayed, or displayed so that the user can recognize it, and image data that is suitable for printing out, image recognition processing, recording processing and transmission processing can be generated, when displaying the image at the gradation level corresponding to the display 82 or when outputting the image at the gradation level corresponding to the processing executed by the image-using device 83. Furthermore, three luminance areas to which more gradations are assigned are set on the basis of the predetermined area, thus the brightness of the displayed image can be prevented from flickering when a dynamic image is displayed, and the parameter for performing image recognition can be prevented from being changed frequently.

Also, in the image generator 93, the predetermined area within the captured image may be clipped and three or more areas may be set on the basis of the pixels of the clipped area. The image generator 93 can set different numbers of gradation steps to be assigned to the set area and the areas that are not set.

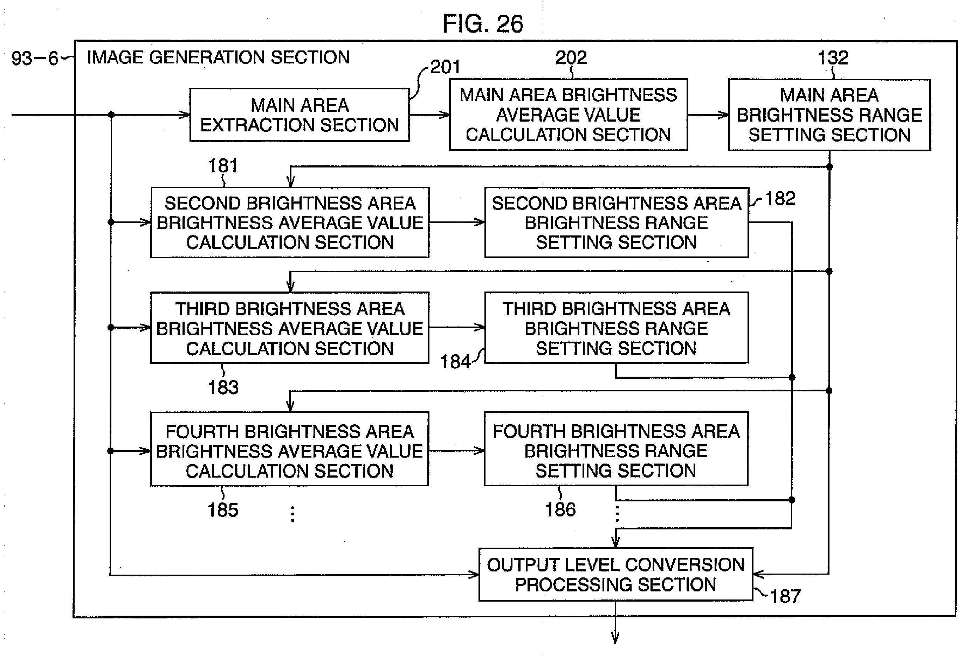

Next, Fig. 26 is a block diagram showing a configuration of an image generator 93-6, which is the sixth example of the configuration of the image generator 93 shown in Fig. 2. The image generator 93-6 clips out a predetermined area within the captured image, sets the luminance range of the main area on the basis of the pixels of the clipped area, sets luminance ranges corresponding to a plurality of luminance areas, other than the luminance range of the main area, and assigns the number of gradation steps larger than the number of gradations steps of the ranges other than the set ranges, to the plurality of set luminance ranges.

It should be noted that the same reference numerals are applied to the sections corresponding to those shown in Fig. 20 or Fig. 21, thus the explanations thereof are omitted accordingly.

Specifically, the image generator 93-6 shown in Fig. 26 has the main area clipping section 201 and main area luminance average value calculation section 202 that are the same as those described using Fig. 21, and is provided with the main area luminance range setting section 132, the second luminance area luminance average value calculation section 181, the second luminance area luminance range setting section 182, the third luminance area luminance average value calculation section 183, the third luminance area luminance range setting section 184, the fourth luminance area luminance average value calculation section 185, the fourth luminance area luminance range setting section 186, and the output level conversion processing section 187 that are the same as those described using Fig. 20.

As with the image generator 93-4 described with reference to Fig. 21, the image generator 93-6 shown in Fig. 26 clips out a predetermined area within a captured image, and sets the luminance range of the main area on the basis of the pixels of the clipped area. Also, as with the image generator 93-3 described with reference to Fig. 20, the image generator 93-6 sets luminance ranges of a plurality of luminance areas besides the luminance range of the main area, and assigns the number of gradation steps that is larger than the number of gradation steps of the range other than the set ranges, to the plurality of set luminance ranges.

It should be noted that although Fig. 26 shows the second luminance area luminance average value calculation section 181, second luminance area luminance range setting section 182, third luminance area luminance average value calculation section 183, third luminance area luminance range setting section 184, fourth luminance area luminance average value calculation section 185, and fourth luminance area luminance range setting section 186 for setting the second through fourth luminance areas besides the main area, the image generator 93-3 may be further provided with other luminance area luminance average value calculation section and luminance area luminance range setting section so that more luminance areas can be set.

The processing executed by the image generator 93-6 shown in Fig. 26 is basically the same as the image display processing 4 described using Fig. 25, and corresponds to the case where the number of areas to be set is increased, thus the explanation thereof is omitted.

The image generator 93-1 through the image generator 93-6 described above set the main area on the basis of the average value of the entire luminance of the captured image or on the basis of the average value of the luminance of the predetermined section. On the other hand, a histogram that shows a distribution of the luminance value of each pixel contained in the captured image is created. By analyzing this histogram, a plurality of luminance ranges may be set, and the number of gradation steps, which is larger than the number of gradation steps of a range other than the set ranges, may be assigned to the set luminance ranges.

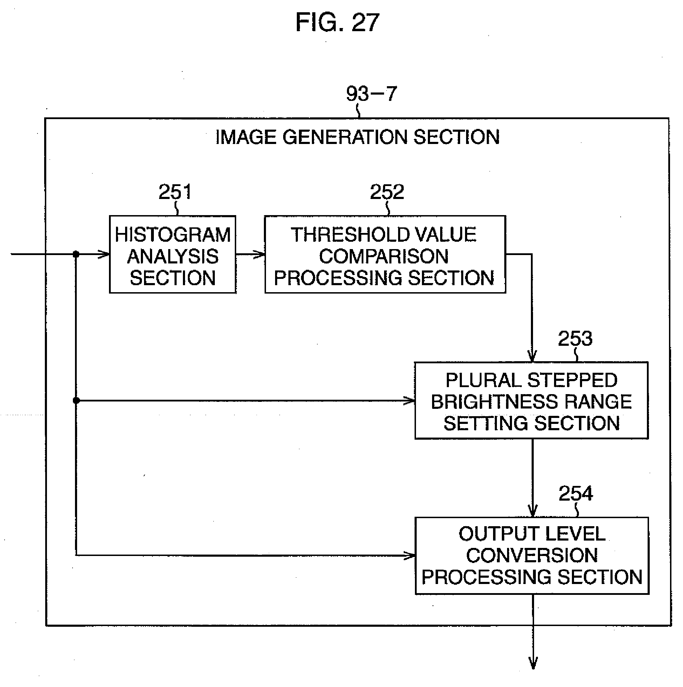

Fig. 27 is a block diagram showing a configuration of an image generator 93-7, which is the seventh example of the configuration of the image generator 93 shown in Fig. 2. The image generator 93-7 analyzes a histogram showing the luminance value of each pixel of a captured image, and sets a plurality of luminance ranges on the basis of the result of analysis.

The image generator 93-7 is constituted by a histogram analyzing section 251, a threshold value comparing processing section 252, a multistage luminance range setting section 253, and an output level conversion processing section 254.

The histogram analyzing section 251 acquires the image signal supplied from the image capturing section 91, creates and analyzes a histogram showing a distribution of the luminance value of each pixel of the captured image on the basis of the acquired image signal, and supplies the result of analysis to the threshold value comparing processing section 252.

The threshold value comparing processing section 252 compares the number of pixels corresponding to each luminance value of an input signal with a predetermined threshold value on the basis of the result of analyzing the histogram supplied from the histogram analyzing section 251. In other words, the threshold value comparing processing section 252 extracts a luminance range having at least a certain number of pixels, from the luminance ranges of the captured image. The threshold value comparing processing section 252 supplies the multistage luminance range setting section 253 with information showing the luminance value obtained by determining, as a result of comparison with the threshold value, that the number of pixels is at least the threshold value.

Here, even if the threshold value is previously obtained and set experimentally/experientially, the user may be able to set it arbitrarily. If the threshold value is set too low, almost all information remains, thus an image to be obtained might not have no concentration difference (no sharpness), as with the displayed image that is obtained when a wide dynamics range image captured using the logarithm conversion type imaging device 102 is not processed by the image processing apparatus 81, as described using, for example, Fig. 10. On the other hand, when the threshold value is set too high, a lot of information items might be lost, thus only some of the luminance ranges are displayed clearly.

The multistage luminance range setting section 253 sets a plurality of luminance ranges to which the number of gradation steps larger than that of the ranges other than the set ranges is assigned, on the basis of the luminance value that is supplied from the luminance value comparing processing section 252 and obtained by determining that the number of pixels is the threshold value or more. The multistage luminance range setting section 253 then supplies the set luminance ranges to the output level conversion processing section 254. The number of luminance ranges to be set by the multistage luminance range setting section 253 is determined based on the comparison result supplied from the threshold value comparing processing section 252, but, for example, an upper limit of the number of luminance ranges may be determined beforehand.

The output level conversion processing section 254 acquires the image signal supplied by the image capturing section 91, and converts the output level of the acquired image signal on the basis of the information on the set luminance ranges supplied by the multistage luminance range setting section 253, so that the number of luminance gradation level steps of an output level signal that is assigned to the set luminance areas becomes larger than the number of luminance gradation level steps of an output level signal that is assigned to other luminance areas, in basically the same manner as the case described with reference to, for example, Fig. 6, Fig. 7 or Fig. 15.

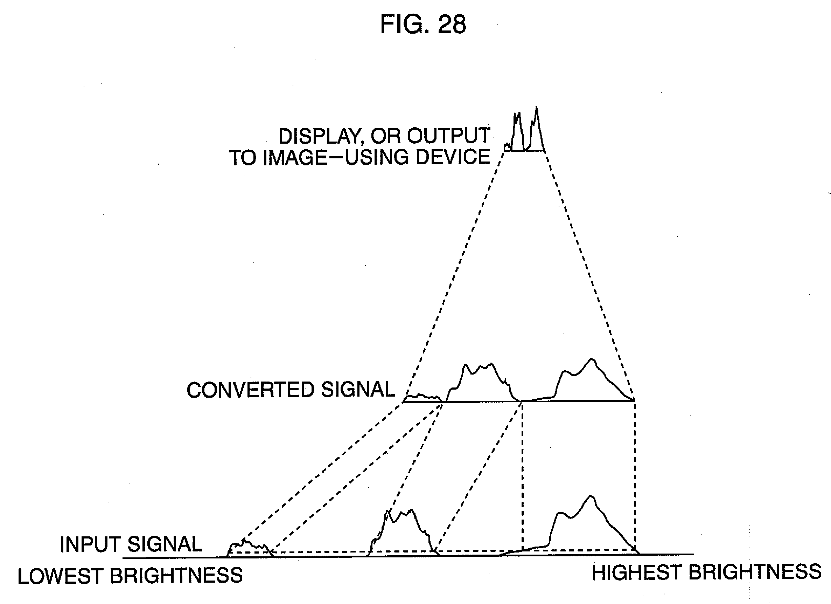

Specifically, in the image generator 93-7, as shown in Fig. 28, the histogram analyzing section 251 analyzes the histogram showing a distribution of the luminance value of each pixel of the captured image, and the threshold value comparing processing section 252 compares the number of pixels with a threshold value and extracts the luminance having the number of pixels within the same image (within one frame), the number of pixels corresponding to the threshold value or more. Then, on the basis of the extracted luminance, the multistage luminance range setting section 253 sets a plurality of luminance ranges, and the output level conversion processing section 254 obtains the conversion characteristic of the output level with respect to the input level so that the number of gradation steps within each range is assigned preferentially, thus the luminance gradation width of each of the set luminance ranges is sufficiently provided. Then, the signal obtained after conversion is subjected to gradation conversion (the number of gradations is compressed) by the display controller 94 or output controller 95 in accordance with the conditions of various types of processing including display and printing out, and then output.

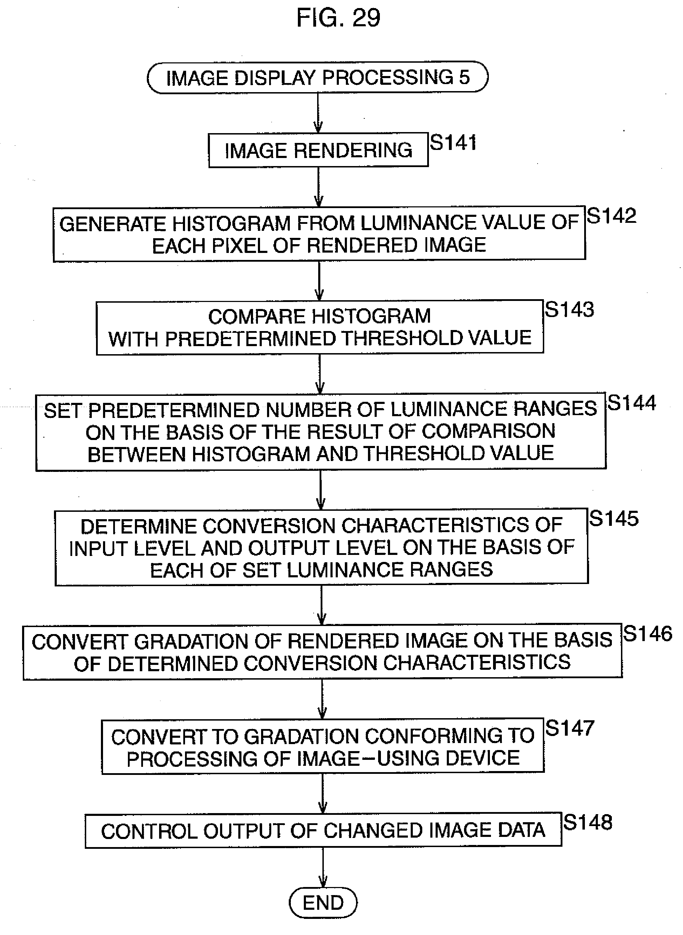

Next, image display processing 5, which is executed by the image processing apparatus 81 in which the image generator 93-7 shown in Fig. 27 is used, is described with reference to the flowchart of Fig. 29.

In step S141, the image capturing section 91 captures an image of an obj ect in accordance with an operation input of a user supplied by the operation input section 92, and supplies thus obtained captured image signal, which has been subjected to logarithm conversion and A/D conversion, to the image generator 93-7. The image generator 93-7 acquires the captured image signal.

In step S142, the histogram analyzing section 251 of the image generator 93-7 creates and analyzes the histogram showing a distribution of the luminance of each pixel within the captured image, on the basis of the image signal supplied by the image capturing section 91, and supplies the result of analysis to the threshold value comparing processing section 252.

In step S143, the threshold value comparing processing section 252 compares a predetermined threshold with the number of pixels corresponding to the threshold value of each input signal on the basis of the result of analyzing the histogram supplied by the histogram analyzing section 251. The threshold value comparing processing section 252 supplies the multistage luminance range setting section 253 with information showing the luminance value obtained by determining, as a result of comparison with the threshold value, that the number of pixels is at least the threshold value as a result of comparing the threshold value with the number of pixels.

In step S144, the multistage luminance range setting section 253 sets a plurality of luminance ranges to which the number of gradation steps larger than that of the ranges other than the set ranges is assigned, on the basis of the luminance value that is supplied from the luminance value comparing processing section 252 and obtained by determining that the number of pixels is the threshold value or more, and then supplies the set luminance ranges to the output level conversion processing section 254.

In step S145, the output level conversion processing section 254 determines the conversion characteristics of the input level and the output level on the basis of the information on the set luminance ranges supplied by the multistage luminance range setting section 253, in basically the same manner as the case described with reference to, for example, Fig. 6, Fig. 7 or Fig. 15.

In step S146, the output level conversion processing section 254 converts the output level of the image signal supplied by the image capturing section 91, on the basis of the conversion characteristics of the input level and output level, so that the number of luminance gradation level steps of an output level signal that is assigned to the plurality of set luminance ranges becomes larger than the number of luminance gradation level steps of an output level signal that is assigned to other luminance areas, and then supplies thus obtained output level to the output controller 95.

In step S147, the output controller 95 converts the supplied image signal into gradations appropriate for the processing executed by the image-using device 83, as described above with reference to Fig. 28.

In step S148, the output controller 95 controls output of the converted image data to the image-using device 83, the image data being obtained by converting the image signal to the gradations appropriate for the processing that can be executed by the image-using device 83, and thereby the processing is ended.

It should be noted here that the processing of outputting the generated image to the image-using device 83 is described. When the generated image is output to the display 82 via the display controller 94 and displayed, basically the same processing is executed in step S141 through step S146, the image signal is supplied to the display controller 94, converted into the gradations that can be processed by the display 82, and then output, and the display is controlled.

By performing this processing, even if the image information required by the user exists in a wide luminance range discretely in the image data captured by the image capturing section 91 using the logarithm conversion type imaging device 102, the processed image can be displayed at the gradation level corresponding to the display 82 by processing the image using the image processing apparatus 81 in which the image generator 93-7 shown in Fig. 27 is used, or even when outputting the image at the gradation level corresponding to the processing executed by the image-using device 83, the image can be displayed so that the user can recognized it, and various types of processing can be executed easily.

The image generator 93-1 through the image generator 93-7 described above set the luminance ranges to which a large number of gradation steps are assigned, on the basis of the captured image. On the other hand, the luminance ranges to which a large number of gradation steps are assigned may be set beforehand or set by an operation that is input by the user. For example, when the angle field of the image to be captured is fixed, or when a luminance area of pixels within the captured image, which corresponds to the image information required by the user, is known previously because the object is exposed to certain light, luminance areas to which a large number of gradation steps are assigned can be determined beforehand. Accordingly, the processing can be performed easily and the costs of the device can be reduced.

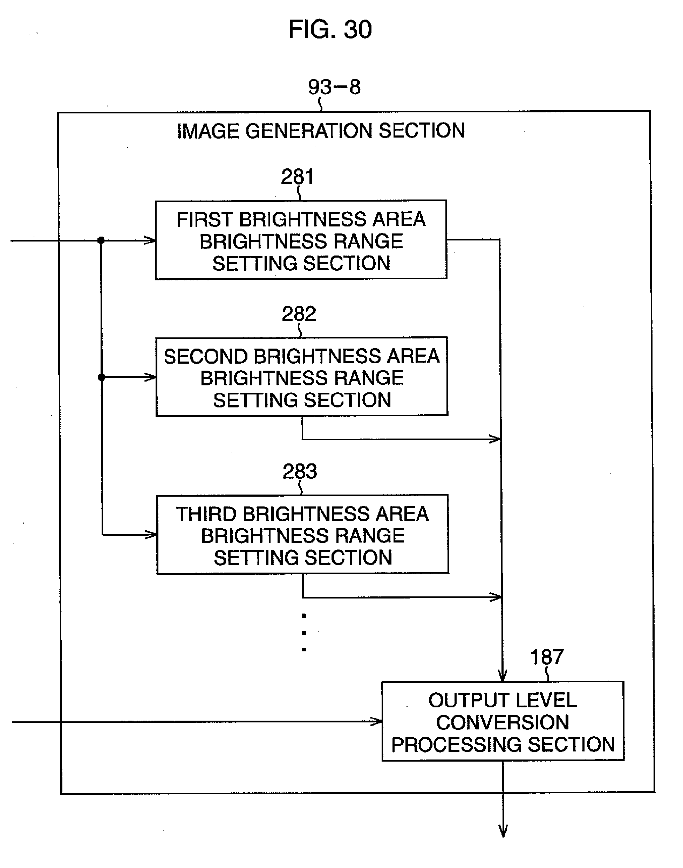

Fig. 30 is a block diagram showing a configuration of an image generator 93-8, which is the eighth example of the image generator 93 shown in Fig. 2. The image generator 93-8 is used when luminance areas to be assigned with a large number of gradation steps are determined beforehand.

A first luminance area luminance range setting section 281 receives an input of a set value of a first luminance area luminance range from the operation input section 92, or acquires a set value of a first luminance area that is stored in an unshown storage section, and supplies the set value of the first luminance range to the output level conversion processing section 187.

A second luminance area luminance range setting section 282 receives an input of a set value of a second luminance area luminance range from the operation input section 92, or acquires a set value of a second luminance area that is stored in the unshown storage section, and supplies the set value of the luminance range of the second luminance range to the output level conversion processing section 187.

A third luminance area luminance range setting section 283 receives an input of a set value of a third luminance area luminance range from the operation input section 92, or acquires a set value of a third luminance area that is stored in the unshown storage section, and supplies the set value of the luminance range of the third luminance range to the output level conversion processing section 187.

The output level conversion processing section 187 executes the processing that is basically the same as that performed in the image generator 93-3 shown in Fig. 20. The output level conversion processing section 187 acquires the image signal supplied by the image capturing section 91, and converts the output level of the acquired image signal on the basis of the plurality of set luminance ranges. Specifically, the output level conversion processing section 187 converts the output level of the image signal supplied by the image capturing section 91, on the basis of the information on the first luminance range, the luminance range of the second luminance area, and the luminance range of the third luminance area that are supplied from the first luminance area luminance range setting section 281, the second luminance area luminance range setting section 282, and the third luminance area luminance range setting section 283 respectively.

Although Fig. 30 shows the first luminance area luminance range setting section 281, second luminance area luminance range setting section 282, and third luminance area luminance range setting section 283 for setting the first through third luminance area luminance ranges, the image generator 93-8 may be provided with other luminance area luminance range setting section so that it can accept the setting of more luminance area luminance ranges.

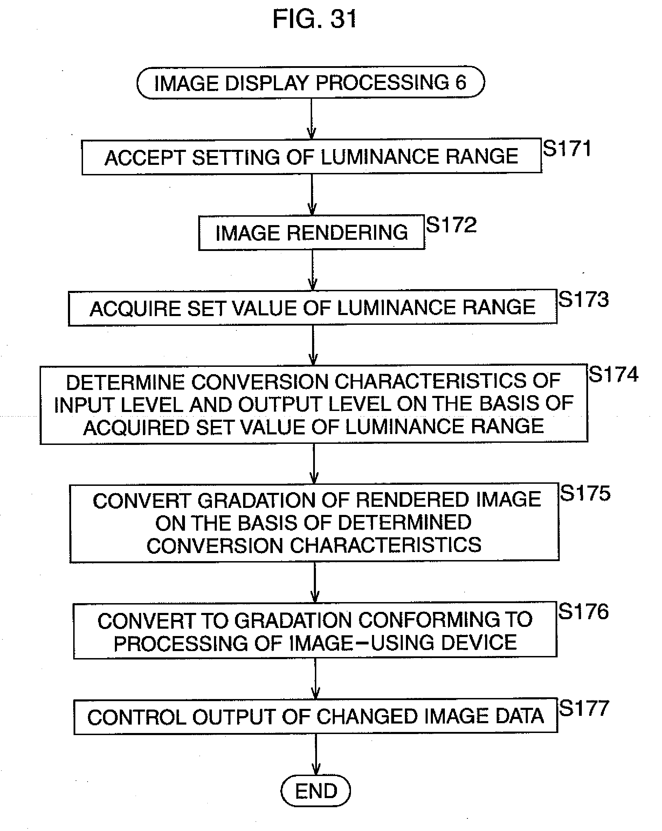

Next, image display processing 6, which is executed by the image processing apparatus 81 in which the image generator 93-8 shown in Fig. 30 is used, is described with reference to the flowchart of Fig. 31.

In step S171, the operation input section 92 receives input of set values of a plurality of luminance ranges from the user, and supplies the input set values to the image generator 93-8.

In step S172, the image capturing section 91 captures an image of an object in accordance with an operation input of a user supplied by the operation input section 92, and supplies thus obtained captured image signal, which has been subjected to logarithm conversion and A/D conversion, to the image generator 93-8. The image generator 93-8 acquires the captured image signal.

In step S173, the first luminance area luminance range setting section 281, second luminance area luminance range setting section 282, and third luminance area luminance range setting section 283 of the image generator 93-8 acquires the set values of the plurality of luminance ranges supplied by the operation input section 92, and supplies the set values to the output level conversion processing section 187.

In step S174, the output level conversion processing section 187 determines the conversion characteristics of the input level and the output level, as described with reference to, for example, Fig. 6, Fig. 7 or Fig. 15, on the basis of the set values of the plurality of luminance ranges supplied by the first luminance area luminance range setting section 281, second luminance area luminance range setting section 282, and third luminance area luminance range setting section 283.

In step S175, the output level conversion processing section 187 converts the gradations of the captured image supplied by the image capturing section 91, on the basis of the conversion characteristics determined in step S174, and supplies the converted gradations to the output controller 95.

In step S176, the output controller 95 converts the supplied image signal into gradations appropriate for the processing executed by the output controller 95, as described above with reference to, for example, Fig. 8 or Fig. 16.

In step S177, the output controller 95 controls output of the converted image data to the image-using device 83, the image data being obtained by converting the image signal to the gradations appropriate for the processing that can be executed by the image-using device 83, and thereby the processing is ended.

It should be noted here that the processing of outputting the generated image to the image-using device 83 is described. When the generated image is output to the display 82 via the display controller 94 and displayed, basically the same processing is executed in step S171 through step S175, the image signal is supplied to the display controller 94, converted into the gradations that can be processed by the display 82, and then output, and the display is controlled.

Moreover, there has been described that the input of the set value of the luminance range of each luminance area is received from the operation input section 92, but when the luminance range of each luminance area is stored in the unshown storage section beforehand, needless to say, the stored set values of the luminance areas are acquired.

By performing this processing, even when the image data captured by the image capturing section 91 using the logarithm conversion type imaging device 102 is output using the gradations corresponding to the image-using device 82, or even when outputting the image data at the gradation level corresponding to an output destination such as an external device, as long as the luminance ranges of pixels that correspond to the image information required by the user are known, the image information that is required by the user can be displayed so that the user can recognize it, by means of simple processing by previously setting the luminance ranges to which a large number of gradation steps are assigned, or image data that is suitable in executing various types of processing including printing, image recognition, recording or transmission can be generated, and the costs of the device can be further reduced.

The histogram showing a distribution of the luminance value of each pixel contained in the captured image may be analyzed in the previously set luminance areas, and the luminance having at least a certain number of pixels may be extracted from the determined luminance ranges, and the luminance areas to which a large number of gradation steps are assigned may be determined based on the result of extraction.

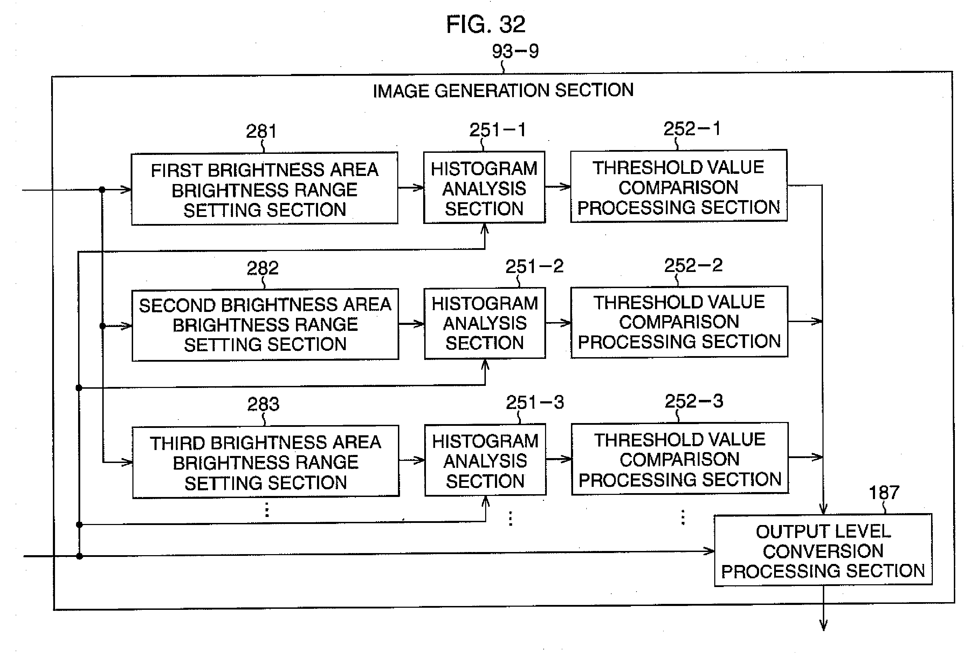

Fig. 32 is a block diagram showing a configuration of an image generator 93-9, which is the ninth example of the image generator 93 shown in Fig. 2. The image generator 93-9 extracts luminance having at least a certain number of pixels from the predetermined luminance ranges, on the basis of the histogram analysis, and determines, on the basis of the result of extraction, luminance ranges to which a large number of gradation steps are assigned.

It should be noted that the same reference numerals are applied to the sections corresponding to those shown in Fig. 27 or Fig. 30, thus the explanations thereof are omitted accordingly.

Specifically, the image generator 93-9 shown in Fig. 32 has the first luminance area luminance range setting section 281 of the image generator 93-8, the second luminance area luminance range setting section 282, the third luminance area luminance range setting section 283, and the output level conversion processing section 187 that are described with reference to Fig. 30. Moreover, the image generator 93-9 is provided with histogram analyzing sections 251-1 through 251-3 and threshold value comparing processing sections 252-1 through 252-3 that can execute the same processing performed by the histogram analyzing section 251 and threshold value comparing processing section 252 provided in the image generator 93-7 described in Fig. 27, in order to analyze the histogram and performs comparison with a predetermined threshold on the basis of the set value of each luminance range that is output.

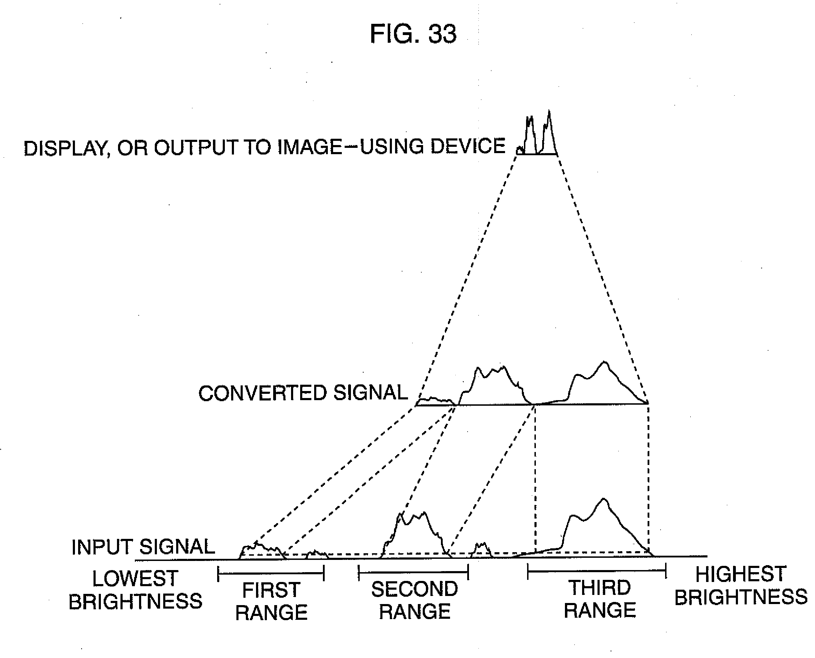

Specifically, as shown in Fig. 33, in the image generator 93-9, the histogram analyzing sections 251-1 through 251-3 analyze the luminance value of each pixel contained in the captured image in each of the first range set by the first luminance area luminance range setting section 281, second range set by the second luminance area luminance range setting section 282, and third range set by the third luminance area luminance range setting section 283, and the threshold value comparing processing sections 252-1 through 252-3 compare the pixels with the threshold value, thereby extracting luminance having pixels, the number of which corresponds to the predetermined threshold value or more.

Specifically, in the luminance ranges other than the first, second and third ranges, even when there exists luminance having pixels, the number of which is larger than the threshold value, the luminance is not set as the luminance range to which the number of gradation steps is assigned preferentially.

Then, on the basis of the extracted luminance, in the output level conversion processing section 187, the number of gradation steps is preferentially assigned to the pixels within the range, and the image signal is converted into continuous luminance gradations in a state in which the luminance gradation width of each of the set luminance ranges is provided sufficiently. The converted signal is then subjected to gradation conversion (the number of gradations is compressed) in accordance with the conditions of display or printing out by the display controller 94 or output controller 95, and is then displayed or output so that various types of processing including printing out, image recognition, recording and transmission are performed.

For example, when the angle field of the image to be captured is fixed, or when, for example, a luminance area of pixels corresponding to the image information required by the user is changed in several patterns according to time although the luminance area of pixels within the captured image, which corresponds to the image information required by the user, is known previously because the object is exposed to certain light, the amount of information varies between the daytime and the evening, such that the luminance area has more information during the daytime but has almost no information during the evening, or the luminance area has more information during the evening and the night time but has almost no information during the morning and daytime.

In such a case, by comparing the histogram analysis with the threshold value even if all luminance areas that might contain the image information required by the user are previously set, it becomes possible to prevent the number of gradation steps from being preferentially assigned to the luminance areas that do not have the required information.

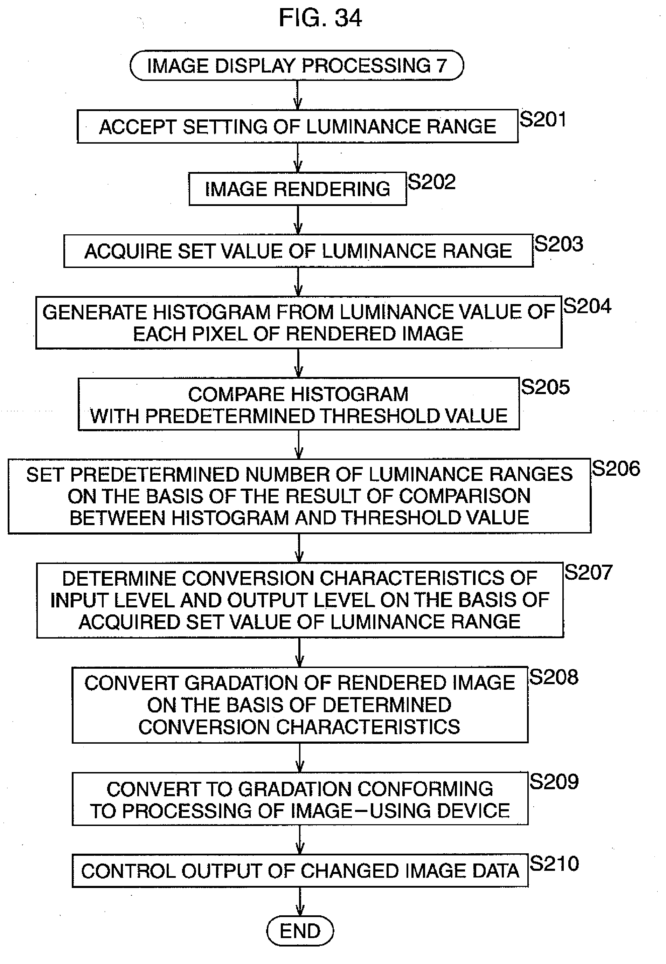

Next, image display processing 7, which is executed by the image processing apparatus 81 in which the image generator 93-9 shown in Fig. 32 is used, is described with reference to the flowchart of Fig. 34.

In step S201, the operation input section 92 receives input of set values of a plurality of luminance ranges from the user, and supplies the input set values to the image generator 93-9. The image generator 93-9 acquires the captured image signal.

In step S202, the image capturing section 91 captures an image of an object in accordance with an operation input of a user supplied by the operation input section 92, and supplies thus obtained captured image signal, which has been subjected to logarithm conversion and A/D conversion, to the image generator 93-9.

In step S203, the first luminance area luminance range setting section 281, second luminance area luminance range setting section 282, and third luminance area luminance range setting section 283 of the image generator 93-9 acquires the set values of the plurality of luminance ranges supplied by the operation input section 92, and supplies the set values to the histogram analyzing sections 251-1 through 251-3.

In step S204, the histogram analyzing sections 251-1 through 251-3 create and analyze the histogram showing a distribution of the luminance values within the first through third ranges of the captured image, on the basis of the image signal supplied by the image capturing section 91, as described with reference to Fig. 33, and supply the result of analysis to the threshold value comparing processing sections 252-1 through 252-3.

In step S205, the threshold value comparing processing sections 252-1 through 252-3 compare the number of pixels corresponding to each luminance value of an input signal with a predetermined threshold value on the basis of the result of analyzing the histogram within the first through third ranges, the result being supplied from the histogram analyzing sections 251-1 through 251-3. The threshold value comparing processing sections 252-1 through 252-3 supply the output level conversion processing section 187 with the luminance value obtained by determining, as a result of comparison with the threshold value, that the number of pixels is at least the threshold value.

In step S206, the output level conversion processing section 187 sets a luminance range to which a large number of gradation steps are assigned, on the basis of the luminance value supplied from the threshold value comparing processing sections 252-1 through 252-3.

In step S207, the output level conversion processing section 187 determines the conversion characteristics of the input level and output level as described using, for example, Fig. 6, Fig. 7, or Fig. 15.

In step S208, the output level conversion processing section 187 converts the gradations of the captured image supplied from the image capturing section 91 on the basis of the conversion characteristics determined in step S74, and supplies the converted gradations to the output controller 95.

In step S209, the output controller 95 converts the supplied image signal into gradations appropriate for the processing executed by the image-using device 83, as described above with reference to, for example, Fig. 33.

In step S210, the output controller 95 controls output of the converted image data to the image-using device 83, the image data being obtained by converting the image signal to the gradations appropriate for the processing that can be executed by the image-using device 83, and thereby the processing is ended.

It should be noted here that the processing of outputting the generated image to the image-using device 83 is described. When the generated image is output to the display 82 via the display controller 94 and displayed, basically the same processing is executed in step S201 through step S208, the image signal is supplied to the display controller 94, converted into the gradations that can be processed by the display 82, and then output, and the display is controlled.

Moreover, there has been described that the input of the set value of the luminance range of each luminance area is received from the operation input section 92, but when the luminance range of each luminance area is stored in the unshown storage section beforehand, needless to say, the stored set values of the luminance areas are acquired.

When, for example, a luminance area of pixels corresponding to the image information required by the user is changed in several patterns according to time, that is, even when the amount of information varies between the daytime and the evening, such that the luminance area has more information during the daytime but has almost no information during the evening, or the luminance area has more information during the evening and the night time but has almost no information during the morning and daytime, it becomes possible to prevent the number of gradation steps from being preferentially assigned to the luminance areas that do not have the required information, by previously setting all luminance areas that might contain the image information required by the user, to compare the histogram analysis with the threshold value.

As described above, in the image processing apparatus 81 using the image generators 93-1 through 93-9, even if the image information required by the user exists in a wide luminance range in the image data captured by the image capturing section 91 using the logarithm conversion type imaging device 102, such an image can be displayed at gradation corresponding to the display 82, or the image can be displayed so that the information required by the user (e.g., a black object in a dark area, a bright section existing in a field where dark sections exist) can be recognized, when the image is output at the gradation corresponding to an output destination and other external device, and it is also possible to create image data that is suitable in various types of processing including printing, image recognition, storage and transmission.

Specifically, by performing the above-described image processing, it becomes possible to obtain image data in which the luminance of the displayed or printed out image is compressed so that the user can easily view the image. The image data obtained in this manner is wide dynamic range image data in which the luminance is compressed, and can be handled easily by the image-using device 83. The luminance compression means reducing the number of gradations (number of gradation steps) of the luminance value of the image data.

When the number of luminance gradation steps is reduced at a certain rate in the entire luminance areas, the concentration difference in the displayed or printed out image is lost, or it becomes difficult to carry out general image processing such as binarization and detection of a predetermined object. However, gradations are assigned to the predetermined luminance range than the other luminance ranges, the predetermined luminance range being set in predetermined processing, so that the gradation resolution of the set luminance range can be maintained, and no or almost no gradation steps are assigned to the luminance ranges that are not set, so that the number of gradations is reduced in the entire image data. Therefore, the image conversion processing to which the present invention is applied is executed, whereby, for example, a luminance area section with sufficient contrast difference that the user should recognize can be displayed or printed out, or a binarized threshold can be easily determined or a predetermined object can easily be detected based on the image, when various types of image processing are performed.

Moreover, the image-using device 83 is a device that executes processing using an image, such as image printing processing, image recognition processing, image recording processing, and image communication processing, as described above.

The wide dynamic range image data having the compressed luminance, which is obtained in the manner described above, contains information used for recognizing a target content, out of the original wide dynamic range image, and a significant amount of data of the image data is deleted. Therefore, in the processing that does not require luminance information matching one-on-one with luminance of the object that has been captured for each pixel, the wide dynamic range image data having the compressed luminance, which is obtained in the manner described above, can be used.

For example, the wide dynamic range image in which 14 bits of data are A/D converted includes an extremely wide luminance area, thus the processing executed by the conventional image processing apparatus may not be able to respond to such an image. Specifically, when, for example, laplacian conversion for performing differential processing is performed, only a noise-like result is obtained, or the number of candidates for luminance, which can be a threshold value of binarization processing, becomes extremely large, thus the throughput increases explosively. Similarly, in most of the other image processing methods, the characteristics of a wide dynamic range image are different from those of an image created by means of the conventional processing, thus a significant correction needs to be made in the processing as long as the wide dynamic range image is used, even when achieving the same goal as the conventional image processing.

Also, when, for example, an image is recorded or transmitted in order to execute processing so that at least the detail of the image can be recognized, it is not efficient to use wide dynamic range image data because it is an extremely enormous amount of data containing unnecessary information.

On the other hand, according to the present invention, even when objects to be processed are dispersed in separated luminance areas, luminance compression is carried out so that an image that does not bring discomfort to the human eye is obtained as with the case where a narrow luminance range is captured using a conventional imaging device, thus, for example, the processing performed by a conventional image recognition device can be used.

Moreover, according to the present invention, luminance compression is performed in a state in which the details of the image can be recognized, thus an enormous amount of data containing unnecessary information can be prevented from being recorded or transmitted.

As described with reference to Fig. 6, Fig. 7, or Fig. 15, the image data compression rate is determined by a slope of a corresponding curve of the output signal level corresponding to the input signal level that is assigned to the selected luminance range. Therefore, the slope of the corresponding curve of the output signal level with respect to the input signal level, i.e., the conversion characteristics of the input level and output level, may be determined in accordance with the number of gradation steps required by the image-using device 83. By making the slopes of the conversion characteristics of the input level and output level gentle, the compression rate can be set high, and by making the slops of the conversion characteristics sharp, the compression rate can be set low.

If the image-using device 83 is a detection device that captures an image of, for example, the front part of a traveling vehicle and executes processing of detecting a white line of the road, or a device that uses an image similar to a binarized image, it is preferred that the compression rate be set high. However, when a certain degree of gradation is necessary for recording an image, it is preferred that a required number of gradation steps be assigned.

If the image-using device 83 is, for example, a road state detection device that captures an image of the front part of a traveling vehicle and detects whether the road surface is in a dried state, wet state, frozen state, or snowpacked state, a wide luminance range is selected for a luminance range corresponding to the road surface, and relatively narrow luminance rages are selected for other luminance ranges, whereby the compression rate can be set high without reducing the amount of information on the road surface.

If the image using device 83 is, for example, a nigh-vision recording device (night-time front image display device), the compression rate can be set high without reducing the quality of an important luminance area, by reducing the gradations of a bright area with respect to a dark area.

Also, for example, when the image-capturing conditions for the daytime and the nighttime can be determined using other means such as a sensor, it is desired that different patterns of luminance range be set in accordance with the condition of a target, in the image processing apparatus 81. For example, the luminance compression rate can be set high by assigning more luminance to an area that is relatively bright during the daytime, and averagely assigning more luminance to low-luminance area, medium-luminance area, and high-luminance area during the nighttime.

In the image using device 83 in which the luminance compression rate is increased as much as possible, it is desired to use the methods described with reference to Fig. 6A, Fig. 7A, or Fig. 15A. On the other hand, in the case of the image using device 83 that executes processing where the gradations of the luminance area other than the selected luminance area is required, it is desired to use the methods described with reference to Fig. 6B, Fig. 7B, or Fig. 15B. In the case of the image using device 83 executing processing that influences the sharp slop of the luminance conversion curve, it is desired to use the methods shown in Fig. 6C, Fig. 7C, or Fig. 15C.

Moreover, when the wide dynamic range image in which luminance compression is performed is used in the image using device 83 executing the processing that is influenced by density distributions, it is desired that the conversion characteristics of the input level and output level in the main area luminance range shown in A, B, C of Fig. 6 and Fig. 7 be the same as those of the second luminance range shown in the same drawings. The reason is to match the luminance distribution of the inside of the tunnel with the luminance distribution of the outside of the tunnel in the image of the tunnel shown in Fig. 12, for example. Similarly, in the case in which the wide dynamic range image that is subjected to luminance compression is used in the image using device 83 executing the processing that is influenced by the density distributions, it is desired that the slops of the conversion characteristics of the input level and output level of the main luminance area, second luminance area, and third luminance area be all the same in Figs. 15A, 15B and 15C. On the other hand, in the case of the image using device 83 executing the processing that is not influenced by the luminance distribution, the compression rate can be set high by changing the slopes of the conversion characteristics of the input level and output level for each area, according to need.

If there is an area in which the reflectance and color of an object to be captured are already known, and if the luminance distribution range of a surrounding area can be estimated beforehand, the luminance compression rate can be increased by determining the luminance range accordingly. For example, when capturing an image of the front part by using an in-vehicle camera, the road surface is displayed in the mid-lower part of the screen. Therefore, a required luminance range can be set accurately by determining the top and bottom luminance ranges on the basis of the luminance of the road surface, whereby the compression rate can be increased without losing the necessary luminance range.

As described above, for example, the wide dynamic range image in which 14 bits of data are A/D converted includes an extremely wide luminance area, thus the processing executed by the conventional image processing apparatus may not be able to respond to such an image. Specifically, when, for example, laplacian conversion for performing differential processing is performed, only a noise-like result is obtained, or the number of candidates for luminance, which can be a threshold value of binarization processing, becomes extremely large, thus the throughput increases explosively. Similarly, in most of the other image processing methods, the characteristics of a wide dynamic range image are different from those of an image created by means of the conventional processing, thus a significant correction needs to be made in the processing as long as the wide dynamic range image is used, even when achieving the same goal as the conventional image processing.

Also, when, for example, an image is recorded or transmitted in order to execute processing so that at least the detail of the image can be recognized, it is not efficient to use wide dynamic range image data because it is an extremely enormous amount of data containing unnecessary information.

In the above-described processing, even when objects to be processed are dispersed in separated luminance areas, the luminance of the A/D-converted wide dynamic range image is compressed, thus the conventional image recognition device can be applied directly using the processing, and an image that does not bring discomfort to the human eye is obtained as in the case where a narrow luminance range is captured using the conventional imaging device.

On the other hand, when A/D-converting the captured wide dynamic range image data, the gradations for A/D conversion are assigned to the required luminance ranges without assigning them uniformly to the entire luminance ranges of the captured wide dynamic range image data. Accordingly, an image that does not bring discomfort to the human eye is obtained as in the case where a narrow luminance range is captured using the conventional imaging device. In this manner, for example, the above-described effects of applying the conventional image recognition device by means of the processing and of preventing the enormous amount of data containing unnecessary information from being recorded or transmitted.

In other words, when using an A/D conversion element having a small number of bits for gradation assignment to perform A/D conversion on the captured wide dynamic range image, uniformly assigning the gradations for A/D conversion to the entire luminance ranges of the captured wide dynamic range image data will produce an unnatural and uncomfortable image.

For example, if a predetermined luminance range is subjected to A/D conversion uniformly by a 12-bit A/D converter, image data having 4096 gradations can be obtained. As described using Fig. 4, the luminance range that can be captured by a CCD imager or CMOS imaging device is extremely narrow, compared to the luminance range captured by the logarithm conversion type imaging device used in the present invention, hence the gradations of the ranges other than the capturable luminance range are not obtained at all. Therefore, even if the luminance range is expressed at the 4096 gradations, an image that does not bring discomfort to the human eye can be obtained. However, the logarithm conversion type imaging device used in the present invention can capture luminance ranges including a luminance range of darkness in the night and a luminance range of direct sunlight as described with reference to Fig. 4, thus an unnatural and uncomfortable image is generated even if such wide luminance range is expressed at the 4096 gradations.

The logarithm conversion type imaging device used in the present invention is configured to A/D-convert a signal whose luminance level obtained by capturing is logarithmically converted. Therefore, the image of a range illuminated by a single light source (sunlight or one street lamp, for example) is, in most cases, distributed in luminance ranges that account for 1/16 of the entire image. On the other hand, for example, since the color of a road surface is gray, the abovementioned image is distributed in a relatively dark area within a narrow luminance range accounting for 1/16 of the entire image. When, for example, the luminance range of the road surface is a 1/2-luminance range of the narrow luminance range accounting for 1/16 of the entire image, the number of gradation steps for A/D conversion that is assigned to the road surface section is 4096/(16 * 2) = 128. To consider that approximately 256 gradations are required to visually grasp the condition of a target accurately, 128 gradations are not sufficient that unnatural part appears. Specifically, when recognizing the paint, such as the white line, stop line or crosswalk on the road surface, by means of image processing, a slight luminance difference becomes as large as 1/128 due to a quantization error, and then the image is output, thus the risk of erroneous recognition increases.

Hereinafter, there is described an image processing apparatus that sets the gradation assignment for A/D conversion so as to sufficiently assign the gradations of necessary luminance ranges, instead of assigning them uniformly to the entire luminance range of the captured wide dynamic range image data, when A/D-converting the captured wide dynamic range image data so that an image that does not bring discomfort to the human eye can be obtained, that the conventional image recognition device can be applied directly using the processing, and that an enormous amount of data containing unnecessary information can be prevented from being recorded or transmitted.

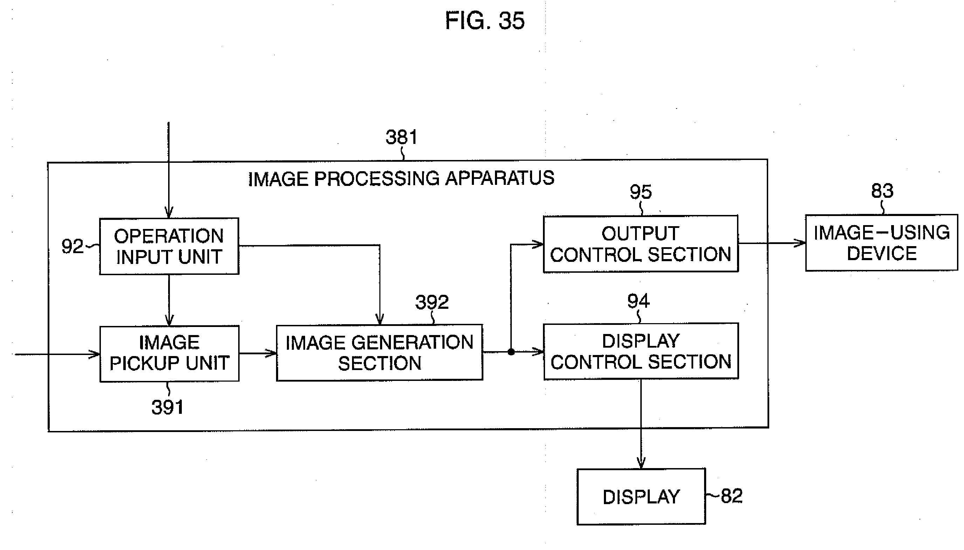

Fig. 35 is a block diagram showing a configuration of an image processing apparatus 381, which sets the gradation assignment for A/D conversion so as to sufficiently assign the gradations of necessary luminance ranges, instead of assigning them uniformly to the entire luminance range of a captured wide dynamic range image data, when A/D-converting the captured wide dynamic range image data.

It should be noted that the same reference numerals are applied to the sections corresponding to those shown in Fig. 2, thus the explanations thereof are omitted accordingly. Specifically, the image processing apparatus 381 shown in Fig. 35 is provided with an image capturing section 391 in place of the image capturing section 91, and an image generator 392 in place of the image generator 93, but has basically the same configuration as the image processing apparatus 81 described with reference to Fig. 2.

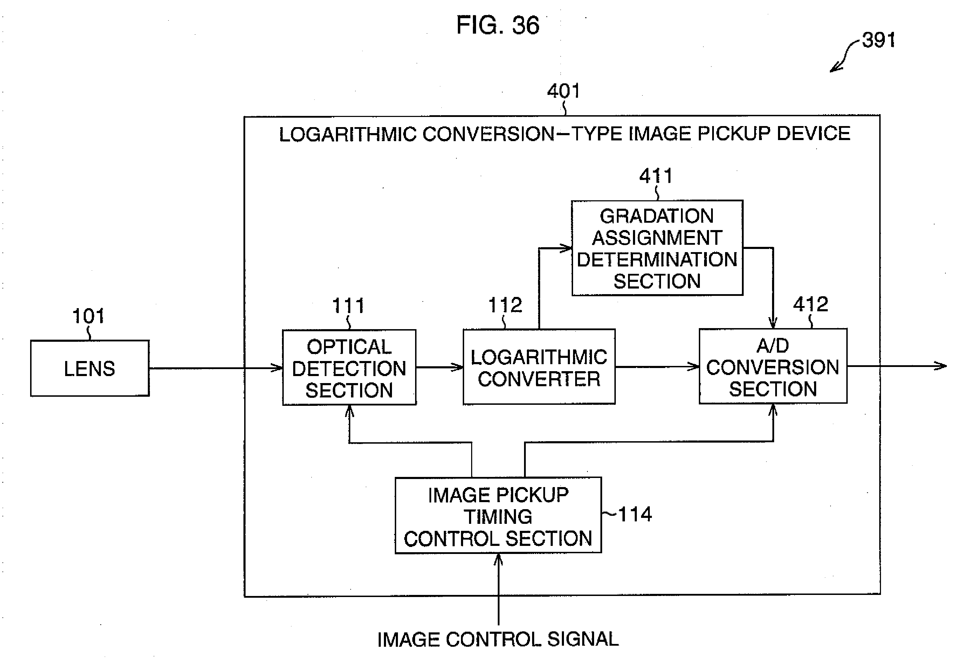

The image capturing section 391 captures an image of an object in accordance with an operation input by a user, which is supplied from the operation input section 92, determines gradation assignment for each luminance range on the basis of the captured image signal or operation input of the user to perform A/D conversion, and supplies thus obtained image signal to the image generator 392. The detail of the image capturing section 391 will be described hereinafter with reference to Fig. 36.

The operation input section 92 is constituted by, for example, buttons such as a release button, and input devices such as an operation key and a touch panel, receives an operation input by the user, and supplies a command received from the user to the image capturing section 391 and the image generator 392. Moreover, when the operation input section 92 receives, from the user, input of a predetermined set value that is related to the gradation assignment for the A/D conversion processing executed by the image capturing section 391, the operation input section 92 supplies the set value to the image capturing section 391.

The image generator 392 executes processing of converting an image signal supplied from the image capturing section 391 to an image signal appropriate for display or printing out, and supplies the converted image signal to the display controller 94 or the output controller 95. Here, the image generator 392 does not execute luminance range setting processing or output level conversion processing described with reference to Fig. 5 through Fig. 61, but executes only image signal generation processing that has been conventionally performed.

Specifically, when, for example, the image generator 392 receives range setting of an image to be displayed or printed out from the operation input section 92, the image generator 392 executes clipping out of an image area, or when the image generator 392 receives operation input for adjusting the entire contrast, the image generator 392 adjusts the entire contrast of the image, but does not perform processing of changing the gradation assignment for A/D conversion processing executed by the image capturing section 391.

The display controller 94 conducts processing of converting the processed image signal supplied from the image generator 392 to a resolution or a number of gradations of the display 82, and supplies the processed signal to the display 82.

The output controller 95 conducts processing of converting the processed image signal supplied from the image generator 392 to a resolution or a number of gradations that can be processed by an image-using device 83, and supplies the processed signal to the image-using device 83.

The display 82 receives, for example, input of a display image signal supplied from the display controller 94, and displays an image (static image or a dynamic image consisting of a plurality of frames).

The image-using device 83 receives input of an image signal supplied from the output controller 95 and executes predetermined processing. The image-using device 83 can be caused to use various information processing devices, such as an image printing device, an image recognition device, and image recording device and an image communication device, for executing processing using an image.

As in the case described above, it is preferred that the image signal generated by the image generator 392 be used by the image-using device 83 that executes processing where, particularly, luminance of an object to be imaged and luminance data of image data are not required to match one-on-one with each other (the luminance of the object to be imaged and the luminance data of the image data match each other linearly).

The examples of the processing where luminance of an object to be imaged and luminance data of image data are not required to match one-on-one with each other include printing-out operation, recording processing, processing of recognizing a predetermined object within an image, processing of detecting an edge section or a linear section within the image, binarization processing, and transmission processing of transmitting the image data to another device that executes these processes.

Fig. 36 is a block diagram showing a further detailed configuration example of the image capturing section 391 of the image processing apparatus 381 shown in Fig. 35.

It should be noted that the same reference numerals are applied to the sections corresponding to those shown in Fig. 3, thus the explanations thereof are omitted accordingly. Specifically, the image capturing section 391 is provided with a logarithm conversion type imaging device 401 in place of the logarithm conversion type imaging device 102, but has basically the same configuration as the image capturing section 91 shown in Fig. 3. Also, the logarithm conversion type imaging device 401 is newly provided with a gradation assignment determination section 411 and is provided with an A/D converter 412 in place of the A/D converter 113, but has basically the same configuration as the logarithm conversion type imaging device 102 shown in Fig. 3.

The logarithm conversion type imaging device 401 is, for example, an HDRC, and is constituted by the light detector 111, logarithm converter 112, gradation assignment determination section 411, A/D converter 412, and image capturing timing controller 114.

The light emitted from the object to be captured by the image capturing section 391 (or light reflected from the object) enters the lens 101, and is focused onto an unshown light detecting surface of the light detector 111 of the logarithm conversion type imaging device 401. The light detector 111 converts the light of the object, which is focused by the lens 101, into an electric charge in accordance with the brightness (illuminance) of the incident light, and accumulates thus obtained electric charge. The light detector 111 supplies the accumulated electric charge to the logarithm converter 112 in synchronization with a control signal supplied by the image capturing timing controller 114. The logarithm converter 112 generates an analog electronic signal obtained by converting the electric charge supplied by the light detector 111 into a voltage value that is substantially proportional to a logarithm (logarithm of the amount of light from the object) of the number of electric charges (intensity of current), for each pixel by using the subthreshold characteristics of the MOSFETs. The logarithm converter 112 supplies the generated analog electronic signal to the A/D converter 412 and gradation assignment determination section 411.

The gradation assignment determination section 411 analyzes the analog electronic signal supplied from the logarithm converter 112, and determines gradation assignment for A/D conversion executed by the A/D converter 412.

Specifically, the gradation assignment determination section 411 detects a main luminance range (luminance area) in a luminance distribution of an input image, and assigns the number of gradation steps for A/D conversion so that the image within the luminance range can be recognized sufficiently. There is one or a plurality of luminance range setting patterns, and there is also a case in which no gradation steps are assigned to an area between a plurality of areas, and a case in which rough gradations are obtained compared to a predetermined luminance area. Moreover, the luminance range to be set may be selected automatically from an image to be captured or may be set by inputting a user operation.

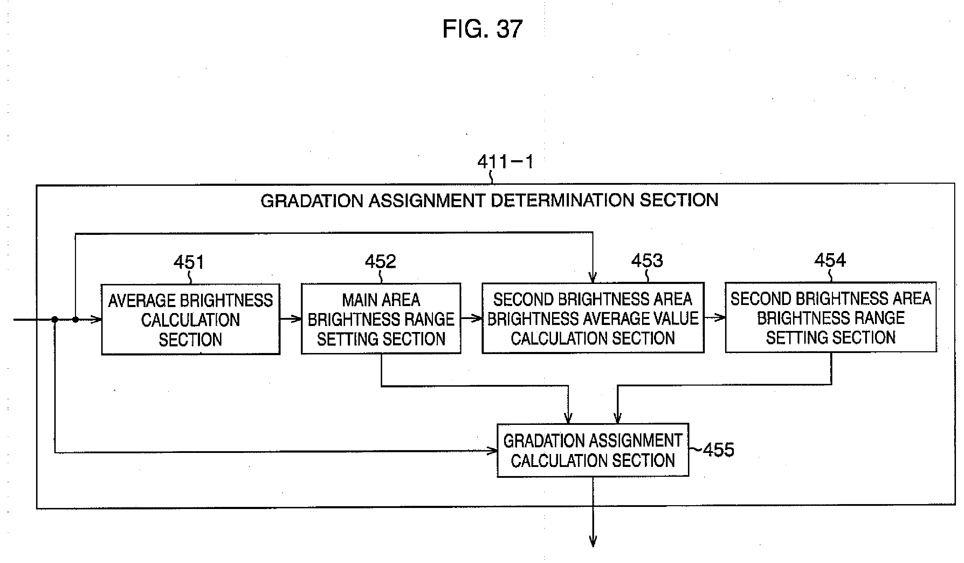

The detail of the gradation assignment determination section 411 is described hereinafter with reference to Fig. 37 through Fig. 61.

The A/D converter 412 A/D-converts the analog electronic signal to digital image data in synchronization with the control signal supplied by the image capturing timing controller 114. At this moment, the A/D converter 412 executes A/D conversion in accordance with the gradation assignment determined by the gradation assignment determination section 411. The A/D converter 412 supplies thus obtained digital image data to the image processing apparatus 81.

In this manner, the image capturing section 391 outputs the A/D converted digital image data on the basis of the gradations that are not proportional to the brightness of the light of the object entering the light detector 111 (incident light quantity) and are assigned by the gradation assignment determination section 411.

Fig. 37 is a block diagram showing a configuration of a gradation assignment determination section 411-1, which is the first example of the configuration of the gradation assignment determination section 411 shown in Fig. 36.

An average luminance calculation section 451 acquires an analog image signal supplied by the logarithm converter 112, calculates an average luminance of this image signal, and supplies the result of calculating the average luminance to a main area luminance range setting section 452.

The main area luminance range setting section 452 sets a luminance range of the main area on the basis of the average luminance of the image signal supplied from the average luminance calculation section 451, and supplies the set luminance range of the main area to a gradation assignment calculation section 455 and a second luminance area luminance average value calculation section 453.

The main area luminance range setting section 452 may, for example, set the range of predetermined luminance having mainly the average luminance of the image signal, as the luminance range of the main area, or may sequentially select, from among the pixels having the average luminance of the image signal, and in the order of pixels having a luminance value proximate to the average luminance, a predetermined number of pixels, and set the selected pixels as the luminance range of the main area.

The second luminance area luminance average value calculation section 453 calculates the average luminance of the pixels having a luminance range higher than the luminance range of the main area that is set by the main area luminance range setting section 452, from the image signal supplied by the logarithm converter 112, and supplies the result of calculation to a second luminance area luminance range setting section 454.

The second luminance area luminance range setting section 454 sets a luminance range of a second luminance area on the basis of the average luminance of the pixels having a luminance range higher than the luminance range of the main area, the average luminance being supplied from the second luminance area luminance average value calculation section 453, and supplies the set luminance range of the second luminance area to the gradation assignment calculation section 455.

The second luminance area luminance range setting section 454 may, for example, set the range of predetermined luminance having mainly the average luminance of the pixels having a luminance range higher than the luminance range of the main area, as the luminance range of the second luminance area, or may sequentially select, from among the pixels having the average luminance of the pixels having the luminance range higher than the luminance range of the main area, and in the order of pixels having a luminance value proximate to the average luminance, a predetermined number of pixels, and set the selected pixels as the luminance range of the second luminance area.

The gradation assignment calculation section 455 acquires the image signal supplied by the logarithm converter 112, and determines how many gradation steps to assign to which luminance range when A/D conversion is performed by the A/D converter 412, on the basis of the information on the luminance range of the main area and the luminance range of the second luminance area that are supplied from the main area luminance range setting section 452 and the second luminance area luminance average value calculation section 453 respectively.

Specifically, the gradation assignment calculation section 455 performs setting such that assignment of the number of gradation steps for A/D conversion with respect to the level of a luminance signal to be input is different from assignment of the same in the luminance ranges set as the main area and second luminance area and from assignment in the other ranges. Specifically, the gradation assignment calculation section 455 determines gradation assignment so that more gradation steps are assigned to the luminance ranges set as the main area and the second luminance area, thus the A/D converter 412 executes A/D conversion processing such that the number of gradations of the pixels in the corresponding luminance ranges is increased. Consequently, the sections having the luminance ranges corresponding to the main area and the second luminance area in an image to be displayed or printed out can be recognized well by the user.

The gradation assignment calculation section 455, for example, divides and assigns the number of all gradation steps to the luminance ranges of the main area and the luminance of the second luminance area, and does not assign the number of gradation steps for A/D conversion to the other ranges, i.e., a luminance range lower than that of the main area, a luminance range between the main area and the second luminance area, and a luminance range higher than that of the second luminance area.

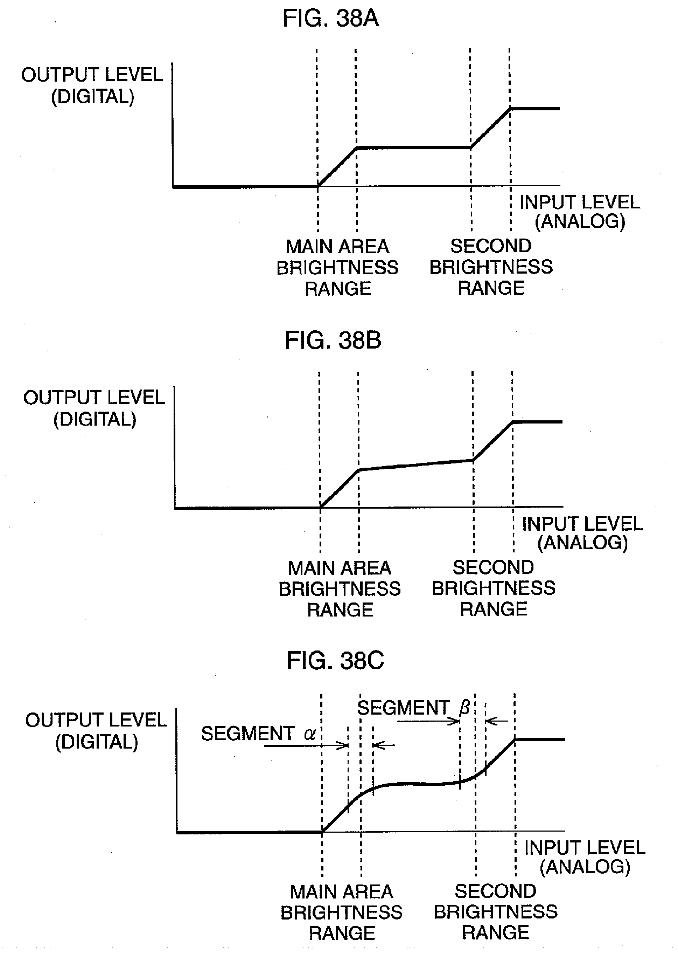

In this manner, when the number of gradation steps for A/D conversion is assigned, in a digital signal to be A/D-converted and then output, with respect to an analog signal to be input to the A/D converter 412, the output level of the pixels in which the input level of the luminance is lower than the luminance range of the main area is 0 (that is, black), as shown in Fig. 38A. A predetermined number of gradation steps are assigned to the pixels within the luminance range of the main area in accordance with the input level, and A/D conversion is executed. Also, the pixels in the luminance range between the main area and the second luminance area are output as digital signals having the same gradation as the maximum value of the output level assigned to the luminance range of the main area, regardless of the input level. The number of gradation steps between the maximum value of the entire gradations and the maximum value of the gradations assigned to the luminance range of the main area are assigned to the pixels within the second luminance area at the number of steps that is the same as or substantially the same as that of the main area, in accordance with the input level, and A/D conversion is executed. The pixels having luminance higher than that of the second luminance area are output as digital signals of the maximum value of the gradations assigned to the second luminance area, that is, the maximum value of the entire gradations (maximum output level), regardless of the input level.

Moreover, the gradation assignment calculation section 455 can assign, for example, a predetermined number of steps of the of the total gradation steps for A/D conversion to the main area and the second luminance area. To the luminance range of the main area and the second luminance area, the gradation assignment calculation section 455 can assign the number of steps smaller than the number of steps assigned to the main area or second luminance area (in other words, a gradation width narrower than the main area luminance range or the second luminance range). The gradation assignment calculation section 455 does not assign the number of steps for A/D conversion to the luminance range lower than that of the main area or to the luminance range higher than that of the second luminance area.

In this manner, when the number of gradation steps for A/D conversion is assigned, in the pixels having luminance lower than the luminance range of the main area, the output value of a digital signal to be A/D-converted and output is 0 with respect to an analog signal to be input by the A/D converter 412, as shown in, for example, Fig. 38B. A predetermined gradation output level is assigned to the pixels within the luminance range of the main area in accordance with the input level, and A/D conversion is executed. Also, the gradations having the number of steps smaller than the number of steps assigned to the luminance range of the main area are assigned to the pixels within the luminance range between the main area and the second luminance area, and A/D conversion is executed. The gradation steps between the maximum value of the entire gradations and the maximum value of the gradations assigned to the luminance range between the main area and the second luminance area are assigned to the pixels within the second luminance area at the number of steps that is the same as or substantially the same as that of the main area, in accordance with the input level, and A/D conversion is executed. The pixels having luminance higher than that of the second luminance area are output as the maximum value of the gradations assigned to the second luminance area, that is, a digital signal of the maximum output level, regardless of the input level.

The gradation assignment calculation section 455 takes a predetermined luminance range having mainly an upper limit value of the main area luminance as a section α, a predetermined luminance range having mainly a lower limit value of the second luminance area luminance as a section β, assigns a predetermined number of gradation steps out of the number of gradation steps for A/D conversion to the pixels within a section other than the sections α and β in the main area or second luminance area, and assigns, to the section α or the section β, the number of gradation steps smaller than the number of gradation steps assigned to the section other than the sections α and β in the main area and second luminance area, but does not assign the number of gradation steps of the output level to the pixels having luminance lower than that of the main area and luminance higher than that of the second luminance area. It should be noted here that the gradation assignment calculation section 455 assigns or does not assign, to the pixels within a luminance range that does not belong to the section α and section β out of the luminance ranges between the main area and the second luminance area, the number of gradation steps smaller than the number of gradation steps of the output level that is assigned to the section α or the section β.

In this manner, when the number of gradation steps for A/D conversion is assigned, in the pixels having luminance lower than the luminance range of the main area, the output value of a digital signal to be A/D-converted and output is 0 with respect to an analog signal to be input by the A/D converter 412, as shown in, for example, Fig. 38C. A predetermined number of gradation steps are assigned to the pixels within the luminance range of the main area and within a section other than the section α in accordance with the input level, and A/D conversion is executed. Also, a predetermined gradation that is larger than the maximum value of the gradations assigned to the section other than the section α of the main area is assigned to the pixels within the section α at the number of steps smaller than the number of steps assigned to the section other than the section α of the main area, and A/D conversion is executed. To the pixels that do not belong to the section α and section β in the luminance range between the main area and the second luminance area, the number of gradation step is assigned at the number of steps smaller than the number of steps assigned to the section α, or the same gradation as the maximum value assigned to the section α is assigned regardless of the input level.

Furthermore, a predetermined gradation level that is larger than the maximum value of the gradations in the luminance range lower than the section β is assigned to the pixels of the section β at the number of steps smaller than the number of steps assigned to the section other than the section α of the main area, and at the number of steps that is the same as or substantially the same as that of the section α, and A/D conversion is executed. The gradation steps between the entire maximum output level and the maximum value of the gradations assigned to the section β are assigned to the pixels of the section other than the section β within the luminance range of the second luminance area in accordance with the input level. In other words, the number of gradation steps that is the same as or substantially the same as that of the section other than the section α in the main area, i.e., the number of gradation steps that is larger than the number of gradation steps in the section α and section β, is assigned to the pixels in the section other than the section β within the luminance range of the second luminance area. The pixels having luminance higher than that of the second luminance area are output as the maximum value of the gradations assigned to the second luminance area, i.e., a digital signal of the maximum output level, regardless of the input level.

It should be noted in Fig. 38C that the predetermined luminance range that mainly has the upper limit value of the main area luminance is the section α, and the predetermined luminance range that mainly has the lower limit value of the second luminance area luminance is the section β, but, for example, a predetermined section on the upper limit side within the luminance range of the main area may be the section α, a predetermined section on the lower limit side within the luminance range of the second luminance area may be the section β, a predetermined section having luminance higher than the upper limit of the luminance range of the main area may be the section α, and a predetermined section having luminance lower than the lower limit of the luminance range of the second luminance area may be the section β. Also, an area to be assigned with the number of steps of the output level that is the same as that of the section α and section β may be set on the lower limit side of the luminance in the main area and on the upper limit side of the luminance of the second luminance area.

Moreover, in Fig. 38, the output of the pixels having luminance that is equal to or lower than the luminance range in the main area is 0 (black), and the output level of the pixels within the range having luminance that is equal to or higher than the luminance range of the second luminance area is the same as that of the maximum luminance of the luminance range of the second luminance area (maximum output level). However, the number of steps of a certain degree of output level can be assigned to the luminance range that is equal to or lower than the luminance range of the main area and to the luminance range that is equal to or higher than the luminance range of the second luminance area.

Specifically, the gradation assignment calculation section 455 can determine assignment of the number of gradation steps for A/D conversion, as shown in, for example, Fig. 39A. In other words, the number of gradation steps between 0 (i.e., black) and a predetermined number of gradation steps smaller than the number of steps to be assigned to the main area is assigned to the pixels having a luminance input level lower than the luminance range of the main area, in accordance with the input level, and A/D conversion is executed. A predetermined number of gradation steps are assigned to the pixels within the luminance range of the main area in accordance with the input level, and A/D conversion is executed. The pixels within the luminance range between the main area and the second luminance area are output as digital signals of the maximum value of the gradations assigned to the main area, regardless of the input level. The number of steps between the maximum value of the output level assigned to the main area and a predetermined number of gradation steps is assigned to the pixels within the second luminance area in accordance with the input level, at the number of steps that is the same as or substantially the same as that of the main area, and A/D conversion is executed. Also, the number of gradation steps between the maximum value of the gradation steps assigned to the luminance range of the second luminance area and the maximum gradation is assigned to the pixels having luminance higher than that of the second luminance area, in accordance with the input level, and A/D conversion is executed, so that the number of steps smaller than the number of steps assigned to the main area and second luminance area is obtained.

Also, the gradation assignment calculation section 455 can determine assignment of the number of gradation steps for A/D conversion, as shown in, for example, Fig. 39B. In other words, the number of gradation steps between 0 (i.e., black) and a predetermined number of gradation steps smaller than the number of steps to be assigned to the main area is assigned to the pixels having a luminance input level lower than the luminance range of the main area, in accordance with the input level, and A/D conversion is executed. A predetermined number of gradation steps are assigned to the pixels within the luminance range of the main area in accordance with the input level, and A/D conversion is executed. The pixels within the luminance range between the main area and the second luminance area are assigned with the number of gradation steps corresponding to the input level at the number of steps smaller than the number of steps assigned to the main area, and A/D conversion is executed. The number of gradation steps between a predetermined gradation step and the maximum value of the gradations assigned to the luminance range between the main area and second luminance area is assigned to the pixels within the second luminance area in accordance with the input level, at the number of steps that is the same as or substantially the same as that of the main area, and A/D conversion is executed. Also, the number of gradation steps between the maximum gradation and the maximum value of the gradations assigned to the luminance range of the second luminance area is assigned to the pixels having luminance higher than that of the second luminance area, in accordance with the input level, and A/D conversion is executed, so that the number of steps smaller than the number of steps assigned to the main area is obtained.

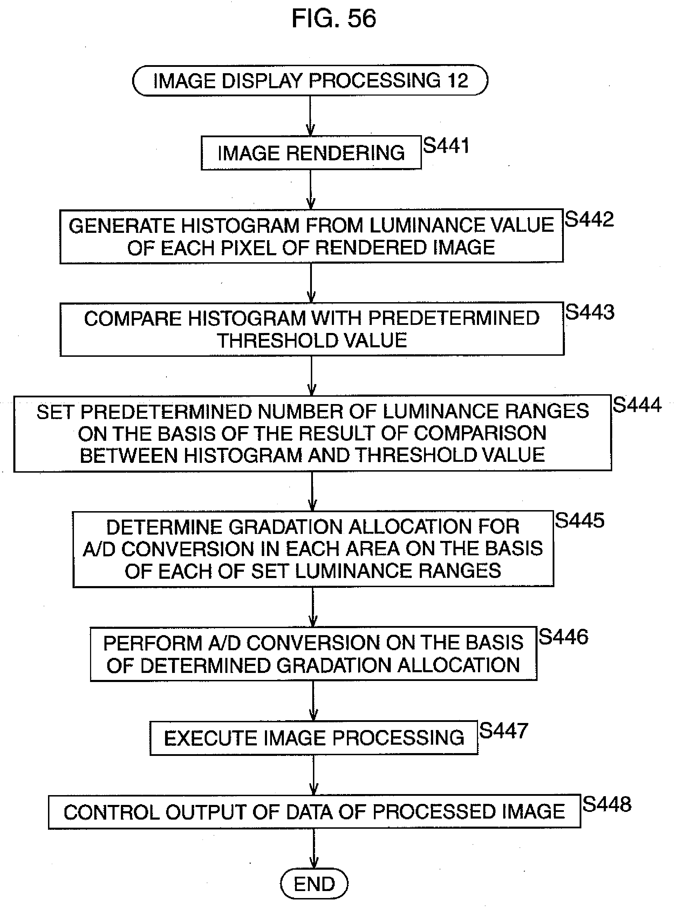

Also, the gradation assignment calculation section 455 can determine assignment of the number of gradation steps for A/D conversion, as shown in, for example, Fig. 56C. In other words, the number of gradation steps between 0 (i.e., black) and a predetermined number of gradation steps smaller than the number of steps to be assigned to the main area is assigned to the pixels having a luminance input level lower than the luminance range of the main area, in accordance with the input level, and A/D conversion is executed. A predetermined number of gradation steps are assigned to the pixels within the luminance range of the main area and within a section other than the section α in accordance with the input level, and A/D conversion is executed. Also, a predetermined gradation step that is larger than the maximum value of the gradations assigned to the section other than the section α of the main area is assigned to the pixels within the section α at the number of steps smaller than the number of steps assigned to the section other than the section α of the main area, and A/D conversion is executed. To the pixels that do not belong to the section α and section β in the luminance range between the main area and the second luminance area, a gradation corresponding to the input level is assigned at the number of steps smaller than the number of steps assigned to the section α, or the maximum value of the gradations assigned to the section α is assigned regardless of the input level, and A/D conversion is executed.

Furthermore, a predetermined number of gradations that are larger than the maximum value of the gradation in the luminance range lower than the section β are assigned to the pixels of the section β at the number of steps smaller than the number of steps assigned to the section other than the section α of the main area. The gradations between a predetermined gradation and the maximum value of the gradation assigned to the section β are assigned to the pixels of the section other than the section β within the luminance range of the second luminance area, at the number of steps that is the same as or substantially the same as that of the luminance range other than the section α of the main area, in accordance with the input level. Also, the gradations between the maximum gradation and the maximum value of the gradations assigned to the luminance range of the second luminance area are assigned to the pixels having luminance higher than that of the second luminance area, in accordance with the input level, so that the number of steps smaller than the number of steps assigned to the section other than the section α of the main area is obtained.

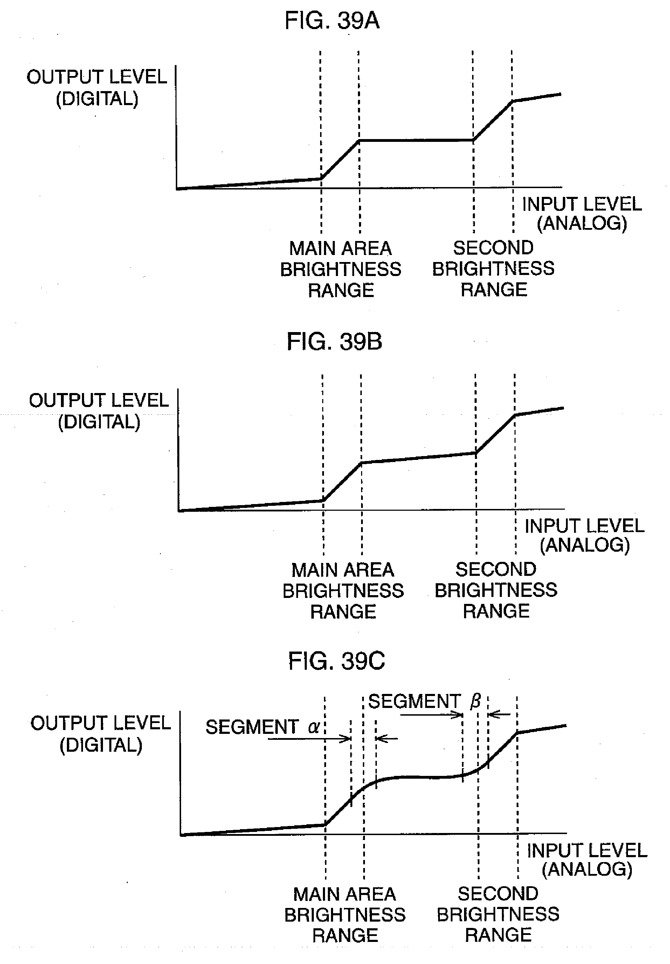

It should be noted in Fig. 39C that the predetermined luminance range that mainly has the upper limit value of the main area luminance is the section α, and the predetermined luminance range that mainly has the lower limit value of the second luminance area luminance is the section β, but, for example, a predetermined section on the upper limit side within the luminance range of the main area may be the section α, a predetermined section on the lower limit side within the luminance range of the second luminance area may be the section β, a predetermined section having luminance higher than the upper limit of the luminance range of the main area may be the section α, and a predetermined section having luminance lower than the lower limit of the luminance range of the second luminance area may be the section β. Also, an area to be assigned with the number of steps of the output level that is the same as that of the section α and section β may be set on the lower limit side of the luminance in the main area and on the upper limit side of the luminance of the second luminance area.

Furthermore, the gradation assignment calculation section 455 may determine the number of gradation steps to be assigned to each luminance area so that, for example, the ratio of the number of gradation steps to be assigned with respect to the input level in a luminance range other than those of the main area and the second luminance area becomes lower than the ratio of the number of gradation steps to be assigned with respect to the input level in these luminance areas (slope of the straight line).

As described above, the main area and the second luminance area to be set in the gradation assignment determination section 411-1 are set based on, not a predetermined luminance range, but an captured image. Specifically, gradation assignment for A/D conversion to be determined by the gradation assignment determination section 411-1 is determined such that the majority of the limited number of gradations can be assigned within a luminance range particularly accounting for a large portion of the entire captured image among, for example, the luminance ranges that are the most important for the user to recognize the image, the luminance ranges including the object accounting for a large portion of the image field, as well as the ranges having luminance higher than that of the abovementioned luminance ranges.

Accordingly, even when a wide dynamic range image is obtained by effectively distributing the limited number of gradation steps that the A/D converter 412 has, it is possible to obtain a displayed or printed out image in which the luminance ranges corresponding to the main area and the second luminance area have the number of gradations that can be easily recognized by the user.

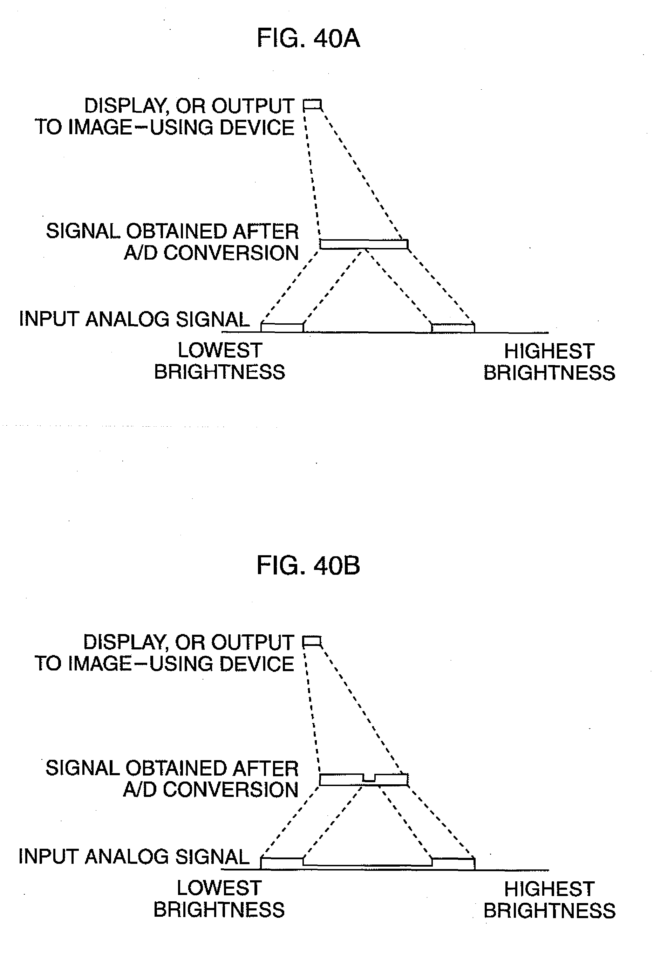

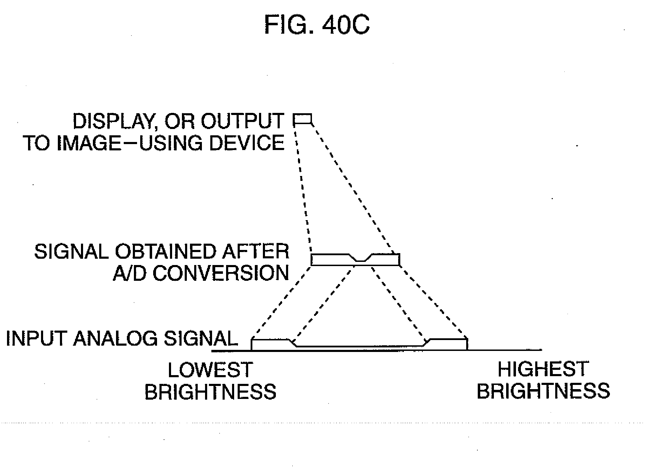

Fig. 40 is used to explain the luminance levels of an input signal, a signal obtained after A/D conversion based on assignment of gradation steps obtained by the gradation assignment calculation section 455, and a signal to be displayed.

Fig. 40A shows the luminance levels of an analog input signal obtained when A/D conversion is performed based on gradation step assignment described with reference to Fig. 38A, a digital signal obtained after A/D conversion performed based on assignment of the number of gradation steps obtained by the gradation assignment calculation section 455, and a signal to be displayed on the display 82 or output to the image-using device 83 to perform processing such as printing, image recognition, recording or image communication.

As shown in Fig. 40A, a large number of gradation steps are assigned and A/D conversion is executed in the main area and the second luminance area, which are separated luminance ranges. The pixels within the luminance range between the main area and the second luminance area are all output at the maximum output level of the main area. Then, the signal obtained after A/D conversion is subjected to image processing in accordance with the conditions of display or output to the image using device 83 by the image generator 392, but gradation conversion is not performed as in the image generator 93 described above. Specifically, when the image generator 392 processes a signal supplied from the gradation assignment determination section 411-1, i.e., a signal obtained after A/D conversion based on the gradation assignment performed by the gradation assignment calculations section, the gradation assignment calculation section 455 does not change the rate of gradations to be assigned.

Fig. 40B shows the luminance level of an analog input signal obtained when A/D conversion is performed based on gradation step assignment described with reference to Fig. 38B, a digital signal obtained after A/D conversion performed based on assignment of the number of gradation steps obtained by the gradation assignment calculation section 455, and a signal to be displayed on the display 82 or output to the image-using device 83 to perform processing such as printing, image recognition, recording or image communication. As shown in Fig. 40B, the number of gradation steps that is smaller than that of the main area and second luminance area is provided to the area between the main area and the second luminance area. For this reason, although the number of gradation steps to be applied to the entire image is small, significant luminance gradation width is provided to the signals of the main area and second luminance area due to the small number of steps in the area between the main area and second luminance area.

Fig. 40C shows the luminance level of an analog input signal obtained when A/D conversion is performed based on gradation step assignment described with reference to Fig. 38C, a digital signal obtained after A/D conversion performed based on assignment of the number of gradation steps obtained by the gradation assignment calculation section 455, and a signal to be displayed on the display 82 or output to the image-using device 83 to perform processing such as printing, image recognition, recording or image communication. As shown in Fig. 40C, the number of gradation steps to be assigned is changed slowly by the abovementioned section α and section β in the main area, second luminance area, and an area therebetween. In other words, the number of gradation steps smaller than that of the main area and second luminance area is provided in the section α and section β. For this reason, even if the number of gradation steps to be applied to the entire image is small, sufficient luminance gradation width is provided to the main area and second luminance area, and the number of luminance areas that appear at only one gradation can be reduced.

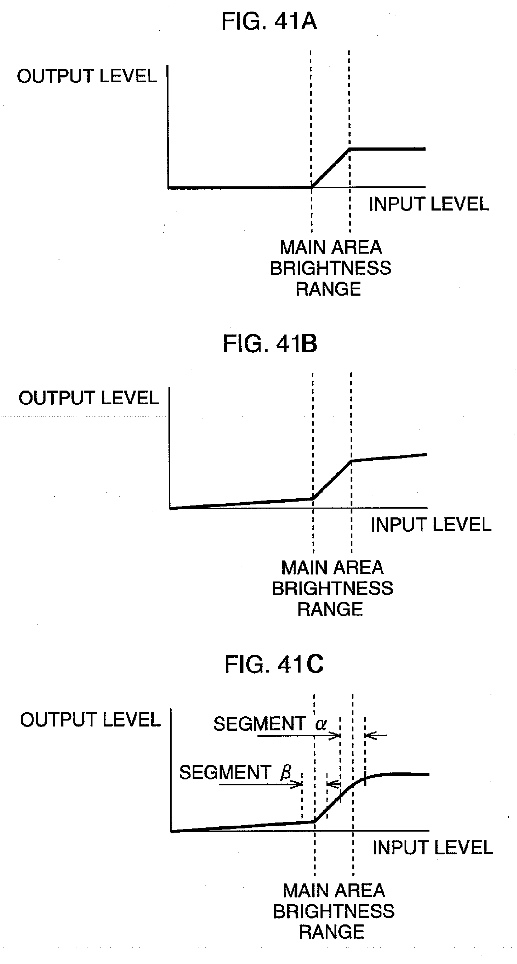

When only one luminance range is sufficient for distributing particularly a large number of gradation steps, the second luminance area luminance average value calculation section 453 and the second luminance area luminance range setting section 454 may be caused to not execute processing. In this manner, a large number of gradation steps are assigned to the main area luminance range only, thus a digital signal to be A/D-converted and output can be obtained with respect to an analog signal to be input by the A/D converter 412, as shown in, for example, Fig. 41.

Specifically, when all gradation steps are assigned to the main area luminance range, a digital signal to be A/D-converted and output can be obtained with respect to an analog signal to be input by the A/D converter 412, as shown in Fig. 41A. Also, when the number of gradation steps that is smaller than that of the main area luminance range is assigned to sections before and after the main area luminance range, a digital signal to be A/D-converted and output can be obtained with respect to an analog signal to be input by the A/D converter 412, as shown in Fig. 41B. When the number of gradation steps that is smaller than that of the main area luminance range is assigned to the section α, which is a predetermined section on the upper limit side within the main area luminance range, and to the section β, which is a predetermine section on the lower limit side within the main area luminance range, and when the number of gradation steps that is smaller than that of the section α and section β is assigned to the luminance ranges other than the main area luminance range, section α, and section β, a digital signal to be A/D-converted and output can be obtained with respect to an analog signal to be input by the A/D converter 412, as shown in Fig. 41C.

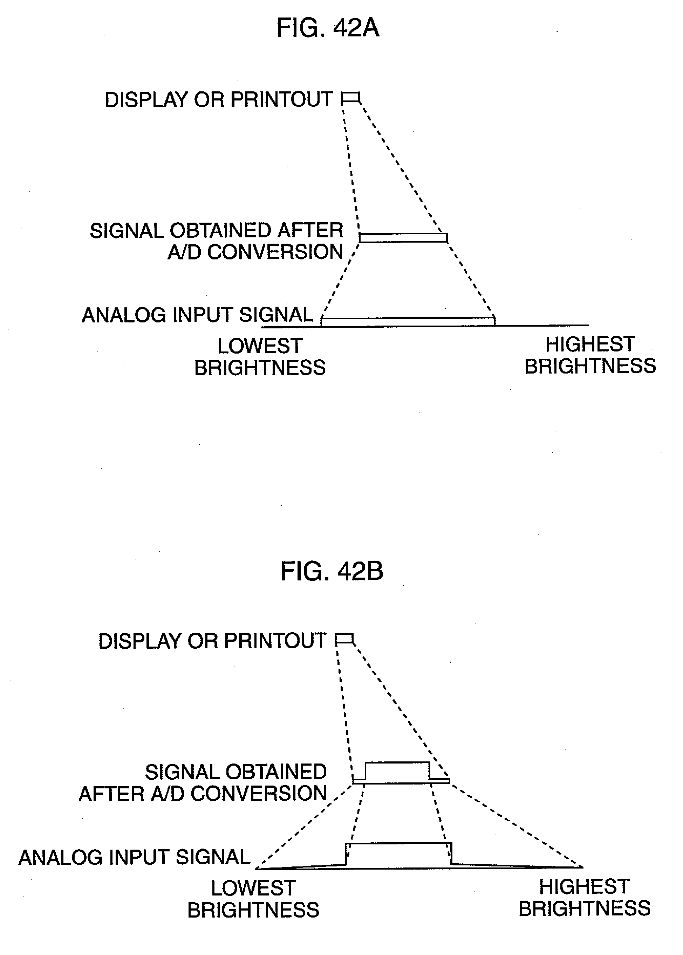

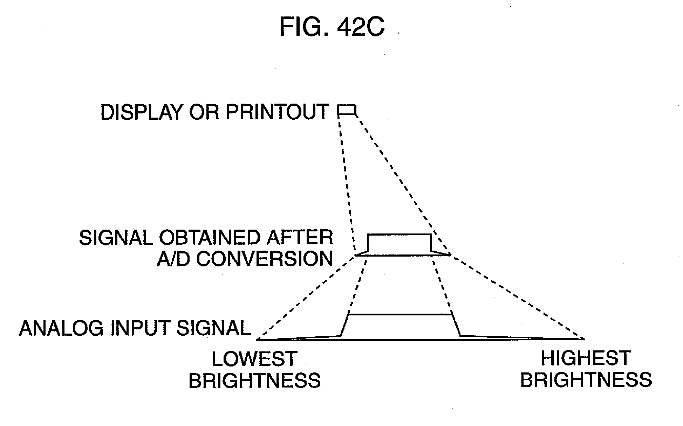

Fig. 42 shows the luminance levels of an input signal, a signal obtained after A/D conversion based on assignment of gradation steps obtained by the gradation assignment calculation section 455, and a signal to be displayed, in the case in which gradation assignment described using Fig. 41 is performed.

Fig. 42A shows the luminance levels of an analog input signal obtained when A/D conversion is performed based on gradation step assignment described with reference to Fig. 41A, a digital signal obtained after A/D conversion performed based on assignment of the number of gradation steps obtained by the gradation assignment calculation section 455, and a signal to be displayed on the display 82 or output to the image-using device 83 to perform processing such as printing, image recognition, recording or image communication. As shown in Fig. 42A, a large number of gradation steps are assigned to the main area only, A/D conversion is executed, the pixels within a luminance range lower than that of the main area are all output at an output level of 0, and the pixels within a luminance range higher than that of the main area are all output at the maximum output level of the main area.

Fig. 42B shows the luminance levels of an analog input signal obtained when A/D conversion is performed based on gradation step assignment described with reference to Fig. 41B, a digital signal obtained after A/D conversion performed based on assignment of the number of gradation steps obtained by the gradation assignment calculation section 455, and a signal to be displayed on the display 82 or output to the image-using device 83 to perform processing such as printing, image recognition, recording or image communication. As shown in Fig. 42B, the number of gradation steps that is smaller than that of the main area is assigned to an area other than the main area. For this reason, in the signal obtained after conversion, although the number of gradation steps to be applied to the entire image is small, significant luminance gradation width is provided to the signal of the main area due to the small number of steps in the area other than the main area.

Fig. 42C shows the luminance levels of an analog input signal obtained when A/D conversion is performed based on gradation step assignment described with reference to Fig. 41C, a digital signal obtained after A/D conversion performed based on assignment of the number of gradation steps obtained by the gradation assignment calculation section 455, and a signal to be displayed on the display 82 or output to the image-using device 83 to perform processing such as printing, image recognition, recording or image communication. As shown in Fig. 42C, the number of gradation steps to be assigned is changed slowly by the abovementioned section α and section β in the main area, and other area. In other words, the number of gradation steps smaller than that of the main area but larger than that of the abovementioned other area is provided in the section α and section β. For this reason, even if the number of gradation steps to be applied to the entire image is small, in the signal obtained after conversion, sufficient luminance gradation width is provided to the main area, and a relatively large number of gradation steps can be assigned to the luminance area in the vicinity of the main area, compare to the luminance area separated from the main area.

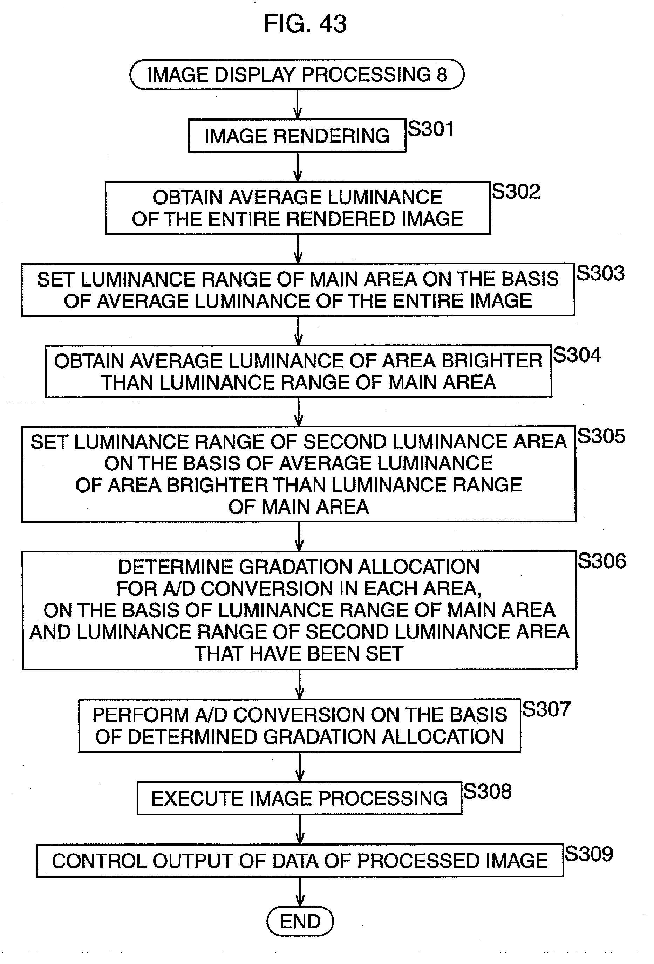

Next, image display processing 8, which is executed by the image processing apparatus 381 in which the gradation assignment determination section 411-1 shown in Fig. 37 is used, is described with reference to the flowchart of Fig. 43.

In step S301, the light detector 111 of the image capturing section 391 supplies the accumulated electric charge to the logarithm converter 112 in synchronization with a control signal supplied by the image capturing timing controller 114. Specifically, the light detector 111 acquires a captured image signal. The logarithm converter 112 generates an analog electronic signal obtained by converting the electric charge supplied by the light detector 111 into a voltage value that is substantially proportional to a logarithm of the number of electric charges, for each pixel by using the subthreshold characteristics of the MOSFETs, and supplies the generated analog electronic signal to the A/D converter 412 and the gradation assignment determination section 411-1.

In step S302, the average luminance calculation section 451 of the gradation assignment determination section 411-1 obtains average luminance of the entire captured image, and supplies the result of calculation to the main area luminance range setting section 452.

In step S303, the main area luminance range setting section 452 sets a luminance range of the main area on the basis of the average luminance of the entire image supplied from the average luminance calculation section 451, and supplies the set luminance range of the main area to the gradation assignment calculation section 455 and the second luminance area luminance average value calculation section 453.

The main area luminance range setting section 452 may, for example, set the range of predetermined luminance having mainly the average luminance of the image signal, as the luminance range of the main area, or may sequentially select, from among the pixels having the average luminance of the image signal, and in the order of pixels having a luminance value proximate to the average luminance, a predetermined number of pixels, and set the selected pixels as the luminance range of the main area.

In step S304, the second luminance area luminance average value calculation section 453 obtains the average luminance of an area brighter than the luminance range of the main area that is set by the main area luminance range setting section 452, from the image signal supplied by the logarithm converter 112, and supplies the result of calculation to the second luminance area luminance range setting section 454.

In step S305, the second luminance area luminance range setting section 454 sets a luminance range of a second luminance area on the basis of the average luminance of the area brighter than the luminance range of the main area, the average luminance being supplied from the second luminance area luminance average value calculation section 453, and supplies the set luminance range of the second luminance area to the gradation assignment calculation section 455.

The second luminance area luminance range setting section 454 may, for example, set the range of predetermined luminance having mainly the average luminance of the pixels having a luminance range higher than the luminance range of the main area, as the luminance range of the second luminance area, or may sequentially select, from among the pixels having the average luminance of the pixels having the luminance range higher than the luminance range of the main area, and in the order of pixels having a luminance value proximate to the average luminance, a predetermined number of pixels, and set the selected pixels as the luminance range of the second luminance area.

In step S306, on the basis of the luminance range of the main area that is set by the main area luminance range setting section 452 and the luminance range of the second luminance area that is set by the second luminance area luminance average value calculation section 453, the gradation assignment calculation section 455 determines gradation assignment for A/D conversion performed in each area as described using, for example, Fig. 38 or Fig. 39, and supplies the determined gradation assignment to the A/D converter 412.

In step S307, the A/D converter 412 converts the analog electronic signal supplied from the logarithm converter 112 into a digital signal on the basis of gradation assignment supplied from the gradation assignment calculation section 455, and supplies the digital signal to the image generator 392.

In step S308, the image generator 392 performs image processing on the supplied image signal (but does not perform gradation conversion), and supplies the result of image processing to the output controller 95.

In step S309, the output controller 95 controls output of the image-processed image data to the image using device 83, whereby the processing is ended.

It should be noted here that the processing of outputting the generated image to the image using device 83 is described. When the generated image is output to the display 82 via the display controller 94 and displayed, basically the same processing is executed in step S301 through step S307, the image signal is supplied to the display controller 94, and display of the image signal onto the display 82 is controlled.

By performing such processing, in the A/D-converted image data that is captured by the image capturing section 391 using the logarithm conversion type imaging device 401, the limited number of gradation steps that the A/D converter 412 has is effectively distributed, thus even when a wide dynamic range image is obtained, it is possible to obtain a displayed or printed out image in which the luminance ranges corresponding to the main area and the second luminance area can be easily recognized by the user.

Accordingly, as in the case described with reference to Fig. 10 through Fig. 12, sufficient number of gradation steps are assigned, A/D conversion is executed, and thereafter the wide dynamic range image is displayed or printed out so that the user can easily recognize the information required by the user from the wide dynamic range image.

For example, the wide dynamic range image to which a large number of bits of data, such as 16 bits of data, are assigned (having a large number of gradation steps) and which is obtained by A/D conversion includes an extremely wide luminance area, thus when this image is subjected to laplacian conversion processing for performing differential processing as in the case of normal image data, only a noise-like result is obtained as in the case of an image having extremely low contrast. Furthermore, when performing binarization processing on this image, the number of candidates for luminance, which can be a threshold value, increases significantly, thus the throughput increases explosively. Therefore, when performing general image processing using wide dynamics range image data, it is sometimes necessary to significantly change the processes of the image processing that was executed conventionally.

On the other hand, when the image capturing section 391 using the logarithm conversion type imaging device 401 is used to effectively distribute the limited number of gradation steps that the A/D converter 412 has, on the basis of assignment of the number of gradation steps determined by the gradation assignment determination section 411-1 (e.g., 12 bits, or the number of bits that is substantially the same as the number of bits used when A/D-converting an image signal captured by the conventional CCD imager or CMOS imager that cannot obtain the gradations of an extremely narrow luminance range other than a capturable luminance range, unlike the logarithm conversion type imaging device used in the present invention), and A/D conversion is performed, the image generator 392 can directly execute the conventional image processing.

Moreover, when the image using device 82 executes transmission, recording or other processing of the generated image data, the number of gradation steps is assigned mainly to a luminance area to be used in the wide dynamic range image captured by the image capturing section 391 using the logarithm conversion type imaging device 401, thus record capacity or the traffic of the transmission path be conserved while transmitting required information.

In addition, the captured wide dynamics range image is subjected to A/D conversion processing on the basis of gradation assignment determined by the gradation assignment determination section 411-1, whereby even in the case in which an image of the front parts of vehicles traveling during the night is captured and then displayed on the display, as shown in, for example, Fig. 13, the images of the headlights or taillights of the other vehicles or the street lamps that have the pixels having the luminance value separated from the luminance value of the most parts on the image field can be assigned with sufficient gradations and displayed or processed without causing the whiteout and blackout conditions and without causing a difficulty in recognizing the image information required by the user, due to the high-luminance pixels, such as the pixels of the headlights, taillights and street lamps.

The above has described that, in the gradation assignment determination section 411-1, a large number of gradation steps are assigned to the luminance range of the main area, and to the luminance range of the second luminance area, which is the main section within the range having luminance higher than that of the luminance range of the main area (or to the luminance range of the main area only), and A/D conversion is performed. There will be described a case in which the luminance ranges to be set are not these two luminance ranges of the main area and second luminance area.

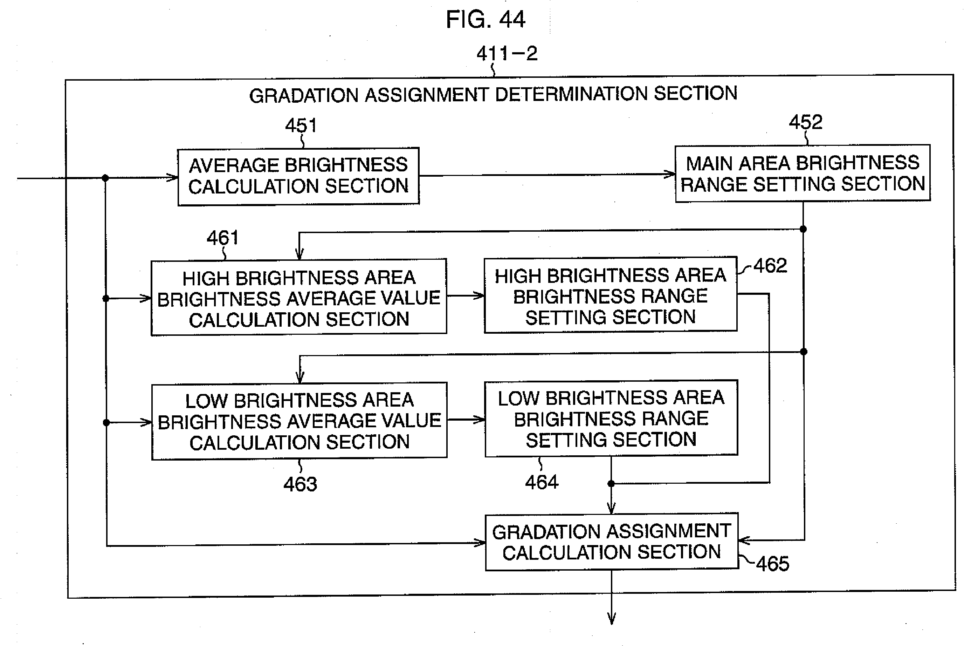

Next, Fig. 44 is a block diagram showing a configuration of a gradation assignment determination section 411-2, which is the second example of the configuration of the gradation assignment determination section 411 shown in Fig. 36. The gradation assignment determination section 411-2 sets three luminance ranges, i.e., the luminance range of the main area, the luminance range of the second luminance area, which is the main part of the luminance range higher than the luminance range of the main area, and the luminance range of a third luminance area, which is the main part of the luminance range lower than the luminance range of the main area, and assigns a large number of gradation steps to these three set luminance ranges.

It should be noted that the same reference numerals are applied to the sections corresponding to those shown in Fig. 37, thus the explanations thereof are omitted accordingly.

Specifically, the gradation assignment determination section 411-2 shown in Fig. 44 has the average luminance calculation section 451 and the main area luminance range setting section 452 that are basically the same as those of the gradation assignment determination section 411-1 described using Fig. 37. The second luminance area luminance average value calculation section 453 and second luminance area luminance range setting section 454 of the gradation assignment determination section 411-1 are omitted. A high-luminance area luminance average value calculation section 461, a high-luminance area luminance range setting section 462, a low-luminance area luminance average value calculation section 463, and a low-luminance area luminance range setting section 464 are newly provided, and a gradation assignment calculation section 465 is provided in place of the gradation assignment calculation section 455.

The high-luminance area luminance average value calculation section 461 acquires the image signal supplied from the logarithm converter 112, calculates the average luminance of the pixels within the luminance range higher than the luminance range of the main area in the acquired image signal, the luminance range of the main area being set by the main area luminance range setting section 452, and supplies the result of calculation to the high-luminance area luminance range setting section 462.

The high-luminance area luminance range setting section 462 sets the luminance range of the second luminance area, the luminance of which is higher than that of the main area, on the basis of the average luminance of the pixels within the luminance range higher than the luminance range of the main area, the average luminance being supplied from the high-luminance range luminance average value calculation section 461, and supplies the set luminance range of the second luminance area to the gradation assignment calculation section 465.

The high-luminance area luminance range setting section 462 may, for example, set the range of predetermined luminance having mainly the average luminance of the pixels within the luminance range higher than the luminance range of the main area, as the luminance range of the second luminance area, or may sequentially select, from among the pixels having the average luminance of the pixels within the luminance range higher than the luminance range of the main area, and in the order of pixels having a luminance value proximate to the average luminance, a predetermined number of pixels, and set the selected pixels as the luminance range of the second luminance area.

The low-luminance area luminance average value calculation section 463 acquires the image signal supplied from the logarithm converter 112, calculates the average luminance of the pixels within the luminance range lower than the luminance range of the main area in the acquired image signal, the luminance range of the main area being set by the main area luminance range setting section 452, and supplies the result of calculation to the low-luminance area luminance range setting section 464.

The low-luminance area luminance range setting section 464 sets the luminance range of the third luminance area, the luminance of which is lower than that of the main area, on the basis of the average luminance of the pixels within the luminance range lower than the luminance range of the main area, the average luminance being supplied from the low-luminance range luminance average value calculation section 463, and supplies the set luminance range of the third luminance area to the gradation assignment calculation section 465.

The low-luminance area luminance range setting section 464 may, for example, set the range of predetermined luminance having mainly the average luminance of the pixels within the luminance range lower than the luminance range of the main area, as the luminance range of the third luminance area, or may sequentially select, from among the pixels having the average luminance of the pixels within the luminance range lower than the luminance range of the main area, and in the order of pixels having a luminance value proximate to the average luminance, a predetermined number of pixels, and set the selected pixels as the luminance range of the third luminance area.

The gradation assignment calculation section 465 acquires the image signal supplied by the logarithm converter 112, and how many gradation steps to assign to which luminance range when A/D conversion is performed by the A/D converter 412, on the basis of the information on the luminance range of the main area, the luminance range of the second luminance area, and the luminance range of the third luminance area that are supplied from the main area luminance range setting section 452, the high-luminance area luminance range setting section 462, and low-luminance area luminance range setting section 464 respectively.

Specifically, the gradation assignment calculation section 465 performs setting such that assignment of the number of gradation steps for A/D conversion with respect to the level of a luminance signal to be input is different from assignment of the same in the luminance ranges set as the main area, second luminance area, and third luminance area and from assignment in the other ranges. Specifically, the gradation assignment calculation section 465 determines gradation assignment so that more gradation steps are assigned to the luminance ranges set as the main area, second luminance area, and third luminance area, thus the A/D converter 412 executes A/D conversion processing such that the number of gradations of the pixels in the corresponding luminance ranges is increased. Consequently, the sections having the luminance ranges corresponding to the main area, second luminance area, and third luminance area in an image to be displayed or printed out can be recognized well by the user.

The gradation assignment calculation section 465 can assign gradations such that a digital signal to be A/D-converted and output becomes the one shown in Fig .45A with respect to, for example, an analog signal to be input by the A/D converter 412. Specifically, in the digital signal to be A/D-converted and output with respect to the analog signal to be input by the A/D converter 412, the output level of the pixels in which the input level of the luminance is lower than that of the luminance range of the third luminance area is 0 (i.e., black). Also, a predetermined number of gradation steps are assigned to the pixels within the third luminance area, main area and second luminance area in accordance with the input level, and A/D conversion is executed. The pixels within a luminance range between the third luminance area and the main area, and the pixels within a luminance area between the main area and the second luminance area are output as digital signals having a gradation same as the maximum value of the output level assigned immediately before these ranges. The pixels having luminance higher than that of the second luminance area are output as digital signals of the maximum value of the gradations assigned to the luminance range of the second luminance area, that is, a digital signal of the maximum value of the entire gradations (maximum output level).

The gradation assignment calculation section 465 can assign gradations such that a digital signal to be A/D-converted and output becomes the one shown in Fig .45B with respect to, for example, an analog signal to be input by the A/D converter 412. Specifically, in the digital signal to be A/D-converted and output with respect to the analog signal to be input by the A/D converter 412, the output level of the pixels in which the input level of the luminance is lower than that of the luminance range of the third luminance area is 0 (i.e., black). Also, a predetermined gradation output level is assigned to the pixels within the third luminance area, main area and second luminance area in accordance with the input level, and A/D conversion is executed. The pixels within a luminance range between the third luminance area and the main area, and the pixels within a luminance area between the main area and the second luminance area are assigned with an output level corresponding to the input level, at the number of steps smaller than the number of steps assigned to the main area and the like, and A/D conversion is executed. The pixels having luminance higher than that of the second luminance area are output as digital signals of the maximum value of the gradations assigned to the luminance range of the second luminance area, that is, a digital signal of the maximum value of the entire gradations (maximum output level), regardless of the input level.

The gradation assignment calculation section 465 can assign gradations such that a digital signal to be A/D-converted and output becomes the one shown in Fig .45C with respect to, for example, an analog signal to be input by the A/D converter 412. For example, a predetermined luminance range having mainly an upper limit value of the third luminance area luminance is taken as a section α, a predetermined luminance range having mainly a lower limit value of the main area luminance is taken as a section β, a predetermined luminance range having mainly an upper limit value of the main area luminance is taken as a section γ, and a predetermined luminance range having mainly a lower limit value of the second luminance area luminance is taken as a section δ. Then, in the digital signal to be A/D-converted and output with respect to the analog signal to be input by the A/D converter 412, the output level of the pixels in which the input level of the luminance is lower than the luminance range of the third luminance area is 0 (that is, black), regardless of the input level. The output level of a predetermined gradation is assigned to the pixels of a section other than the section α but within the third luminance area, the pixels of a section other than the section β or section γ but within the main area luminance range, and the pixels of a section other than the section δ but within the second luminance area luminance range, and A/D conversion is executed. Also, an output level of a predetermined number of gradation steps that is smaller than the number of steps assigned to the sections other than the sections α through δ, such as the main area luminance range and the like, is assigned to the pixels within the section α, section β, section γ, and section δ, and A/D conversion is executed. The pixels having luminance higher than that of the second luminance area are output as digital signals of the maximum value of the gradations assigned to the second luminance area, i.e., a digital signal of the maximum value of the entire gradations (maximum output level), regardless of the input level.

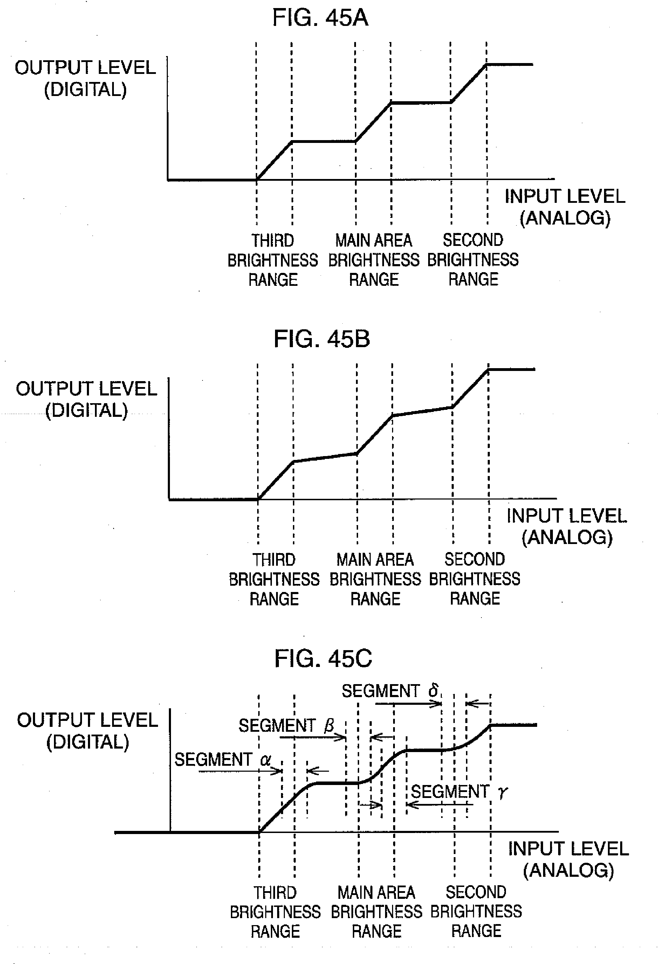

It should be noted in Fig. 45C that a predetermined luminance range having mainly an upper limit value of the third luminance area luminance is taken as the section α, a predetermined luminance range having mainly a lower limit value of the main area luminance is taken as the section β, a predetermined luminance range having mainly an upper limit value of the main area luminance is taken as the section γ, and a predetermined luminance range having mainly a lower limit value of the second luminance area luminance is taken as the section δ. However, for example, a predetermined luminance range on the upper limit side within the third luminance range may be taken as the section α, a predetermined range on the lower limit side within the main area as the section β, a predetermined luminance range on the upper limit side within the main area as the section γ, and the a predetermined luminance range on the lower limit side within the second luminance area as the section δ. Also, a predetermined luminance range having luminance higher than that of the upper limit of the third luminance area may be taken as the section α, a predetermined luminance range having luminance lower than that of the lower limit of the main area as the section β, a predetermined luminance range having luminance higher than that of the upper limit of the main area as the section γ, and a predetermined luminance range having luminance lower than that of the lower limit of the second luminance area as the section δ. Moreover, an area to be assigned with the number of steps of the output level that is the same as that of the section α through section δ may be set on the lower limit side of the luminance in the third luminance area and on the upper limit side of the luminance of the second luminance area.

Fig. 45 was used to describe the case in which the number of steps of an output level (the number of gradation steps) is not assigned to the range having luminance lower than that of the third luminance area, and the range having luminance higher than that of the second luminance area. On the other hand, as in the case described with reference to, for example, Fig. 39, the gradation assignment calculation section 465 may assign the number of steps smaller than that of the main area, second luminance area and third luminance area, to the range having luminance lower than that of the third luminance area and the range having luminance higher than that of the second luminance area.

Furthermore, the gradation assignment calculation section 465 may determine the number of gradation steps to be assigned to each luminance area so that, for example, the ratio of the number of gradation steps to be assigned with respect to the input level in a luminance range other than those of the main area and the second luminance area as well as the second luminance area becomes lower than the ratio of the output level to the input level in these luminance areas (slope of the straight line).

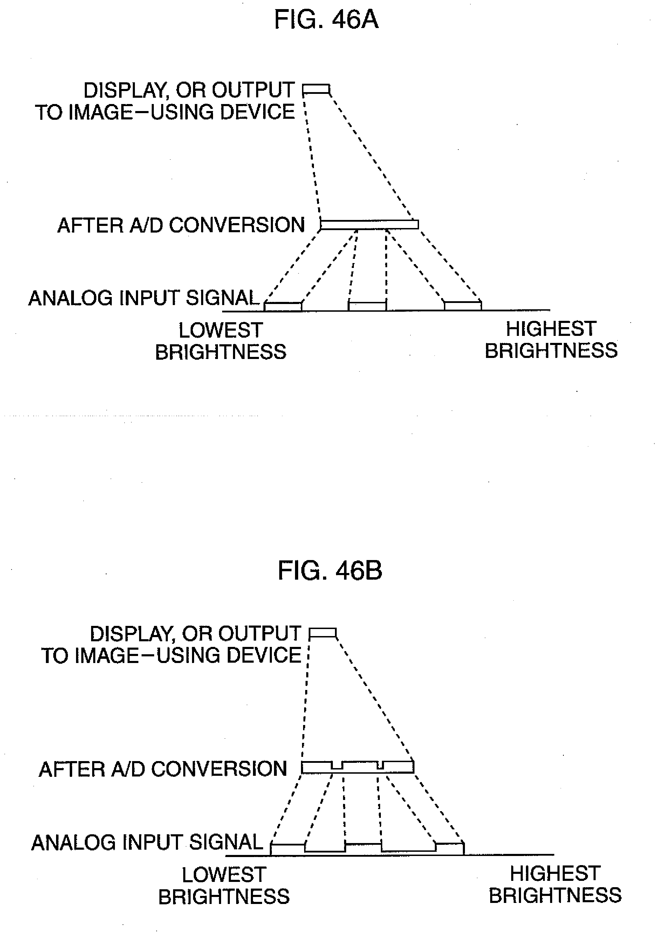

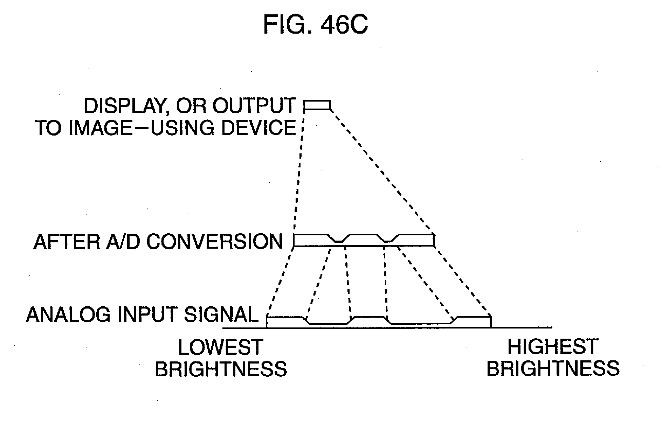

Next, Fig. 46 is used to explain the luminance levels of an input signal, a signal obtained after A/D conversion based on assignment of gradation steps obtained by the gradation assignment calculation section 465, and a signal to be displayed.

Fig. 46A shows the luminance levels of an analog input signal obtained when A/D conversion is performed based on gradation step assignment described with reference to Fig. 45A, a signal obtained after A/D conversion performed based on assignment of the number of gradation steps obtained by the gradation assignment calculation section 465, and a signal to be displayed on the display 82 or output to the image-using device 83 to perform processing such as printing, image recognition, recording or image communication. As shown in Fig. 46A, a large number of gradation steps are assigned and A/D conversion is executed in the main area, the second luminance area, and the third luminance area which are separated luminance ranges. The pixels within the luminance range between the third luminance area and the main area are all output at the maximum output level of the third luminance area, and the pixels within the luminance range between the main area and the second luminance area are all output at the maximum output level of the main area.

Fig. 46B shows the luminance level of an analog input signal obtained when A/D conversion is performed based on gradation step assignment described with reference to Fig. 45B, a signal obtained after A/D conversion performed based on assignment of the number of gradation steps obtained by the gradation assignment calculation section 465, and a signal to be displayed on the display 82 or output to the image-using device 83. As shown in Fig. 46B, the number of gradation steps that is smaller than that of the main area, second luminance area, and third luminance area is provided to the area between the third luminance area and the main area and to the area between the main area and the second luminance area. For this reason, although the number of gradation steps to be applied to the entire image is small, significant luminance gradation width is provided to the signals of the main area, second luminance area, and third luminance area due to the small number of steps in the area between the third luminance area and the main area, and in the area between the main area and second luminance area, and A/D conversion is executed.

Fig. 46C shows the luminance level of an analog input signal obtained when A/D conversion is performed based on gradation step assignment described with reference to Fig. 45C, a signal obtained after A/D conversion performed based on assignment of the number of gradation steps obtained by the gradation assignment calculation section 465, and a signal to be displayed on the display 82 or output to the image-using device 83. As shown in Fig. 46C, the number of gradation steps to be assigned is changed slowly by the abovementioned section α through section δ in the main area, second luminance area, third luminance area, and areas therebetween. In other words, the number of gradation steps smaller than that of the sections other than the section α through section δ of the main area, second luminance area, and third luminance area is provided in the section α through section δ. For this reason, even if the number of gradation steps to be applied to the entire image is small, sufficient luminance gradation width is provided to the main area, second luminance area, and third luminance area, A/D conversion is executed, and the number of luminance areas that appear at only one gradation can be reduced.

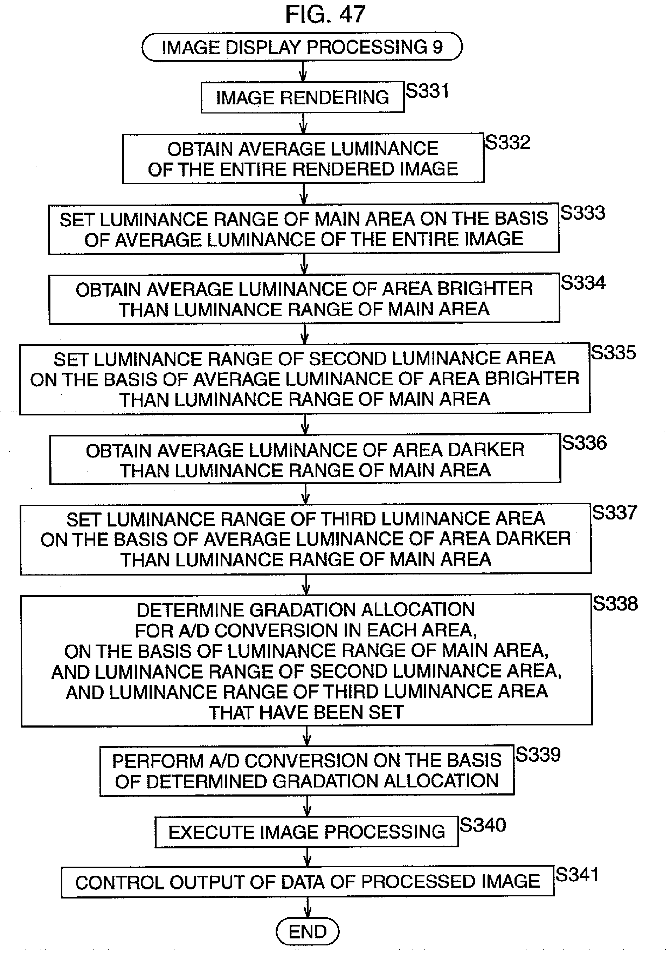

Next, image display processing 9, which is executed by the image processing apparatus 381 having the gradation assignment determination section 411-2 shown in Fig. 44, is described with reference to the flowchart of Fig. 47.

In step S331, the light detector 111 of the image capturing section 391 supplies the accumulated electric charge to the logarithm converter 112 in synchronization with a control signal supplied by the image capturing timing controller 114. Specifically, the light detector 111 acquires a captured image signal. The logarithm converter 112 generates an analog electronic signal obtained by converting the electric charge supplied by the light detector 111 into a voltage value that is substantially proportional to a logarithm of the number of electric charges, for each pixel by using the subthreshold characteristics of the MOSFETs, and supplies the generated analog electronic signal to the A/D converter 412 and the gradation assignment determination section 411-2.

In step S332, the average luminance calculation section 451 of the gradation assignment determination section 411-2 obtains average luminance of the entire captured image, and supplies the result of calculation to the main area luminance range setting section 452.

In step S333, the main area luminance range setting section 452 sets a luminance range of the main area on the basis of the average luminance of the entire image supplied from the average luminance calculation section 451, and supplies the set luminance range of the main area to the gradation assignment calculation section 465, high-luminance area luminance average value calculation section 461, and low-luminance area luminance average value calculation section 463.

The main area luminance range setting section 452 may, for example, set the range of predetermined luminance having mainly the average luminance of the image signal, as the luminance range of the main area, or may sequentially select, from among the pixels having the average luminance of the image signal, and in the order of pixels having a luminance value proximate to the average luminance, a predetermined number of pixels, and set the selected pixels as the luminance range of the main area.

In step S334, the high-luminance area luminance average value calculation section 461 obtains the average luminance of an area brighter than the luminance range of the main area that is set by the main area luminance range setting section 452, from the image signal supplied by the logarithm converter 112, and supplies the result of calculation to the high-luminance area luminance range setting section 462.

In step S335, the high-luminance area luminance range setting section 462 sets a luminance range of a second luminance area on the basis of the average luminance of the area brighter than the luminance range of the main area, the average luminance being supplied from the high-luminance area luminance average value calculation section 461, and supplies the set luminance range of the second luminance area to the gradation assignment calculation section 465.

The high-luminance area luminance range setting section 462 may, for example, set the range of predetermined luminance having mainly the average luminance of the pixels having a luminance range higher than the luminance range of the main area, as the luminance range of the second luminance area, or may sequentially select, from among the pixels having the average luminance of the pixels having the luminance range higher than the luminance range of the main area, and in the order of pixels having a luminance value proximate to the average luminance, a number of pixels, and set the selected pixels as the luminance range of the second luminance area.

In step S336, the low-luminance area luminance average value calculation section 463 obtains the average luminance of an area darker than the luminance range of the main area that is set by the main area luminance range setting section 452, from the image signal supplied by the logarithm converter 112, and supplies the result of calculation to the low-luminance area luminance range setting section 464.

In step S337, the low-luminance area luminance range setting section 464 sets a luminance range of a third luminance area on the basis of the average luminance of the area darker than the luminance range of the main area, the average luminance being supplied from the low-luminance area luminance average value calculation section 463, and supplies the set luminance range of the third luminance area to the gradation assignment calculation section 465.

The low-luminance area luminance range setting section 464 may, for example, set the range of predetermined luminance having mainly the average luminance of the pixels having a luminance range lower than the luminance range of the main area, as the luminance range of the third luminance area, or may sequentially select, from among the pixels having the average luminance of the pixels having the luminance range lower than the luminance range of the main area, and in the order of pixels having a luminance value proximate to the average luminance, a predetermined number of pixels, and set the selected pixels as the luminance range of the third luminance area.

In step S338, on the basis of the luminance range of the main area that is set by the main area luminance range setting section 452, the luminance range of the second luminance area that is set by the high-luminance area luminance range setting section 462, and the luminance range of the third luminance area that is set by the low-luminance area luminance range setting section 464, the gradation assignment calculation section 465 determines gradation assignment for A/D conversion performed in each area as described using, for example, Fig. 45, and supplies the determined gradation assignment to the A/D converter 412.

In step S339, the A/D converter 412 converts the analog electronic signal supplied from the logarithm converter 112 into a digital signal on the basis of gradation assignment supplied from the gradation assignment calculation section 465, and supplies the digital signal to the image generator 392.

In step S340, the image generator 392 performs image processing on the supplied image signal (but does not perform gradation conversion), and supplies the result of image processing to the output controller 95.

In step S341, the output controller 95 controls output of the image-processed image data to the image using device 83, whereby the processing is ended.

It should be noted here that the processing of outputting the generated image to the image using device 83 is described. When the generated image is output to the display 82 via the display controller 94 and displayed, basically the same processing is executed in step S331 through step S339, the image signal is supplied to the display controller 94, and display thereof is controlled.

By performing this processing, even if the image information required by the user exists in, particularly, a wide luminance range or in either the high-luminance or low-luminance area separated from the main luminance range in the image data captured by the image capturing section 391 using the logarithm conversion type imaging device 401, the limited number of gradation steps that the A/D converter 412 has is distributed effectively, and A/D conversion is executed. Therefore, even if the captured image is a wide dynamic range image, the sections having the luminance ranges corresponding to the main area and the second luminance area in an image to be displayed or printed out can be recognized well by the user.

In the image that is displayed by the image processing apparatus 381 having the gradation assignment determination section 411-2 shown in Fig. 44, even when the most parts of the captured image show the road surface, and the sky part, which has luminance extremely higher than the luminance of the road surface, is contained in the angular field, and furthermore the person wearing a dark suit that has luminance extremely lower than the luminance of the road surface is contained in the angular field, as shown in, for example Fig. 18, a large number of gradation steps are assigned in the vicinity of the luminance corresponding to the road surface, the sky, and the person wearing a dark suit. Therefore, use of the image processing apparatus 381 having the gradation assignment determination section 411-2 shown in Fig. 44 can prevent the occurrence of the whiteout condition in the sky part when the image display processing is performed, so that an unrecognizable image is not displayed. The use of the image processing apparatus 81 can also prevent the occurrence of the blackout condition on the person wearing a dark suit so that the user can make a distinction, and enables recognition (or extraction) of the person wearing a dark suit, when the image recognition processing is performed.

Similarly, in the image that is displayed by the image processing apparatus 381 having the gradation assignment determination section 411-2 shown in Fig. 44, specifically as explained in use of Fig. 19, even when the most parts of the captured image show the road surface darker than the tunnel, and a white wall within the tunnel that has luminance slightly higher than the luminance of the road surface, and the section other than the tunnel that has extremely high luminance are contained in the angular field, and furthermore the black vehicle within the tunnel that has luminance extremely lower than the luminance of the road surface within the tunnel is contained in the angular field, a large number of gradation steps are assigned in the vicinity of the luminance corresponding to the road surface within the tunnel, the wall of the tunnel, the outside of the tunnel, and the black vehicle within the tunnel. Therefore, use of the image processing apparatus 381 having the gradation assignment determination section 411-2 shown in Fig. 44 can prevent the occurrence of the whiteout condition in the section outside the tunnel when the image display processing is performed, so that an unrecognizable image is not displayed. The use of the image processing apparatus 81 can also prevent the occurrence of the blackout condition on the black vehicle within the tunnel so that the user can make a distinction, and enables extraction of a vehicle in the section outside the tunnel, guardrail, or the black vehicle within the tunnel, as an object to be recognized, when the image recognition processing is performed.

Moreover, in the gradation assignment determination section 411, three or more areas may be set, and different numbers of gradation steps may be assigned to the set area and the areas that are not set.

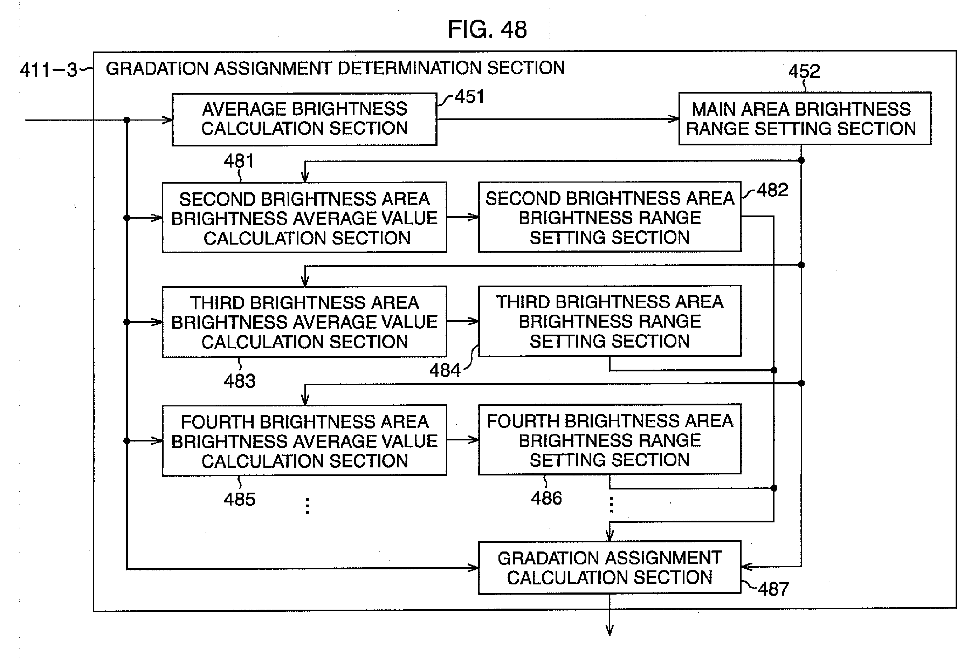

Next, Fig. 48 is a block diagram showing a configuration of a gradation assignment determination section 411-3, which is the third example of the configuration of the gradation assignment determination section 411 shown in Fig. 36. The gradation assignment determination section 411-3 sets a plurality of luminance areas and luminance ranges thereof besides the luminance range of the main area, and assigns the number of gradation steps, which is larger than that of the luminance range that are not set, to the plurality of set luminance ranges.

It should be noted that the same reference numerals are applied to the sections corresponding to those shown in Fig. 37, thus the explanations thereof are omitted accordingly.

Specifically, the gradation assignment determination section 411-3 shown in Fig. 48 has the average luminance calculation section 451 and the main area luminance range setting section 452 that are basically the same as those of the gradation assignment determination section 411-1 described using Fig. 37. The second luminance area luminance average value calculation section 453 and second luminance area luminance range setting section 454 of the gradation assignment determination section 411-1 are omitted. A second luminance area luminance average value calculation section 481, a second luminance area luminance range setting section 482, a third luminance area luminance average value calculation section 483, a third luminance area luminance range setting section 484, a fourth luminance area luminance average value calculation section 485, and a fourth luminance area luminance range setting section 486 are newly provided, and a gradation assignment calculation section 487 is provided in place of the gradation assignment calculation section 455.

The second luminance area luminance average value calculation section 481 calculates the average luminance of the pixels having luminance contained in a predetermined range other than the luminance range of the main area that is set by the main area luminance range setting section 452 (e.g., the range having luminance higher than the luminance of the luminance range of the main area is further divided into two ranges, and the highest-luminance section of these divided ranges can be the predetermined range), from the image signal supplied from the logarithm converter 112, and supplies the result of calculation to the second luminance area luminance range setting section 482.

The second luminance area luminance range setting section 482 sets the luminance range of the second luminance area on the basis of the average luminance of the pixels having the luminance contained in the predetermined range other than the main area, the average luminance being supplied from the second luminance area luminance average value calculation section 481, and supplies the set luminance range of the second luminance area to the gradation assignment calculation section 487.

The second luminance area luminance range setting section 482 may, for example, set the range of predetermined luminance having mainly the average luminance of the pixels having the luminance of the predetermined range, as the luminance range of the second luminance area, or may sequentially select, from among the pixels having the average luminance of the pixels having the luminance of the predetermined range, and in the order of pixels having a luminance value proximate to the average luminance, a predetermined number of pixels, and set the selected pixels as the luminance range of the second luminance area.

The third luminance area luminance average value calculation section 483 calculates the average luminance of the pixels having luminance contained in a predetermined range other than the luminance range of the main area that is set by the main area luminance range setting section 452 (e.g., the range having luminance higher than the luminance of the luminance range of the main area is further divided into two ranges, and the lower luminance section of these two divided ranges can be the predetermined range), from the image signal supplied from the logarithm converter 112, and supplies the result of calculation to the third luminance area luminance range setting section 484.

The third luminance area luminance range setting section 484 sets the luminance range of the third luminance area on the basis of the average luminance of the pixels having the luminance contained in the predetermined range other than the main area, the average luminance being supplied from the third luminance area luminance average value calculation section 483, and supplies the set luminance range of the third luminance area to the gradation assignment calculation section 487.

The third luminance area luminance range setting section 484 may, for example, set the range of predetermined luminance having mainly the average luminance of the pixels having the luminance of the predetermined range, as the luminance range of the third luminance area, or may sequentially select, from among the pixels having the average luminance of the pixels having the luminance of the predetermined range, and in the order of pixels having a luminance value proximate to the average luminance, a predetermined number of pixels, and set the selected pixels as the luminance range of the third luminance area.

The fourth luminance area luminance average value calculation section 485 calculates the average luminance of the pixels having luminance contained in a predetermined range other than the luminance range of the main area that is set by the main area luminance range setting section 452 (e.g., the range having luminance lower than the luminance of the luminance range of the main area is further divided into two ranges, and the lower luminance section of these two divided ranges can be the predetermined range), from the image signal supplied from the logarithm converter 112, and supplies the result of calculation to the fourth luminance area luminance range setting section 486.

The fourth luminance area luminance range setting section 486 sets the luminance range of a fourth luminance area on the basis of the average luminance of the pixels having the luminance contained in the predetermined range other than the main area, the average luminance being supplied from the fourth luminance area luminance average value calculation section 485, and supplies the set luminance range of the fourth luminance area to the gradation assignment calculation section 487.

The fourth luminance area luminance range setting section 486 may, for example, set the range of predetermined luminance having mainly the average luminance of the pixels having the luminance of the predetermined range, as the luminance range of the fourth luminance area, or may sequentially select, from among the pixels having the average luminance of the pixels having the luminance of the predetermined range, and in the order of pixels having a luminance value proximate to the average luminance, a predetermined number of pixels, and set the selected pixels as the luminance range of the fourth luminance area.

The gradation assignment calculation section 487 acquires the image signal supplied by the logarithm converter 112, and determines how many gradation steps to assign to which luminance range when A/D conversion is performed by the A/D converter 412, on the basis of the information on the luminance range of the main area, the luminance range of the second luminance area, the luminance range of the third luminance area, and the luminance range of the fourth luminance area that are supplied from the main area luminance range setting section 452, the second luminance area luminance range setting section 482, the third luminance area luminance range setting section 484, and the fourth luminance area luminance range setting section 486 respectively.

Specifically, for example similarly to the case explained in the use of Fig. 38, Fig. 39 or Fig. 45, the gradation assignment calculation section 487 performs setting such that assignment of the number of gradation steps for A/D conversion in the luminance ranges set as the main area and other area is different from assignment of the same in other luminance ranges. Specifically, the gradation assignment calculation section 487 determines gradation assignment so that more gradation steps are assigned to the luminance ranges set as the main area and other area, thus the A/D converter 412 executes A/D conversion processing such that the number of gradations of the pixels in the corresponding luminance ranges is increased. Consequently, the sections of the luminance ranges corresponding to the set luminance areas in an image to be displayed or printed out can be recognized well by the user.

It should be noted that Fig. 48 shows the second luminance area luminance average value calculation section 481, second luminance area luminance range setting section 482, third luminance area luminance average value calculation section 483, third luminance area luminance range setting section 484, fourth luminance area luminance average value calculation section 485, and fourth luminance area luminance range setting section 486 for setting the second through fourth luminance areas besides the main area. However, the gradation assignment determination section 411-3 may be further provided with another luminance area luminance average value calculation section and another luminance area luminance range setting section so that more luminance ranges can be set.

The processing executed by the gradation assignment determination section 411-3 shown in Fig. 48 is basically the same as the processing of the image display processing 9 described with reference to Fig. 47, and the processing executed by the gradation assignment determination section 411-3 applies when the number of areas to be set is increased, thus the explanation thereof is omitted.

The gradation assignment determination section 411-1 through the gradation assignment determination section 411-3 described above set the main area on the basis of the average value of the entire luminance of the captured image. On the other hand, the main area may be set based on the average value of the luminance of the pixels contained in a predetermined area in the captured image.

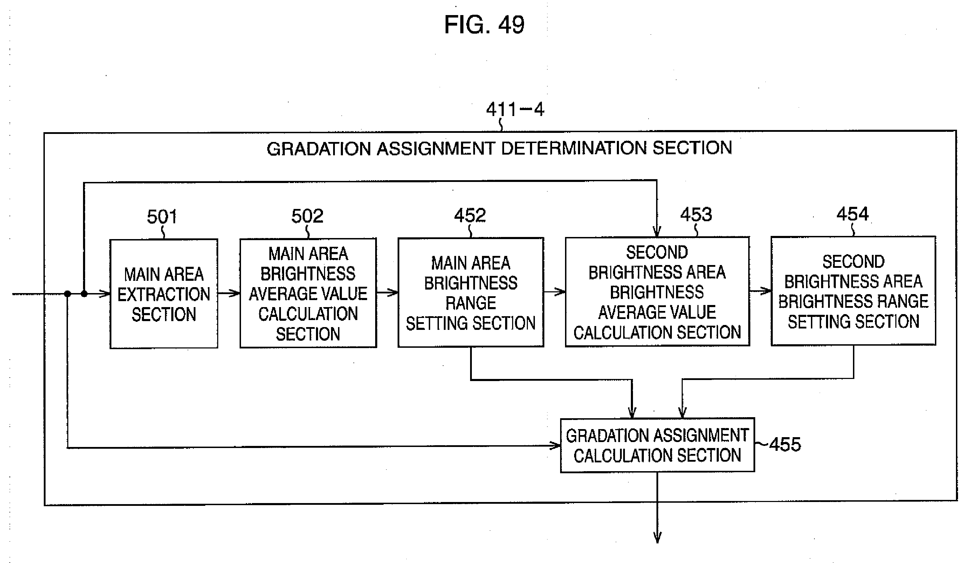

Fig. 49 is a block diagram showing a configuration of a gradation assignment determination section 411-4, which is the fourth example of the configuration of the gradation assignment determination section 411 shown in Fig. 36. The gradation assignment determination section 411-4 clips the pixels contained in a predetermined area within a captured image, and sets the main area on the basis of the average value of the luminance of the clipped area.

It should be noted that the same reference numerals are applied to the sections corresponding to those shown in Fig. 37, thus the explanations thereof are omitted accordingly.

The gradation assignment determination section 411-4 shown in Fig. 49 is provided with a main area clipping section 501 and a main area luminance average value calculation section 502 in place of the average luminance calculation section 451, but basically has the same configuration as the gradation assignment determination section 411-1 shown in Fig. 37.

The main area clipping section 501 acquires the image signal supplied from the logarithm converter 112, clips a predetermined image area from the acquired image signal, and supplies the pixels of the clipped area to the main area luminance average value calculation section 502.

As with the case described above, for example, when capturing an image of the front part of a traveling vehicle, and when the main area is set by using the average value of the entire captured image, the luminance range of the main area is changed by an extremely bright or dark matter entering the angle field, changing the brightness of the entire image to be displayed. Accordingly, the brightness of the road surface or the like that accounts for the major part of the displayed image field is changed frequently, and the brightness of the displayed image that the driver can feel might flicker, and it might be necessary to change a threshold value or other parameter for extracting an object (the vehicle, a person, a centerline, or the like), every time when the luminance range is changed.

Therefore, the area within the image that is clipped out by the main area clipping section 501 is taken as, for example, an area 221 in which a road surface seems to be captured constantly and which is located on the left side from the center of the image field, as shown in Fig. 22. Since the area to be clipped out is the area in which the same thing seems to be captured constantly, the brightness of the road surface accounting for the major part of the image to be displayed can be made substantially constant, whereby the brightness of the displayed image that the driver can feel can be prevented from flickering, and the image can be processed without changing the parameter for extracting the object, every time when the luminance range is changed.

The main area luminance average value calculation section 502 calculates the average luminance of the pixels of the clipped area supplied from the main area clipping section 501, and supplies the result of calculation to the main area luminance range setting section 452.

In the gradation assignment determination section 411-4 shown in Fig. 49, the luminance range of the main area is set based on the average luminance of the clipped area, which is calculated by the main area luminance average value calculation section 502, and the luminance range of the second luminance area having, the luminance of which is higher than the luminance area of the main area, is set based on the luminance range of the main area. Then, the gradation assignment calculation section 455 assigns more gradation steps to the luminance ranges that are set as the main area and the second luminance area, and A/D conversion is executed, thus the sections of the luminance ranges corresponding to the image to be displayed or printed out can be recognized by the user, or image data suitable to be processed by the image using device 83 can be generated.

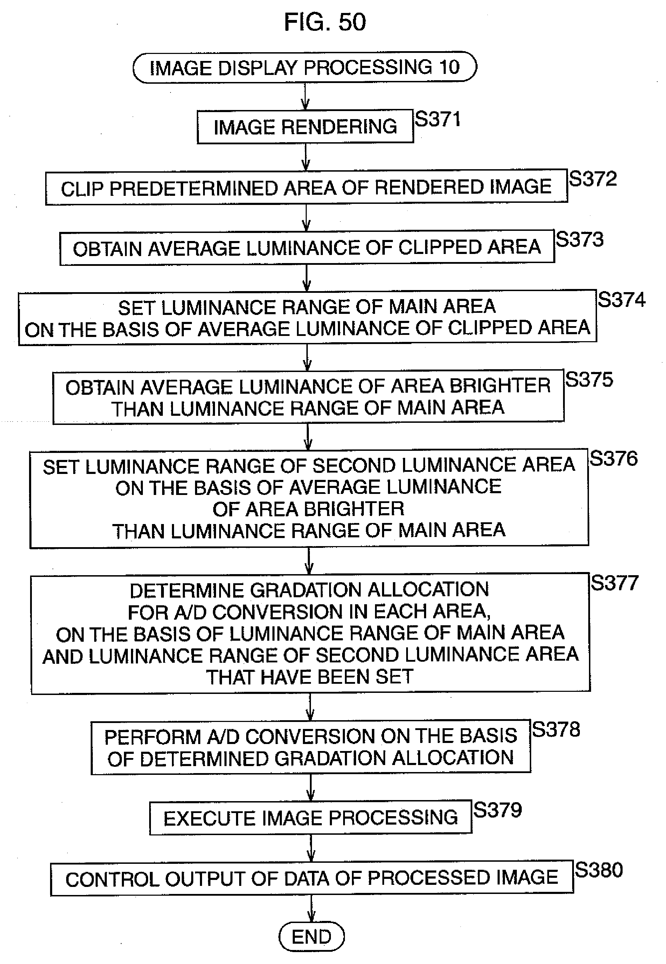

Next, image display processing 10, which is executed by the image processing apparatus 381 in which the gradation assignment determination section 411-4 shown in Fig. 49 is used, is described with reference to the flowchart of Fig. 50.

In step S371, the light detector 111 of the image capturing section 391 supplies the accumulated electric charge to the logarithm converter 112 in synchronization with a control signal supplied by the image capturing timing controller 114. Specifically, the light detector 111 acquires a captured image signal. The logarithm converter 112 generates an analog electronic signal obtained by converting the electric charge supplied by the light detector 111 into a voltage value that is substantially proportional to a logarithm of the number of electric charges, for each pixel by using the subthreshold characteristics of the MOSFETs, and supplies the generated analog electronic signal to the A/D converter 412 and the gradation assignment determination section 411-4.

In step S372, the main area clipping section 501 of the gradation assignment determination section 411-4 clips the predetermined image area described using, for example, Fig. 22, out from the image signal supplied from the logarithm converter 112, and supplies the pixels of the clipped area to the main area luminance average value calculation section 502.

In step S373, the main area luminance average value calculation section 502 obtains the average luminance of the pixels of the clipped area supplied from the main area clipping section 501, and supplies the result of calculation to the main area luminance range setting section 452.

In step S374, the main area luminance range setting section 452 sets the luminance range of the main area on the basis of the average luminance of the pixels of the clipped area, the average luminance being supplied from the main area luminance average value calculation section 502, and supplies the set luminance range of the main area to the second luminance area luminance average value calculation section 453 and the gradation assignment calculation section 455.

Then, the processing that is basically the same as that of steps S304 through S309 shown in Fig. 43 is executed in step S375 through step S380.

Specifically, the second luminance area luminance average value calculation section 453 obtains the average luminance of an area brighter than the luminance range of the main area, out of the image signal supplied from the logarithm converter 112, and the second luminance area luminance range setting section 454 sets the luminance range of the second luminance area on the basis of the average luminance of the area brighter than the luminance range of the main area.

Then, on the basis of the luminance range of the main area and the luminance range of the second luminance area, the gradation assignment calculation section 465 determines gradation assignment for A/D conversion performed in each area as described using, for example, Fig. 38 or Fig. 39, and supplies the determined gradation assignment to the A/D converter 412. The A/D converter 412 converts the analog electronic signal supplied from the logarithm converter 112 into a digital signal on the basis of gradation assignment supplied from the gradation assignment calculation section 465, and supplies the digital signal to the image generator 392. The image generator 392 performs image processing on the supplied image signal (but does not perform gradation conversion), and supplies the result of image processing to the output controller 95. The output controller 95 controls output of the image-processed image data to the image using device 83, whereby the processing is ended.

It should be noted here that the processing of outputting the generated image to the image using device 83 is described. When the generated image is output to the display 82 via the display controller 94 and displayed, basically the same processing is executed in step S371 through step S378, the image signal is supplied to the display controller 94, converted into the gradations that can be processed by the display 82, and then output, and the display is controlled.

By performing this processing, in the wide dynamic range image data captured by the image capturing section 391 using the logarithm conversion type imaging device 401, the limited number of gradation steps that the A/D converter 412 has is distributed effectively, and A/D conversion is executed. Therefore, even if the captured image is a wide dynamic range image, the sections having the luminance ranges corresponding to the main area and the second luminance area in an image to be displayed or printed out can be recognized well by the user. Especially, by clipping out the area in which an image of the same matter seems to be captured constantly, and by performing the processing based on the luminance of the clipped area, the brightness of the displayed image can be prevented from flickering when a dynamic image is displayed, and the image can be processed without changing the parameter for extracting the object, every time when the luminance range is changed.

The gradation assignment determination section 411-4 described above clips a predetermined area within the captured image, sets the luminance range of the main area on the basis of the pixels within the clipped area, and assigns a large number of gradation steps to the luminance range of the main area and the luminance range of the second luminance area that is the main part out of the luminance ranges higher than the luminance range of the main area. There will be described a case in which the luminance ranges to be set are not these two luminance ranges of the main area and second luminance area.

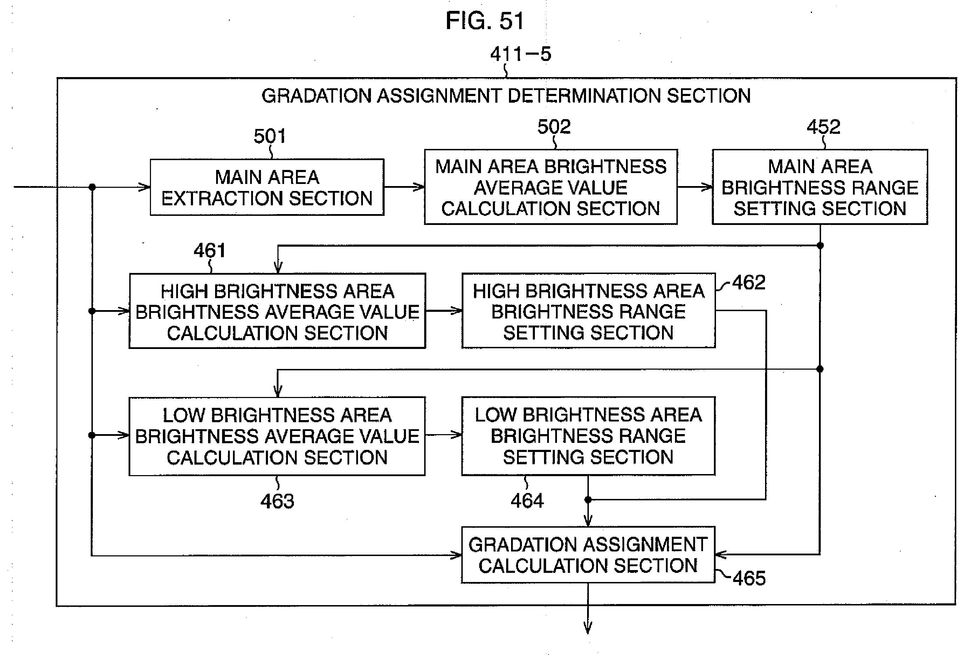

Next, Fig. 51 is a block diagram showing a configuration of a gradation assignment determination section 411-5, which is the fifth example of the configuration of the gradation assignment determination section 411 shown in Fig. 36. The gradation assignment determination section 411-5 clips out a predetermined area within the captured image, sets the luminance range of the main area on the basis of the pixels of the clipped area, sets three luminance ranges, i.e., the luminance range of the main area, the luminance range of the second luminance area, which is the main part of the luminance range higher than the luminance range of the main area, and the luminance range of a third luminance area, which is the main part of the luminance range lower than the luminance range of the main area, and assigns a large number of gradation steps to these three set luminance ranges.

It should be noted that the same reference numerals are applied to the sections corresponding to those shown in Fig. 44 or Fig. 49, thus the explanations thereof are omitted accordingly.

Specifically, the gradation assignment determination section 411-5 shown in Fig. 51 has the main area clipping section 501 and main area luminance average value calculation section 502 that are the same as those described using Fig. 49, and is provided with the main area luminance range setting section 452, the high-luminance area luminance average value calculation section 461, the high-luminance area luminance range setting section 462, the low-luminance area luminance average value calculation section 463, the low-luminance area luminance range setting section 464, and the gradation assignment calculation section 465 that are the same as those described using Fig. 44.

As with the gradation assignment determination section 411-4 described with reference to Fig. 49, the gradation assignment determination section 411-5 shown in Fig. 51 clips out a predetermined area within a captured image, and sets the luminance range of the main area on the basis of the pixels of the clipped area. Also, as with the gradation assignment determination section 411-2 described with reference to Fig. 44, the gradation assignment determination section 411-5 sets three luminance ranges, i.e., the luminance range of the main area, the luminance range of the second luminance area, which is the main part of the luminance range higher than the luminance range of the main area, and the luminance range of a third luminance area, which is the main part of the luminance range lower than the luminance range of the main area, and assigns a large number of gradation steps to these three set luminance ranges, and then A/D conversion is executed.

Specifically, when a matter that is extremely darker than the brightness of the entire image exists within an image to be captured, or when, for example, a person in black walking during the night is contained in the angle field, it is desired to clearly display an object that cannot be configured easily by the naked eye of the user. Particularly, as described above, when capturing an image of the front part of a traveling vehicle and displaying the captured image on the display, it is desired to generate a displayed image in which the driver can clearly confirm, from the image signal captured at the wide dynamic range, the person in black walking during the night. Therefore, an area to be clipped out is taken as an area in which the amount of reflected light is changed by the brightness of the surrounding areas and in which an image of the same thing is constantly captured, whereby the flickering of the image field can be prevented, and the information required by the driver can be displayed so that the driver can recognized it easily.

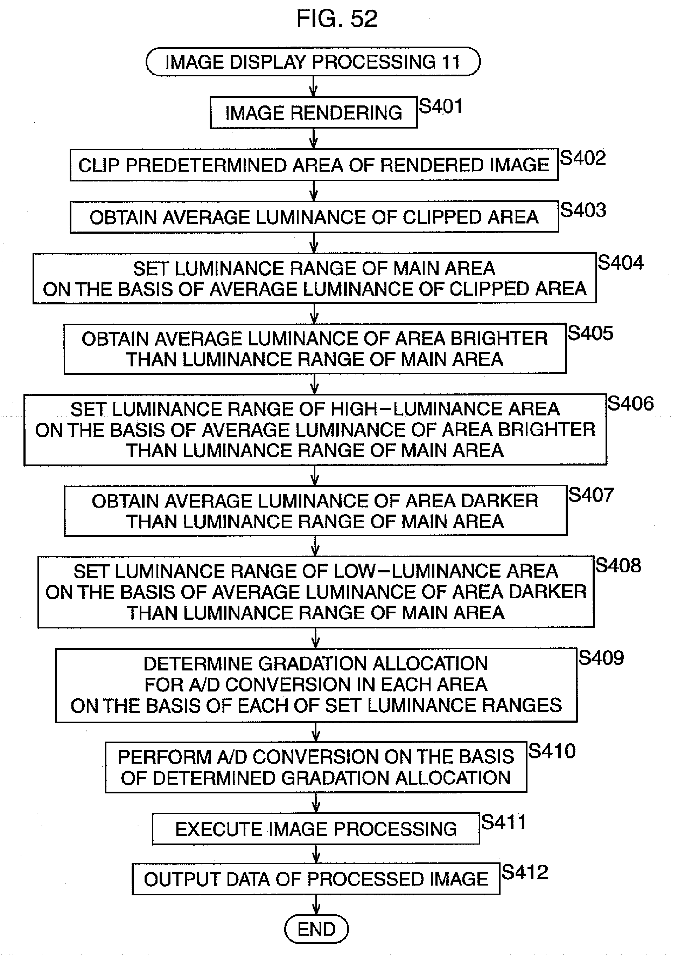

Next, image display processing 11, which is executed by the image processing apparatus 381 having the gradation assignment determination section 411-5 shown in Fig. 51, is described with reference to the flowchart of Fig. 52.

The processing that is basically the same as that of step S371 through step S373 shown in Fig. 50 is executed in step S401 through step S403.

Specifically, the light detector 111 of the image capturing section 391 supplies the accumulated electric charge to the logarithm converter 112 in synchronization with a control signal supplied by the image capturing timing controller 114. Specifically, the light detector 111 acquires a captured image signal. The logarithm converter 112 generates an analog electronic signal obtained by converting the electric charge supplied by the light detector 111 into a voltage value that is substantially proportional to a logarithm of the number of electric charges, for each pixel by using the subthreshold characteristics of the MOSFETs, and supplies the generated analog electronic signal to the A/D converter 412 and the gradation assignment determination section 411-4. The main area clipping section 501 of the gradation assignment determination section 411-4 clips the predetermined image area described using, for example, Fig. 22, out from the image signal supplied from the logarithm converter 112, and supplies the pixels of the clipped area to the main area luminance average value calculation section 502. The main area luminance average value calculation section 502 obtains the average luminance of the pixels of the clipped area supplied from the main area clipping section 501, and supplies the result of calculation to the main area luminance range setting section 452.

In step S404, the main area luminance range setting section 452 sets the luminance range of the main area on the basis of the average luminance of the pixels of the clipped area, the average luminance being supplied from the main area luminance average value calculation section 502, and supplies the set luminance range of the main area to the gradation assignment calculation section 465, high-luminance area luminance average value calculation section 461, and low-luminance area luminance average value calculation section 463.

Then, the processing that is basically the same as that of steps S334 through S341 shown in Fig. 47 is executed in step S405 through step S412.

Specifically, the high-luminance area luminance average value calculation section 461 obtains the average luminance of an area brighter than the luminance range of the main area, out of the image signal supplied from the logarithm converter 112, and the high-luminance area luminance range setting section 462 sets the luminance range of the second luminance area on the basis of the average luminance of the area brighter than the luminance range of the main area, and supplies the set luminance range of the second luminance area to the gradation assignment calculation section 465.

Also, the low-luminance area luminance average value calculation section 463 obtains the average luminance of an area darker than the luminance range of the main area, out of the image signal supplied from the logarithm converter 112, and the low-luminance area luminance range setting section 464 sets the luminance range of the third luminance area on the basis of the average luminance of the area darker than the luminance range of the main area, and supplies the set luminance range of the third luminance area to the gradation assignment calculation section 465.

Then, on the basis of the set luminance range of the main area, the set luminance range of the second luminance area, and the set luminance range of the third luminance area, the gradation assignment calculation section 465 determines gradation assignment for A/D conversion performed in each area as described using, for example, Fig. 45, and supplies the determined gradation assignment to the A/D converter 412. The A/D converter 412 converts the analog electronic signal supplied from the logarithm converter 112 into a digital signal on the basis of gradation assignment supplied from the gradation assignment calculation section 465, and supplies the digital signal to the image generator 392. The image generator 392 performs image processing on the supplied image signal (but does not perform gradation conversion), and supplies the result of image processing to the output controller 95. The output controller 95 controls output of the image-processed image data to the image using device 83, whereby the processing is ended.

It should be noted here that the processing of outputting the generated image to the image using device 83 is described. When the generated image is output to the display 82 via the display controller 94 and displayed, basically the same processing is executed in step S401 through step S410, the image signal is supplied to the display controller 94, converted into the gradations that can be processed by the display 82, and then output, and the display is controlled.

By performing this processing, in the A/D-converted image data captured by the image capturing section 391 using the logarithm conversion type imaging device 401, the limited number of gradation steps that the A/D converter 412 has is distributed effectively. Therefore, even if the captured image is a wide dynamic range image, the sections having the luminance ranges corresponding to the main area, second luminance area, and third luminance area in an image to be displayed or printed out can be recognized well by the user. Especially, the brightness of the displayed image can be prevented from flickering when a dynamic image is displayed, and the image can be processed without changing the parameter for extracting the object, every time when the luminance range is changed.

Also, in the gradation assignment determination section 411, the predetermined area within the captured image may be clipped and three or more areas may be set on the basis of the pixels of the clipped area. The gradation assignment determination section 411 can set different numbers of gradation steps to be assigned to the set areas and the areas that are not set.

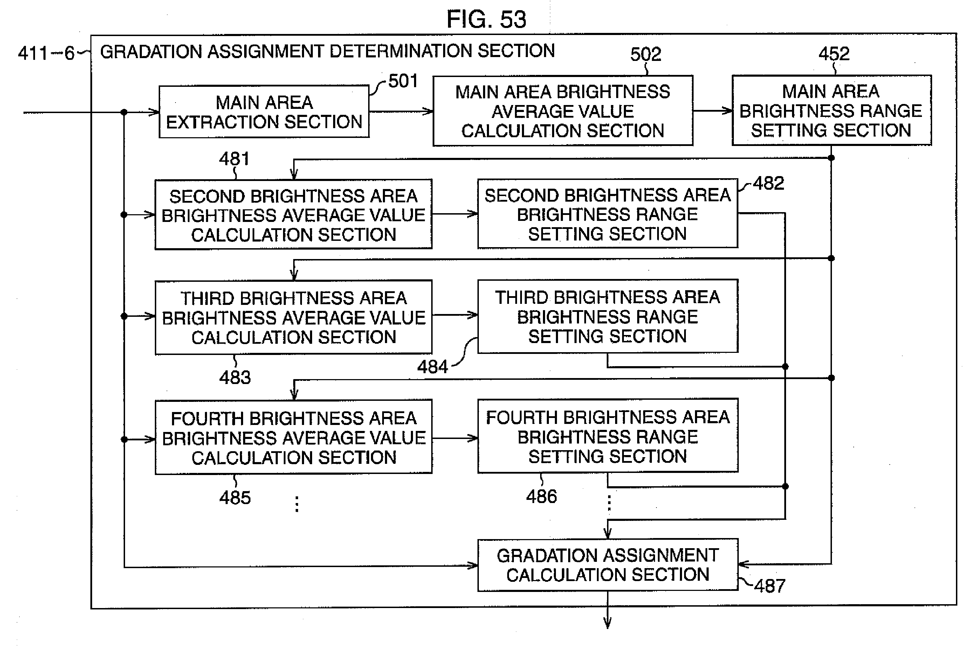

Next, Fig. 53 is a block diagram showing a configuration of a gradation assignment determination section 411-6, which is the sixth example of the configuration of the gradation assignment determination section 411 shown in Fig. 36. The gradation assignment determination section 411-6 clips out a predetermined area within the captured image, sets the luminance range of the main area on the basis of the pixels of the clipped area, sets luminance ranges corresponding to a plurality of luminance areas, other than the luminance range of the main area, and assigns the number of gradation steps larger than the number of gradations steps of the ranges other than the set ranges, to the plurality of set luminance ranges.

It should be noted that the same reference numerals are applied to the sections corresponding to those shown in Fig. 48 or Fig. 49, thus the explanations thereof are omitted accordingly.

Specifically, the gradation assignment determination section 411-6 shown in Fig. 53 has the main area clipping section 501 and main area luminance average value calculation section 502 that are the same as those described using Fig. 49, and is provided with the main area luminance range setting section 452, the second luminance area luminance average value calculation section 481, the second luminance area luminance range setting section 482, the third luminance area luminance average value calculation section 483, the third luminance area luminance range setting section 484, the fourth luminance area luminance average value calculation section 485, the fourth luminance area luminance range setting section 486, and the gradation assignment calculation section 487 that are the same as those described using Fig. 48.

As with the gradation assignment determination section 411-4 described with reference to Fig. 49, the gradation assignment determination section 411-6 shown in Fig. 53 clips out a predetermined area within a captured image, and sets the luminance range of the main area on the basis of the pixels of the clipped area. Also, as with the gradation assignment determination section 411-3 described with reference to Fig. 48, the gradation assignment determination section 411-6 sets luminance ranges of a plurality of luminance areas besides the luminance range of the main area, and assigns the number of gradation steps that is larger than the number of gradation steps of the range other than the set ranges, to the plurality of set luminance ranges.

It should be noted that although Fig. 53 shows the second luminance area luminance average value calculation section 481, second luminance area luminance range setting section 482, third luminance area luminance average value calculation section 483, third luminance area luminance range setting section 484, fourth luminance area luminance average value calculation section 485, and fourth luminance area luminance range setting section 486 for setting the second through fourth luminance areas besides the main area, the gradation assignment determination section 411-3 may be further provided with another luminance area luminance average value calculation section and another luminance area luminance range setting section so that more luminance areas can be set.

The processing executed by the gradation assignment determination section 411-6 shown in Fig. 53 is basically the same as the image display processing 11 described using Fig. 52, and corresponds to the case where the number of areas to be set is increased, thus the explanation thereof is omitted.

The gradation assignment determination section 411-1 through the gradation assignment determination section 411-6 described above set the main area on the basis of the average value of the entire luminance of the captured image or on the basis of the average value of the luminance of the predetermined section. On the other hand, a histogram that shows a distribution of the luminance value of each pixel contained in the captured image is created. By analyzing this histogram, a plurality of luminance ranges may be set, and the number of gradation steps, which is larger than the number of gradation steps of a range other than the set ranges, may be assigned to the set luminance ranges, and A/D conversion may be performed.

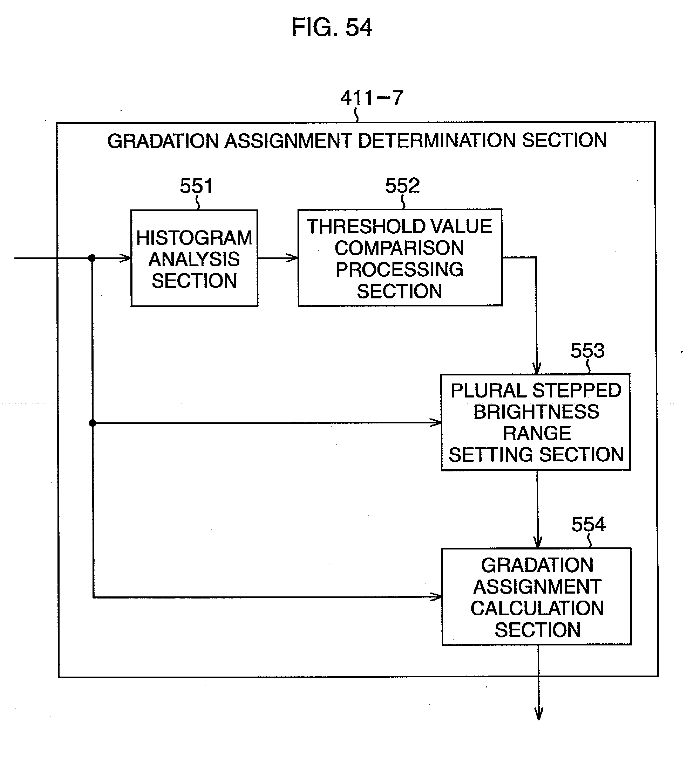

Fig. 54 is a block diagram showing a configuration of a gradation assignment determination section 411-7, which is the seventh example of the configuration of the gradation assignment determination section 411 shown in Fig. 36. The gradation assignment determination section 411-7 analyzes a histogram showing the luminance value of each pixel of a captured image, and sets a plurality of luminance ranges on the basis of the result of analysis.

The gradation assignment determination section 411-7 is constituted by a histogram analyzing section 551, a threshold value comparing processing section 552, a multistage luminance range setting section 553, and a gradation assignment calculation section 554.

The histogram analyzing section 551 acquires the image signal supplied from the logarithm converter 112, creates and analyzes a histogram showing a distribution of the luminance value of each pixel of the captured image on the basis of the acquired image signal, and supplies the result of analysis to the threshold value comparing processing section 552.

The threshold value comparing processing section 552 compares the number of pixels corresponding to each luminance value of an input signal with a predetermined threshold value on the basis of the result of analyzing the histogram supplied from the histogram analyzing section 551. In other words, the threshold value comparing processing section 552 extracts a luminance range having at least a certain number of pixels, from the luminance ranges of the captured image. The threshold value comparing processing section 552 supplies the multistage luminance range setting section 553 with information showing the luminance value obtained by determining,'as a result of comparison with the threshold value, that the number of pixels is at least the threshold value.

Here, even if the threshold value is previously obtained and set experimentally/experientially, the user may be able to set it arbitrarily. If the threshold value is set too low, almost all information remains, thus an image to be obtained might not have no concentration difference (no sharpness), as with the displayed image that is obtained when a wide dynamics range image captured using the logarithm conversion type imaging device 401 is not processed by the image processing apparatus 381, as described using, for example, Fig. 10. On the other hand, when the threshold value is set too high, a lot of information items might be lost, thus only some of the luminance ranges are displayed clearly.

The multistage luminance range setting section 553 sets a plurality of luminance ranges to which the number of gradation steps larger than that of the ranges other than the set ranges is assigned, on the basis of the luminance value that is supplied from the luminance value comparing processing section 552 and obtained by determining that the number of pixels is the threshold value or more. The multistage luminance range setting section 553 then supplies the set luminance ranges to the gradation assignment calculation section 554. The number of luminance ranges to be set by the multistage luminance range setting section 553 is determined based on the comparison result supplied from the threshold value comparing processing section 552, but, for example, an upper limit of the number of luminance ranges may be determined beforehand.

The gradation assignment calculation section 554 acquires the image signal supplied by the logarithm converter 112, and determines how many gradation steps to assign to which luminance range when A/D conversion is performed by the A/D converter 412, on the basis of the information on the set luminance ranges provided from the multistage luminance range setting section 553. The gradation assignment calculation section 554 determines assignment of the number of gradation steps so that the number of gradation steps for A/D conversion for the set luminance ranges becomes larger than the number of gradation steps for A/D conversion that is assigned to the other luminance areas, in basically the same manner as the case described with reference to, for example, Fig. 38, Fig. 39 or Fig. 45.

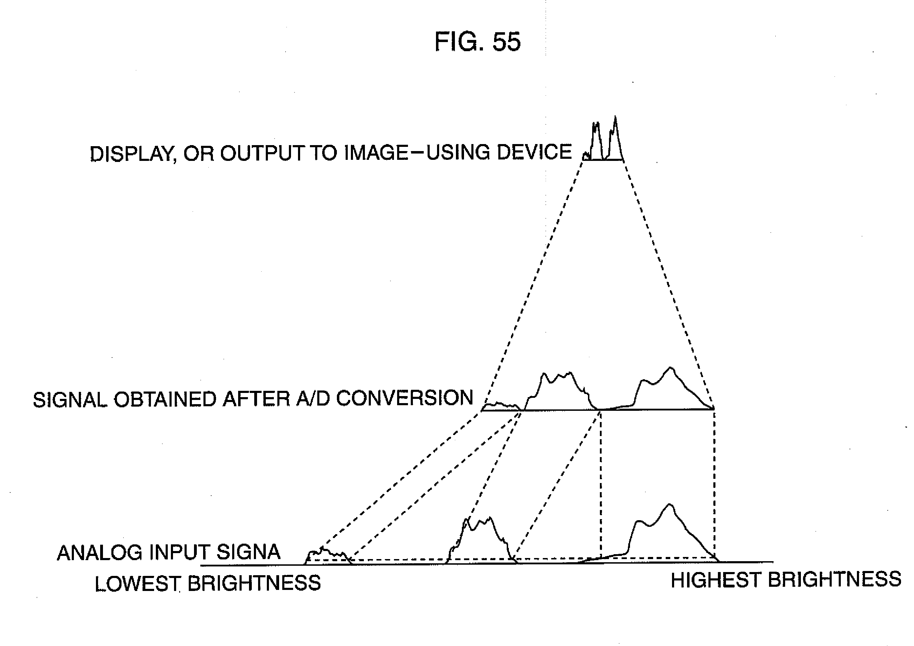

Specifically, in the gradation assignment determination section 411-7, as shown in Fig. 55, the histogram analyzing section 551 analyzes the histogram showing a distribution of the luminance value of each pixel (analog signal) of the captured image, and the threshold value comparing processing section 552 compares the number of pixels with a threshold value and extracts the luminance having the number of pixels within the same image (within one frame), the number of pixels corresponding to the threshold value or more. Then, on the basis of the extracted luminance, the multistage luminance range setting section 553 sets a plurality of luminance ranges, and the gradation assignment calculation section 554 calculates assignment of the number of gradation for A/D conversion so that the number of gradation steps within each range is assigned preferentially, thus the luminance gradation width of each of the set luminance ranges is sufficiently provided.

Next, image display processing 12, which is executed by the image processing apparatus 381 in which the gradation assignment determination section 411-7 shown in Fig. 54 is used, is described with reference to the flowchart of Fig. 56.

In step S441, the light detector 111 of the image capturing section 391 supplies the accumulated electric charge to the logarithm converter 112 in synchronization with a control signal supplied by the image capturing timing controller 114. Specifically, the light detector 111 acquires a captured image signal. The logarithm converter 112 generates an analog electronic signal obtained by converting the electric charge supplied by the light detector 111 into a voltage value that is substantially proportional to a logarithm of the number of electric charges, for each pixel by using the subthreshold characteristics of the MOSFETs, and supplies the generated analog electronic signal to the A/D converter 412 and the gradation assignment determination section 411-7.

In step S442, the histogram analyzing section 551 of the gradation assignment determination section 411-7 creates and analyzes the histogram showing a distribution of the luminance of each pixel within the captured image, on the basis of the image signal supplied by the logarithm converter 112, and supplies the result of analysis to the threshold value comparing processing section 552.

In step S443, the threshold value comparing processing section 552 compares a predetermined threshold with the number of pixels corresponding to the threshold value of each input signal on the basis of the result of analyzing the histogram supplied by the histogram analyzing section 551. The threshold value comparing processing section 552 supplies the multistage luminance range setting section 553 with information showing the luminance value obtained by determining, as a result of comparison with the threshold value, that the number of pixels is at least the threshold value as a result of comparing the threshold value with the number of pixels.

In step S444, the multistage luminance range setting section 553 sets a plurality of luminance ranges to which the number of gradation steps larger than that of the ranges other than the set ranges is assigned, on the basis of the luminance value that is supplied from the luminance value comparing processing section 552 and obtained by determining that the number of pixels is the threshold value or more, and then supplies the set luminance ranges to the gradation assignment calculation section 554.

In step S445, the gradation assignment calculation section 554 determines gradation assignment for A/D conversion in each area on the basis of the information on the set luminance ranges supplied by the multistage luminance range setting section 553, in basically the same manner as the case described with reference to, for example, Fig. 38, Fig. 39 or Fig. 45, and supplies the result of determination to the A/D converter 412.

In step S446, the A/D converter 412 converts the analog electronic signal supplied from the logarithm converter 112 into a digital signal on the basis of gradation assignment supplied from the gradation assignment calculation section 465, and supplies the digital signal to the image generator 392.

In step 5447, the image generator 392 performs image processing on the supplied image signal (but dos not perform gradation conversion), and supplies thus obtained image signal to the output controller 95.

In step S448, the output controller 95 controls output of the image-processed image data to the image-using device 83, whereby the processing is ended.

It should be noted here that the processing of outputting the generated image to the image-using device 83 is described. When the generated image is output to the display 82 via the display controller 94 and displayed, basically the same processing is executed in step S441 through step S446, the image signal is supplied to the display controller 94, and the display thereof is controlled.

By performing this processing, even if the image information required by the user exists in a wide luminance range discretely in the image data captured by the image capturing section 391 using the logarithm conversion type imaging device 401, the range in which the main luminance is distributed within the image can be detected by processing the image using the image processing apparatus 381 in which the gradation assignment determination section 411-7 shown in Fig. 54 is used. Also, since a large number of gradation steps for A/D conversion are assigned within this range, the wide dynamic range image ca be displayed so that the user can recognized it, and various types of processing can be executed easily.

The gradation assignment determination section 411-1 through the gradation assignment determination section 411-7 described above set the luminance ranges to which a large number of gradation steps are assigned, on the basis of the captured image. On the other hand, the luminance ranges to which a large number of gradation steps are assigned may be set beforehand or set by an operation that is input by the user. For example, when the angle field of the image to be captured is fixed, or when a luminance area of pixels within the captured image, which corresponds to the image information required by the user, is known previously because the obj ect is exposed to certain light, luminance areas to which a large number of gradation steps are assigned can be determined beforehand. Accordingly, the processing can be performed easily and the costs of the device can be reduced.

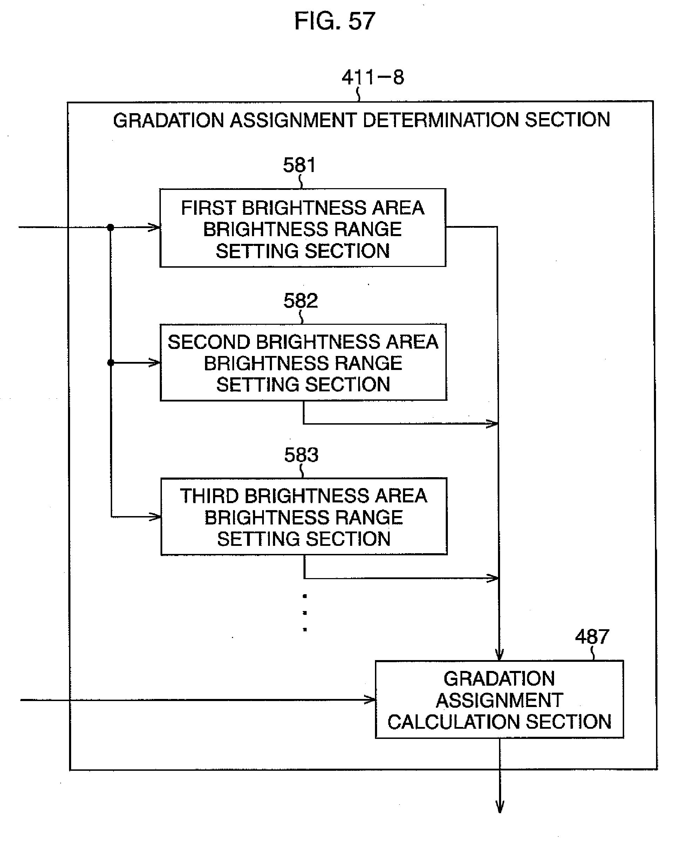

Fig. 57 is a block diagram showing a configuration of a gradation assignment determination section 411-8, which is the eighth example of the gradation assignment determination section 411 shown in Fig. 36. The gradation assignment determination section 411-8 is used when luminance areas to be assigned with a large number of gradation steps are determined beforehand.

A first luminance area luminance range setting section 581 receives an input of a set value of a first luminance area luminance range from the operation input section 92, or acquires a set value of a first luminance area that is stored in an unshown storage section, and supplies the set value of the first luminance range to the gradation assignment calculation section 487.

A second luminance area luminance range setting section 582 receives an input of a set value of a second luminance area luminance range from the operation input section 92, or acquires a set value of a second luminance area that is stored in the unshown storage section, and supplies the set value of the luminance range of the second luminance range to the gradation assignment calculation section 487.

A third luminance area luminance range setting section 583 receives an input of a set value of a third luminance area luminance range from the operation input section 92, or acquires a set value of a third luminance area that is stored in the unshown storage section, and supplies the set value of the luminance range of the third luminance range to the gradation assignment calculation section 487.

The gradation assignment calculation section 487 executes the processing that is basically the same as that performed in the gradation assignment determination section 411-3 shown in Fig. 48. The gradation assignment calculation section 487 determines how many gradation steps to assign to which luminance range when A/D conversion is performed by the A/D converter 412. Specifically, on the basis of the information on the first luminance range, the luminance range of the second luminance area, and the luminance range of the third luminance area that are supplied from the first luminance area luminance range setting section 581, the second luminance area luminance range setting section 582, and the third luminance area luminance range setting section 583 respectively, the gradation assignment calculation section 487 determines the number of gradation steps for A/D conversion to assign to each luminance area.

Although Fig. 57 shows the first luminance area luminance range setting section 581, second luminance area luminance range setting section 582, and third luminance area luminance range setting section 583 for setting the first through third luminance area luminance ranges, the gradation assignment determination section 411-8 may be provided with another luminance area luminance range setting section so that it can accept the setting of more luminance area luminance ranges.

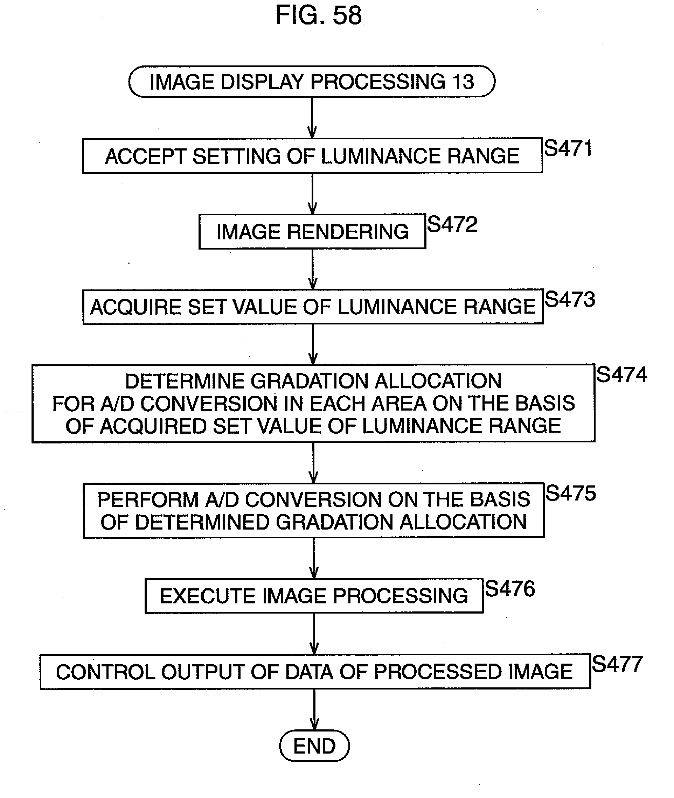

Next, image display processing 13, which is executed by the image processing apparatus 381 in which the gradation assignment determination section 411-8 shown in Fig. 57 is used, is described with reference to the flowchart of Fig. 58.

In step S471, the operation input section 92 receives input of set values of a plurality of luminance ranges from the user, and supplies the input set values to the gradation assignment determination section 411-8.

In step S472, the light detector 111 of the image capturing section 391 supplies the accumulated electric charge to the logarithm converter 112 in synchronization with a control signal supplied by the image capturing timing controller 114. Specifically, the light detector 111 acquires a captured image signal. The logarithm converter 112 generates an analog electronic signal obtained by converting the electric charge supplied by the light detector 111 into a voltage value that is substantially proportional to a logarithm of the number of electric charges, for each pixel by using the subthreshold characteristics of the MOSFETs, and supplies the generated analog electronic signal to the A/D converter 412 and the gradation assignment determination section 411-8.

In step S473, the first luminance area luminance range setting section 581, second luminance area luminance range setting section 582, and third luminance area luminance range setting section 583 of the gradation assignment determination section 411-8 acquires the set values of the plurality of luminance ranges supplied by the operation input section 92, and supplies the set values to the gradation assignment calculation section 487.

In step S474, on the basis of the set values of the plurality of luminance ranges supplied by the first luminance area luminance range setting section 581, second luminance area luminance range setting section 582, and third luminance area luminance range setting section 583, the gradation assignment calculation section 487 determines gradation assignment for A/D conversion for each area and supplies the same to the A/D converter 412, as described with reference to, for example, Fig. 38, Fig. 39 or Fig. 45.

In step S475, the A/D converter 412 converts the analog electronic signal supplied from the logarithm converter 112 into a digital signal on the basis of gradation assignment supplied from the gradation assignment calculation section 465, and supplies the digital signal to the image generator 392.

In step S476, the image generator 392 performs image processing on the supplied image signal (but does not perform gradation conversion), and supplies thus obtained image signal to the output controller 95.

In step S477, the output controller 95 controls output of the image-processed image data to the image-using device 83, whereby the processing is ended.

It should be noted here that the processing of outputting the generated image to the image-using device 83 is described. When the generated image is output to the display 82 via the display controller 94 and displayed, basically the same processing is executed in step S471 through step S475, the image signal is supplied to the display controller 94, and the display thereof is controlled.

Moreover, there has been described that the input of the set value of the luminance range of each luminance area is received from the operation input section 92, but when the luminance range of each luminance area is stored in the unshown storage section beforehand, needless to say, the stored set values of the luminance areas are acquired.

By performing this processing, in the wide dynamic range image data captured by using the logarithm conversion type imaging device 401, if the luminance ranges of pixels that correspond to the image information required by the user are known, the image information that is required by the user can be displayed so that the user can recognize it, by means of simple processing by previously setting the luminance ranges to which a large number of gradation steps are assigned, or image data that is suitable in executing various types of processing including printing, image recognition, recording or transmission can be generated, and the costs of the device can be further reduced.

The histogram showing a distribution of the luminance value of each pixel contained in the captured image may be analyzed in the previously set luminance areas, and the luminance having at least a certain number of pixels may be extracted from the determined luminance ranges, and the luminance areas to which a large number of gradation steps are assigned may be determined based on the result of extraction.

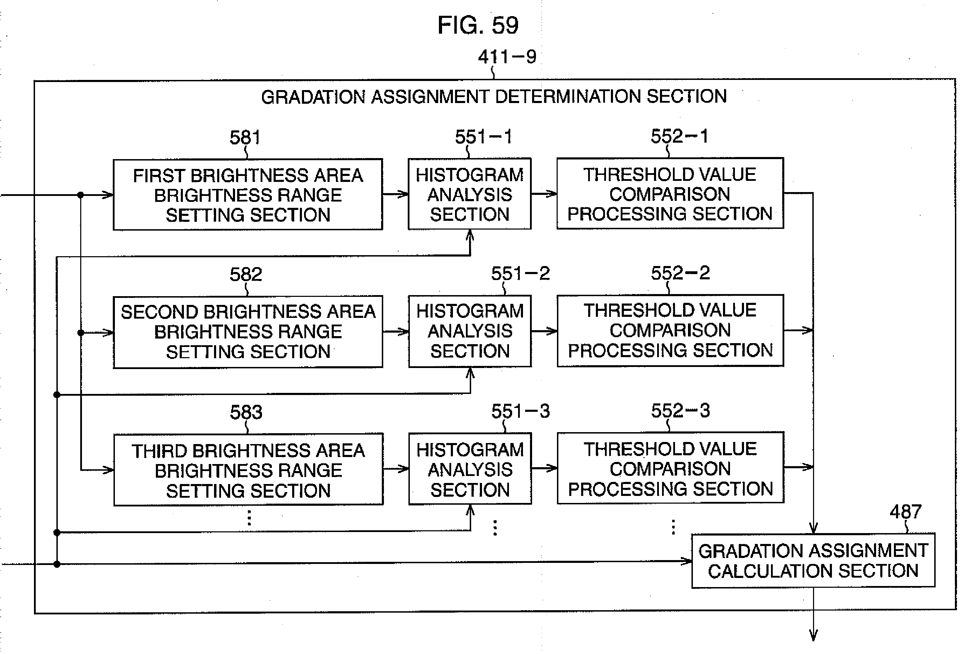

Fig. 59 is a block diagram showing a configuration of a gradation assignment determination section 411-9, which is the ninth example of the gradation assignment determination section 411 shown in Fig. 36. The gradation assignment determination section 411-9 extracts luminance having at least a certain number of pixels from the predetermined luminance ranges, on the basis of the histogram analysis, and determines, on the basis of the result of extraction, luminance ranges to which a large number of gradation steps are assigned.

It should be noted that the same reference numerals are applied to the sections corresponding to those shown in Fig. 54 or Fig. 57, thus the explanations thereof are omitted accordingly.

Specifically, the gradation assignment determination section 411-9 shown in Fig. 59 has the first luminance area luminance range setting section 581, the second luminance area luminance range setting section 582, the third luminance area luminance range setting section 583, and the gradation assignment calculation section 487 of the gradation assignment determination section 411-8 that are described with reference to Fig. 57. Moreover, the gradation assignment determination section 411-9 is provided with histogram analyzing sections 551-1 through 551-3 and threshold value comparing processing sections 552-1 through 552-3 that can execute the same processing performed by the histogram analyzing section 551 and threshold value comparing processing section 552 provided in the gradation assignment determination section 411-7 described in Fig. 54, in order to analyze the histogram and performs comparison with a predetermined threshold on the basis of the set value of each luminance range that is output.

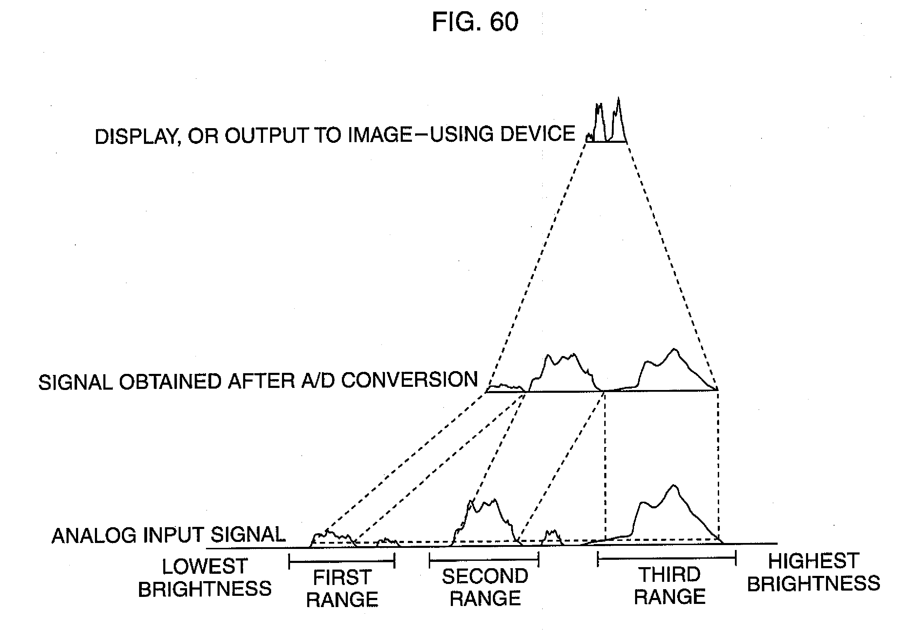

Specifically, as shown in Fig. 60, in gradation assignment determination section 411-9, the histogram analyzing sections 551-1 through 551-3 analyze the luminance value of each pixel contained in the captured image in each of the first range set by the first luminance area luminance range setting section 581, second range set by the second luminance area luminance range setting section 582, and third range set by the third luminance area luminance range setting section 583, and the threshold value comparing processing sections 552-1 through 552-3 compare the pixels with the threshold value, thereby extracting luminance having pixels, the number of which corresponds to the predetermined threshold value or more.

Specifically, in the luminance ranges other than the first, second and third ranges, even when there exists luminance having pixels, the number of which is larger than the threshold value, the luminance is not set as the luminance range to which the number of gradation steps is assigned preferentially.

Then, on the basis of the extracted luminance, in the gradation assignment calculation section 487, the number of gradation steps is preferentially assigned to the pixels within the range, and A/D conversion based on the gradation step assignment is executed.

For example, when the angle field of the image to be captured is fixed, or when, for example, a luminance area of pixels corresponding to the image information required by the user is changed in several patterns according to time although the luminance area of pixels within the captured image, which corresponds to the image information required by the user, is known previously because the object is exposed to certain light, the amount of information varies between the daytime and the evening, such that the luminance area has more information during the daytime but has almost no information during the evening, or the luminance area has more information during the evening and the nighttime but has almost no information during the morning and daytime.

In such a case, by comparing the histogram analysis with the threshold value even if all luminance areas that might contain the image information required by the user are previously set, it becomes possible to prevent the number of gradation steps from being preferentially assigned to the luminance areas that do not have the required information.

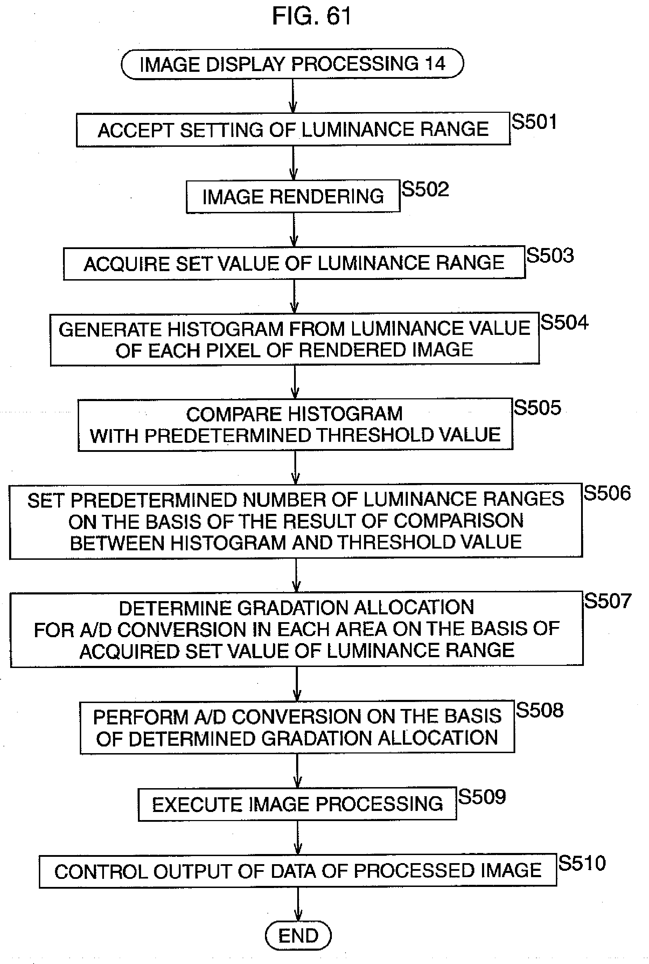

Next, image display processing 14, which is executed by the image processing apparatus 381 in which the gradation assignment determination section 411-9 shown in Fig. 59 is used, is described with reference to the flowchart of Fig. 61.

In step S501, the operation input section 92 receives input of set values of a plurality of luminance ranges from the user, and supplies the input set values to the gradation assignment determination section 411-9.

In step S502, the light detector 111 of the image capturing section 391 supplies the accumulated electric charge to the logarithm converter 112 in synchronization with a control signal supplied by the image capturing timing controller 114. Specifically, the light detector 111 acquires a captured image signal. The logarithm converter 112 generates an analog electronic signal obtained by converting the electric charge supplied by the light detector 111 into a voltage value that is substantially proportional to a logarithm of the number of electric charges, for each pixel by using the subthreshold characteristics of the MOSFETs, and supplies the generated analog electronic signal to the A/D converter 412 and the gradation assignment determination section 411-9.

In step S503, the first luminance area luminance range setting section 581, second luminance area luminance range setting section 582, and third luminance area luminance range setting section 583 of the gradation assignment determination section 411-9 acquires the set values of the plurality of luminance ranges supplied by the operation input section 92, and supplies the set values to the histogram analyzing sections 551-1 through 551-3.

In step S504, the histogram analyzing sections 551-1 through 551-3 create and analyze the histogram showing a distribution of the luminance values within the first through third ranges of the captured image, on the basis of the image signal supplied by the logarithm converter 112, as described with reference to Fig. 60, and supply the result of analysis to the threshold value comparing processing sections 552-1 through 552-3.

In step S505, the threshold value comparing processing sections 552-1 through 552-3 compare the number of pixels corresponding to each luminance value of an input signal with a predetermined threshold value on the basis of the result of analyzing the histogram within the first through third ranges, the result being supplied from the histogram analyzing sections 551-1 through 551-3. The threshold value comparing processing sections 552-1 through 552-3 supply the gradation assignment calculation section 487 with the luminance value obtained by determining, as a result of comparison with the threshold value, that the number of pixels is at least the threshold value.

In step S506, the gradation assignment calculation section 487 sets a luminance range to which a large number of gradation steps are assigned, on the basis of the luminance value supplied from the threshold value comparing processing sections 552-1 through 552-3.

In step S507, the gradation assignment calculation section 487 determines gradation assignment for A/D conversion for each area as described using, for example, Fig. 38, Fig. 39, or Fig. 45, and supplies the determined gradation assignment to the A/D converter 412.

In step S508, the A/D converter 412 converts the analog electronic signal supplied from the logarithm converter 112 into a digital signal on the basis of gradation assignment supplied from the gradation assignment calculation section 465, and supplies the digital signal to the image generator 392.

In step S509, the image generator 392 performs image processing on the supplied image signal (but dos not perform gradation conversion), and supplies thus obtained image signal to the output controller 95.

In step S510, the output controller 95 controls output of the image-processed image data to the image-using device 83, whereby the processing is ended.

It should be noted here that the processing of outputting the generated image to the image using device 83 is described. When the generated image is output to the display 82 via the display controller 94 and displayed, basically the same processing is executed in step S501 through step S508, the image signal is supplied to the display controller 94, converted into the gradations that can be processed by the display 82, and then output, and the display is controlled.

Moreover, there has been described that the input of the set value of the luminance range of each luminance area is received from the operation input section 92, but when the luminance range of each luminance area is stored in the unshown storage section beforehand, needless to say, the stored set values of the luminance areas are acquired.

When, for example, a luminance area of pixels corresponding to the image information required by the user is changed in several patterns according to time, that is, even when the amount of information varies between the daytime and the evening, such that the luminance area has more information during the daytime but has almost no information during the evening, or the luminance area has more information during the evening and the nighttime but has almost no information during the morning and daytime, it becomes possible to prevent the number of gradation steps from being preferentially assigned to the luminance areas that do not have the required information, by previously setting all luminance areas that might contain the image information required by the user, to compare the histogram analysis with the threshold value, and the number of gradation assignment steps for A/D conversion can be assigned efficiently.

As described above, in the image processing apparatus 381 using the gradation assignment determination section 411, even if the image information required by the user exists in a wide luminance range in the image data captured by the logarithm conversion type imaging device 401, the number of gradation steps for A/D conversion is assigned efficiently, whereby, even if the number of gradation steps for A/D conversion is already limited, the image can be displayed so that the information required by the user (e.g., a black object in a dark area, a bright section existing in a field where dark sections exist) can be recognized, and it is also possible to create image data that is suitable in various types of processing including printing, image recognition, storage and transmission.

Specifically, by performing the above-described image processing, it becomes possible to obtain image data in which the luminance of the displayed or printed out image is compressed so that the user can easily view the image. The image data obtained in this manner is wide dynamic range image data in which the luminance is compressed without significantly reducing the number of gradations to be assigned to a required luminance range, and can be handled easily by the image-using device 83. The luminance compression means reducing the number of gradations (number of gradation steps) of the luminance value of the image data.

When the number of luminance gradation steps is reduced at a certain rate in the entire luminance areas, the concentration difference in the displayed or printed out image is lost, or it becomes difficult to carry out general image processing such as binarization and detection of a predetermined object. However, gradations are assigned to the luminance range than the other luminance ranges, the luminance range being set in predetermined processing, so that the gradation resolution of the set luminance range can be maintained, and no or almost no gradation steps are assigned to the luminance ranges that are not set, so that the number of gradations is reduced in the entire image data. Therefore, the image conversion processing to which the present invention is applied is executed, whereby, for example, a luminance area section with sufficient contrast difference that the user should recognize can be displayed or printed out, or a binarized threshold can be easily determined or a predetermined object can easily be detected based on the image, when various types of image processing are performed.

Also, when, for example, an image is recorded or transmitted in order to execute processing so that at least the detail of the image can be recognized, it is not efficient to use wide dynamic range image data because it is an extremely enormous amount of data containing unnecessary information.

On the other hand, according to the present invention, even when objects to be processed are dispersed in separated luminance areas, luminance compression is carried out so that an image that does not bring discomfort to the human eye is obtained as in the case where a narrow luminance range is captured using a conventional imaging device, thus, for example, a conventional image recognition device can be applied directly using the processing.

Moreover, according to the present invention, luminance compression is performed in a state in which the details of the image can be recognized, thus an enormous amount of data containing unnecessary information can be prevented from being recorded or transmitted.

Also, for example, when the image-capturing conditions for the daytime and the nighttime can be determined using other means such as a sensor, it is desired that different patterns of luminance range be set in accordance with the condition of a target, in the image processing apparatus 381. For example, the luminance compression rate can be set high by assigning more luminance to an area that is relatively bright during the daytime, and averagely assigning more luminance to low-luminance area, medium-luminance area, and high-luminance area during the nighttime.

Moreover, since the image obtained by means of the method of the present invention is compressed so that the gradations can be viewed naturally, a conventional JPEG, MPEG or other general static/dynamic image compression method can be used. As a result, an extremely high compression rate can be obtained.

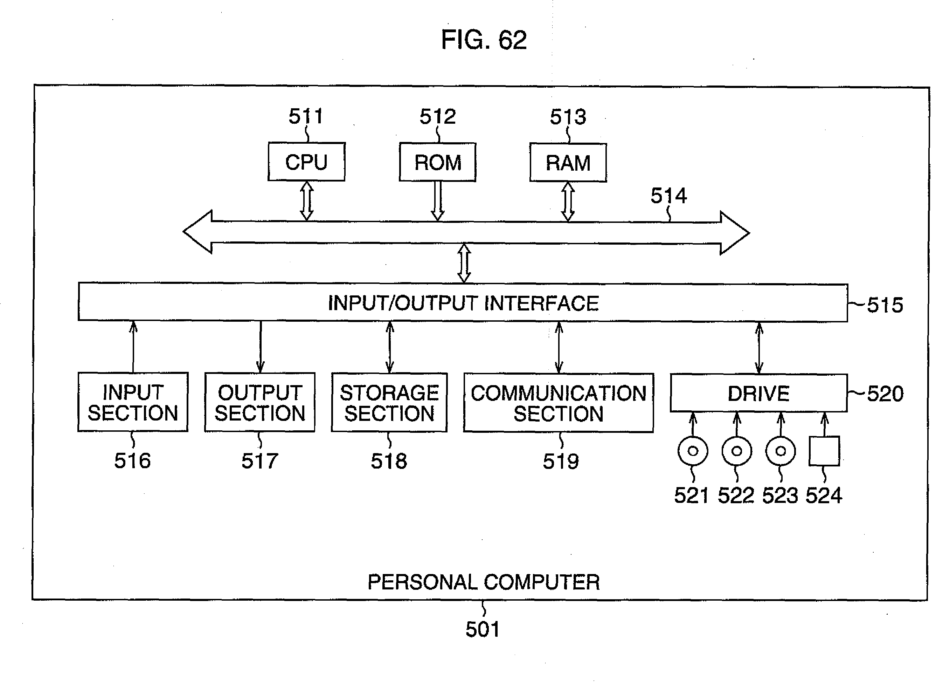

The series of processing described above can also be executed by software. Such software is installed from a recording medium onto, for example, a computer in which a program configuring this software is incorporated in the dedicated hardware, or a general-purpose personal computer that is capable of executing various functions by installing various programs. In this case, for example, all or some parts of the image processing apparatus 81 (e.g., image generator 93 and display controller 94) described with reference to Fig. 2 are configured by a personal computer 301 shown in Fig. 62.

In Fig. 62, a CPU (Central Processing Unit) 311 executes various types of processing in accordance with a program stored in a ROM (Read Only Memory) 312 and a program laded from a storage section 318 into a RAM (Random Access Memory) 313. Data or the like that is required when the CPU 311 executes various types of processing is also stored in the RAM 313 according to need.

The CPU 311, ROM 312 and RAM 313 are connected with one another via a bus 314. An input/output interface 315 is also connected to this bus 314.

An input section 316 configured by a keyboard, a mouse and the like, an output section 317 configured by a display, a speaker and the like, a storage section 318 configured by a hard disk and the like, and a communication section 319 configured by a mode, a terminal adopter and the like are connected to the input/output interface 315. The communication section 319 performs communication processing via a network such as the Internet.

A drive 320 is also connected to the input/output interface 315 according to need, a magnetic disk 331, an optical disk 332, a magneto-optical disk 333, a semiconductor memory 334 or the like is attached accordingly, and a computer program that is read from such component is installed on the storage section 318 according to need.

When the software is caused to execute the series of processing, the program configuring the software is installed from a network or recording medium onto a computer that is incorporated in the dedicated hardware, or a general-purpose personal computer that is capable of executing various functions by installing various programs.

The abovementioned recording medium is, as shown in Fig. 62, configured by not only package media, such as the magnetic disk 331 (including a floppy disk), optical disk 332 (including a CD-ROM (Compact Disk-Read Only Memory) and a DVD (Digital Versatile Disk)), the magneto-optical disk 333 (including MD (Mini-Disk)™), and semiconductor memory 334, which are distributed in order to supply a program to the user, but also the ROM 312 in which a program is stored, and the hard disk included in the storage section 318.

In the present specification, the steps for writing a program to be recorded in the recording medium include not only the processing that is performed chronologically in the order of writing, but also the processing that is not necessarily executed chronologically but is rather executed individually or in parallel.

Moreover, in the present specification, even if the processing to be executed by one device is realized by a plurality of devices, it goes without saying that the present invention can be applied in such a circumstance.

## Claims

1. An image processing apparatus, comprising:
acquisition means for acquiring an image signal constituted by a pixel value that is substantially proportional to a logarithm of an incident light quantity;
luminance range setting means for setting a predetermined luminance range out of all luminance ranges of the image signal acquired by the acquisition means; and
conversion means for converting the image signal acquired by the acquisition means, so that more gradations are assigned to the predetermined luminance range, which is set by the luminance range setting means, than other luminance ranges.

2. The image processing apparatus according to Claim 1, wherein the luminance range setting means sets a plurality of the predetermined luminance ranges.

3. The image processing apparatus according to Claim 1, further comprising: A/D conversion means for performing A/D conversion on image signals within all of the luminance ranges of the image signal acquired by the acquisition means, wherein
the conversion means converts the image signals that are converted into digital signals by the A/D conversion means.

4. The image processing apparatus according to Claim 3, wherein the conversion means converts the image signal acquired by the acquisition means, so that the number of luminance gradations after conversion becomes smaller than the number of luminance gradations of pixels contained in the image signal that is converted into digital signals by the A/D conversion means.

5. The image processing apparatus according to Claim 4, further comprising: output control means for converting the number of luminance gradations of the image signal converted by the conversion means into the number of gradations that can be processed by a predetermined external device, and controlling output of the image signal after conversion to the external device.

6. The image processing apparatus according to Claim 1, wherein the conversion means further comprises:
A/D conversion means for performing A/D conversion on the image signal acquired by the acquisition means; and
determining means for determining the number of gradation steps for A/D conversion performed by the A/D conversion means, wherein
the determining means determines the number of gradation steps for A/D conversion so that more gradations are assigned to the predetermined luminance range, which is set by the luminance range setting means, than other luminance ranges, and
the A/D conversion means performs A/D conversion on the image signal on the basis of the number of gradation steps determined by the determining means.

7. The image processing apparatus according to Claim 1, wherein the image signal is captured by a logarithm conversion type imaging device for outputting a pixel value that is substantially proportional to a logarithm of an incident light quantity, by means of subthreshold characteristics of a semiconductor.

8. An image processing method of an image processing apparatus that processes a captured image signal that is a pixel value substantially proportional to a logarithm of an incident light quantity, the method comprising:
an acquisition step of acquiring the image signal;
a luminance range setting step of setting a predetermined luminance range out of all luminance ranges of the image signal acquired in the process of the acquisition step; and
a conversion step of converting the luminance of pixels contained in the image signal acquired in the process of the acquisition step, so that more gradations are assigned to the predetermined luminance range, which is set in the process of the luminance range setting step, than other luminance ranges.

9. A program for causing a computer to execute processing of a captured image signal that is a pixel value substantially proportional to a logarithm of an incident light quantity, the program comprising:
an acquisition control step of controlling acquisition of the image signal;
a luminance range setting step of setting a predetermined luminance range out of all luminance ranges of the image signal, the acquisition of which is controlled in the process of the acquisition control step; and
a conversion step of converting the luminance of pixels contained in the image signal, the acquisition of which is controlled in the process of the acquisition control step, so that more gradations are assigned to the predetermined luminance range, which is set in the process of the luminance range setting step, than other luminance ranges.

10. A recording medium in which the program according to Claim 9 is recorded.

11. An image processing system, comprising:
an image processing apparatus for processing an image signal captured by an imaging device that outputs a pixel value substantially proportional to a logarithm of an incident light quantity; and
an information processor that executes processing using the image signal processed by the image processing apparatus, wherein
the image processing apparatus has:
acquisition means for acquiring the image signal captured by the imaging device;
luminance range setting means for setting a plurality of luminance ranges out of luminance ranges of the image signal acquired by the acquisition means;
conversion means for converting the image signal acquired by the acquisition means, so that more gradations are assigned to the predetermined luminance ranges, which are set by the luminance range setting means, than other luminance ranges, and so that the number of luminance gradations becomes smaller than the number of luminance gradations of pixels contained in the image signal acquired by the acquisition means; and
output control means for converting the number of luminance gradations of the image signal converted by the conversion means into the number of gradations that can be processed by the information processing device, and controlling output of the image signal after conversion to the information processing device.

12. The image processing system according to Claim 11, further comprising: an image capturing device that captures an image using the imaging unit that outputs the pixel value substantially proportional to a logarithm of an incident light quantity.

13. An image processing system, comprising:
an image processing apparatus that processes a captured image signal that is a pixel value substantially proportional to a logarithm of an incident light quantity; and
an information processor that executes processing using the image signal processed by the image processing apparatus, wherein
the image processing apparatus has:
acquisition means for acquiring the image signal;
luminance range setting means for setting a predetermined luminance range out of all luminance ranges of the image signal acquired by the acquisition means;
A/D conversion means for performing A/D conversion on the image signal acquired by the acquisition means;
determining means for determining the number of gradation steps for A/D conversion performed by the A/D conversion means; and
output control means for controlling output of the image signal converted by the A/D conversion means to the information processor, and wherein
the determining means determines the number of gradation steps for A/D conversion so that more gradations are assigned to the predetermined luminance range, which is set by the luminance range setting means, than other luminance ranges, and
the A/D conversion means performs A/D conversion on the image signal on the basis of the number of gradation steps determined by the determining means.
